# EUROPÄISCHE PATENTSCHRIFT

(11) **EP 3 791 132 B1**
(45) Veröffentlichungstag und Bekanntmachung des Hinweises auf die Patenterteilung: **06.07.2022**
(21) Anmeldenummer: 19723380.2
(22) Anmeldetag: 08.05.2019
(51) Int. Cl.: G01C 7/04, G01B 11/30, G01C 15/00, G01M 11/06

(54) **OBERFLÄCHENVERMESSUNGSVORRICHTUNG UND -VERFAHREN FÜR EINEN SCHEINWERFERPRÜFSTAND**
SURFACE MEASURING DEVICE AND METHOD FOR A HEADLAMP TEST BENCH
DISPOSITIF ET PROCÉDÉ DE MESURE DE SURFACE POUR UN BANC D'ESSAI DE PHARES

(30) Priorität: 08.05.2018 DE 102018111047; 27.07.2018 DE 102018118293
(43) Veröffentlichungstag der Anmeldung: 17.03.2021
(73) Patentinhaber: Dekra Automobil GmbH, 70565 Stuttgart (DE)
(72) Erfinder: GEHRKE, Matthias, 90427 Nürnberg (DE); GRASSL, Björn, 90584 Allersberg (DE)
(74) Vertreter: Spachmann, Holger
(86) Internationale Anmeldenummer: PCT/EP2019/061874
(87) Internationale Veröffentlichungsnummer: WO 2019/215261

(56) Entgegenhaltungen:
- WO-A1-2018/003144
- DE-C1- 19 721 915
- DE-T2- 3 852 759
- FR-A1- 2 741 149
- US-A- 3 706 284

## Beschreibung

Die Erfindung betrifft eine Vermessungsvorrichtung, insbesondere Oberflächenvermessungsvorrichtung, zur Vermessung von Neigungen und/oder Unebenheiten einer, bevorzugt horizontal ausgerichteten, Oberfläche eines Scheinwerferprüfstands.

Die vorgeschlagene Vermessungsvorrichtung kann ebenso zur Vermessung von Neigungen und oder Unebenheiten von allgemein ebenen Oberflächen, beispielsweise im Hochbau, bei Fundamenten oder allgemeinen ebenen Flächen verwendet werden. Derartige ebene Oberflächen können beispielsweise Industrieböden sein, welchen insbesondere den Toleranzen im Hochbau genügen müssen, allgemeine ebene Außenflächen für beispielsweise Parkplätze oder Lagerflächen sowie Fundamente, insbesondere für Windkraftanlagen.

Weiteren betrifft die Erfindung ein Vermessungsverfahren, insbesondere Oberflächenvermessungsverfahren, mit einer derartigen Vermessungsvorrichtung und die Verwendung der Vermessungsvorrichtung und des Vermessungsverfahrens zur Reparatur und Niveauausgleich eines Scheinwerferprüfstandes.

Das vorgeschlagene Vermessungsverfahren kann ebenso für die oben genannten Oberflächen eingesetzt werden. Auch das im Nebenaspekt vorgeschlagene Reparaturverfahren eignet sich für allgemeine ebene Oberflächen, welche Unebenheiten aufweisen bzw. auf Neigungen vermessen sowie anschließend repariert werden sollen.

### STAND DER TECHNIK

Aus dem Stand der Technik sind Verfahren oder Vorrichtungen zu Vermessung von Oberflächenunebenheiten bekannt, die beispielsweise händisch mit Lineal und Nivelliergerät durchgeführt werden. Desweiteren können zur Vermessung auch Lasermessgeräte eingesetzt werden.

In der EP 2 534 443 B1 wird eine Vermessungsvorrichtung offenbart, mit welchem die Neigung oder Unebenheiten einer Oberfläche quantitativ bestimmt werden können und daraus ein Neigungsprofil der Oberfläche erstellt werden kann. Dazu wird eine Projektionsvorrichtung lotrecht auf einer Ebene platziert. Diese beinhaltet zwei Lasereinrichtungen, jeweils bestehend aus einer Laserdiode und einem optischen Element zum Auffächern des Laserstrahls. Die beiden Lasereinrichtungen sind zur automatischen Ausrichtung pendelnd im Gehäuse aufgehängt. Die beiden aufgefächerten Laserstrahle sind derart zueinander geneigt, dass diese im Falle einer ebenen Oberfläche auf der Oberfläche eine Laserlinie ausbilden. Weicht die zu vermessende Oberfläche von der Horizontalen ab, laufen diese Laserlinien auseinander. Mit einer Detektionsvorrichtung und einer Zeilenkamera, die sich möglichst nahe an der zu vermessenden Oberfläche befindet, kann der Abstand der beiden Laserlinien und folglich die Neigung der zu vermessenden Oberfläche bestimmt werden.

Die JP 2012 018 073 A1 zeigt eine Art Roboter mit einem Raupenfahrwerk oder Rollenfahrwerk, der zur Untersuchung einer Oberfläche, wie beispielsweise eines Betonfundaments, dient. An der Frontseite des Roboters sind zwei parallele Laser angeordnet, die orthogonal auf die zu untersuchende Oberfläche ausgerichtet sind. Bilder der Oberfläche werden über eine rotatorisch gelagerte Videokamera aufgenommen, die parallel zu den Lasern ausgerichtet ist. Die Bilder werden auf ein anderorts angeordnetes Display übertragen. Auf diese Weise können Risse im Betonfundament detektiert und deren Länge vermessen werden.

Die DE 10 2004 048 637 A1 offenbart eine fahrzeugbasierte Erfassung des quer zur Fahrtrichtung verlaufenden Höhenprofils einer Fahrbahnoberfläche. Dies erfolgt mittels einer Sensoranordnung, sodass über den zeitlichen Verlauf der Messung und durch sukzessive Messaufnahmen das Höhenprofil der Fahrbahn parallel an mehreren Stellen entlang der Fahrtrichtung vermessen werden kann.

US 4 471 530 A zeigt eine Vermessungsvorrichtung für Betonoberflächen. Die Vorrichtung weist zwei Nivellierlatten mit optischen Prismen auf, mit welchen ein Laserstrahl von einem stationären Laser detektiert und als digitales Signal einer Auswerteeinrichtung zugeführt werden kann. Die Nivellierlatten sind mit einer Servosteuerung verbunden, wobei je nach empfangenem Signal eine Justierung der Nivellierlatten mit den Prismen erfolgt und aus diesen Bewegungsdaten ein Bodenrelief erstellt werden kann. Ein laterales Verkippen und eine Querneigung können nur mittels zweier räumlich beabstandeter Nivellelierlatten erkannt werden, so dass eine entsprechend große seitliche Ausdehnung erforderlich ist, und geringe laterale Unebenheiten nicht erkannt werden können. Weiterhin nachteilig erfordert eine Ausregelung des aktiven Servoantriebs zur Justierung der Nivellierlatten eine aufwändige und träge Regelstrecke, die Genauigkeit und Geschwindigkeit der Messaufnahme begrenzt.

DE 10 2016 119 633 B3 zeigt einen typischen Einsatz eines Scheinwerfereinstellgerät, das bei Scheinwerfereinstellprüfplätzen artgemäß eingesetzt werden kann, welche die geforderte Ebenheit nicht aufweisen. Des Weiteren ist einen Scheinwerfereinstellplatz mit Markierungen und ein Verfahren zum Prüfen der Einstellung von Scheinwerfern gezeigt. Eine Ausmessung des Oberflächenprofils des Scheinwerfereinstellplatzes ist nicht beschrieben.

In der US 5 859 783 A ist ein Oberflächenmesssystem mit einem Neigungswinkelmesser gezeigt, das in einer Art Box angeordnet ist. Dabei werden am Anfang sowie am Ende einer Messstrecke die relativen Höhen gemessen, und dazwischen einige Neigungswinkelmessungen durchgeführt. Durch Erhöhung der Anzahl an Messpunkten kann die Genauigkeit der Oberflächenmessung verbessert werden. Insoweit wird ein Messverfahren zur Bestimmung der Ebenheit einer Bodenflächen mit einem fahrbaren Laser in einem selbstfahrenden Inclinometer umgesetzt, wobei eine stehende Neigungsbestimmungssensorbox auf einem großflächigen six-inch Detector ein Auftreffpunkt des Laserstrahls des Lasers bestimmen und somit die aktuelle Neigung des Inclinometers ausmessen kann. Dabei können an einzelnen Punkte entlang einer Vermessungsstrecke die Ebenheit der Vermessungslinie erfasst werden, eine kontinuierliche Erfassung ist nicht angesprochen. Auch ist das Verfahren durch ein komplexes Kalibrierverfahren nachteilig behaftet und ermöglicht keine Aufzeichnung des Vermessungsablaufs.

DE 197 21 915 C1 offenbart ein Verfahren zur berührungslosen, optisch-elektronischen Messung von durch Riffel und/oder lange Wellen gebildeten Unebenheiten in der Oberfläche eines Objektes von einer Messplattform aus, wobei die Messplattform relativ zu dem Objekt bewegt wird.

WO 2018/003144 A1 und DE 38 52 759 T2 offenbaren Verfahren zur Vermessung einer Verformung einer bandförmigen Platte bzw. zur Vermessung einer glatten Oberfläche mit Hilfe eines Linienlasers, eines Projektionselements und einer Kamera, wobei die Platte bzw. die Oberfläche relativ zu den anderen Elementen bewegt wird bzw. bewegt werden kann.

FR 2 741 149 A1 offenbart ein Verfahren zur Führung einer Tunnelbohrmaschine mit einer auf der fahrbaren Tunnelbohrmaschine angebrachten und somit verfahrbaren Verfahreinheit zur Erfassung eines Laserstrahl, wobei die Verfahreinheit eine Kamera und ein Projektionselement umfasst.

Derartige Oberflächenvermessungen können bei aller Art von Bauwerken oder Fahrbahnen zum Einsatz kommen, bei welchen insbesondere die Ebenheit der Oberfläche eine Rolle spielt. Bevorzugt können auch die Fahrstrecken bzw. Prüfplätze von Fahrzeugprüfständen auf ihre Ebenheit vermessen werden. Beispielsweise kann die Prüfstrecke bzw. der Prüfplatz eines Scheinwerferprüfstands vermessen werden. Bei derartigen Prüfständen spielt die Ebenheit der Prüfstrecke bzw. des Prüfplatzes eine entscheidende Rolle für das Resultat der durchzuführenden Prüfung.

So muss vor der Prüfung nicht nur das Scheinwerfereinstellgerät selbst abgenommen werden, sondern auch die Prüfstrecke bzw. der Prüfplatz. So wird das "System zur Überprüfung der Einstellung der Scheinwerfer" aus dem Scheinwerfereinstellgerät sowie dem Prüfplatz gebildet, welche vor der ersten Inbetriebnahme durch eine sachkundige Firma zu kalibrieren und freizugeben ist, siehe HU-Scheinwerfer-Prüfrichtlinie "Richtlinien für die Überprüfung der Einstellung der Scheinwerfer von Kraftfahrzeugen bei der Hauptuntersuchung nach §29 StVZO (HU-Scheinwerfer-Prüfrichtlinie) vom Februar 2014 vom Bundesministerium für Verkehr und digitale Infrastruktur, präzisiert mit wurde mit den Verkehrsblattverlautbarungen Nr. 11 vom 30.01.2017 und Nr. 75 vom 05.05.2017.

In jüngster Vergangenheit haben sich die Anforderungen an die Ebenheit von Oberflächen deutlich verschärft. So erfordert beispielsweise eine neue Richtlinie für die Beurteilung von Scheinwerfereinstellprüf-Systemen (SEP-Systeme) - "Richtlinie für die Überprüfung der Einstellung der Scheinwerfer von Kraftfahrzeugen bei der Hauptuntersuchung nach §29 Straßenverkehrs-Zulassungs-Ordnung (StVZO) (HU-Scheinwerfer-Prüfrichtlinie)", veröffentlicht Mitte Dezember im Verkehrsblatt 23/2018, ab 2021 eine deutliche Reduzierung des Messabstands bezüglich der einzelnen Messpunkte, um die Ebenheit einer Oberfläche zu bestätigen. Beispielsweise muss daher der Abstand der Messpunkte von ursprünglich 50 cm auf 25 cm verkürzt werden, wobei die Messpunkte in Relation zu setzen sind. Durch eine Verkürzung der Messabstände resultiert ein deutlich höheren Messaufwand und damit Zeitaufwand, wenn jeder Messpunkt einzeln ausgewählt und vermessen werden muss bzw. lediglich eine kleine Gruppe von Messpunkten mit einem Schritt gemeinsam vermessen werden kann. Dies gilt beispielsweise für Industrieböden, welche den Toleranzen im Hochbau gemäß der DIN 18202, Ausgabe April 2013 genügen müssen, sowie für Außenflächen wie Flächen von Parkplätzen oder auch für auszurichtende Fundamente, wie beispielsweise die Oberflächen der Fundamente von Windkraftanlagen. Des Weiteren kann die Vermessung bzw. Überprüfung der Ergebenheit von größeren Fußbodenflächen in beispielsweise Lebensmittelmärkten, im Straßen und Wegebau erfolgen sowie eine kontinuierliche Vermessung von Fahrspuren in leitliniengeführten Schmalgängen von Hochregallager durchgeführt werden.

Es besteht das Problem, dass eine Auswertung auf einer zu untersuchenden Oberfläche beispielsweise nur punktuell und nicht in Bezug zu einer Änderung bezüglich einer Verfahrstrecke ermittelt werden kann. Bei händischen Vermessungen ist weiterhin ein hoher Zeitaufwand erforderlich, der eine große Fehlerquote und hohe Kosten mit sich bringt. Zudem ist bekannt, dass die Helligkeit der Nivellierlaser mit zunehmender Entfernung stark abnimmt. Weiterhin ist bei Scheinwerfereinstellplatz durch die Ein- und Ausfahrten der Prüfstrecken mit schwankenden Lichtverhältnissen zu rechnen.

Desweiteren sind für teilautomatisierte Verfahren mehrere Laserlinien erforderlich, deren Position an lediglich einer Stelle auf der Oberfläche vermessen wird. Ein kontinuierliches Verschieben der Detektionsvorrichtung entlang der Oberfläche ist mit den Vermessungsvorrichtungen aus dem Stand der Technik nicht möglich.

Zudem besteht bei Scheinwerfereinstellplatz das Problem, dass aufwändige Sensormessungen sowie speziell ausgerichtete, beispielsweise orthogonal zur Fahrzeugoberfläche ausgerichtete, Sensoren erforderlich sind, wodurch die Vermessung nur kostenintensiv durchführbar ist.

Aufgabe der Erfindung ist es daher, ein Vermessungsvorrichtung sowie ein Vermessungsverfahren vorzuschlagen, mit welchem einfach und schnell eine Oberfläche auf Neigungen und/oder Unebenheiten vermessen werden kann. Des Weiteren ist es Aufgabe der Erfindung, eine Vermessungsvorrichtung sowie ein Vermessungsverfahren vorzuschlagen, dass ungestört von wechselnden Lichtverhältnissen durchgeführt werden kann.

Diese Aufgabe wird durch eine Vermessungsvorrichtung sowie ein Vermessungsverfahren nach den unabhängigen Ansprüchen gelöst. Vorteilhafte Weiterentwicklungen der Erfindung sind Gegenstand der Unteransprüche.

### OFFENBARUNG DER ERFINDUNG

Gegenstand der Erfindung ist eine Vermessungsvorrichtung, insbesondere Oberflächenvermessungsvorrichtung zur Vermessung von Neigungen und/oder Unebenheiten einer, bevorzugt horizontal ausgerichteten, Oberfläche einer Fahrspur / Prüfstrecke eines Scheinwerferprüfstands. Diese umfasst zumindest einen Linienlaser, der sich bevorzugt selbst horizontal ausgerichtet sowie zumindest ein Projektionselement, auf welchem ein Laserstrahl des Linienlasers zumindest teilweise als Laserlinie abgebildet ist, sowie zumindest eine Kamera, die eingerichtet ist, eine relative Lage der Laserlinie auf dem Projektionselement aufzunehmen.

Es wird vorgeschlagen, dass das Projektionselement und die Kamera in einer Verfahreinheit umfasst sind, die entlang einer zu vermessenden Strecke verfahrbar und/oder verschiebbar ist, insbesondere entlang der Fahrspur des Scheinwerferprüfstands.

Die vorgeschlagene Vermessungsvorrichtung kann ebenso zur Vermessung von Neigungen und oder Unebenheiten von allgemein ebenen Oberflächen, beispielsweise im Hochbau, bei Fundamenten oder allgemeinen ebenen Flächen verwendet werden. Derartige ebene Oberflächen können beispielsweise Industrieböden sein, welchen insbesondere den Toleranzen im Hochbau genügen müssen, allgemeine ebene Außenflächen für beispielsweise Parkplätze oder Lagerflächen sowie Fundamente, insbesondere für Windkraftanlagen. Die vorgeschlagene Vermessungsvorrichtung eignet sich demnach auch insbesondere für flächige Vermessungen allgemeiner sowie im Wesentlichen ebenen Oberflächen.

Eine derartige Vermessungsvorrichtung kann folglich beispielsweise auch zur Vermessung von im Wesentlichen horizontal ausgerichteten Oberflächen in Bauwerken oder zur Vermessung von Fahrbahnoberflächen eingesetzt werden. Bevorzugt wird eine derartige Vermessungsvorrichtung zur Überprüfung einer Oberfläche auf Unebenheiten und/oder Neigungen eingesetzt, was speziell bei zu kalibrierenden Prüfständen, wie dem hier betrachteten Scheinwerferprüfständen, eine erhebliche Rolle spielt, sowie bei Industrieböden oder Fundamenten, wie oben beschrieben, gefordert wird. Im Falle einer Vermessung eines Scheinwerferprüfstandes kann beispielsweise die Aufstellfläche und Querverfahrstrecke eines Scheinwerfereinstellgeräts selbst sowie die Aufstandsfläche bzw. Fahrspur / Prüfstrecke des zu überprüfenden Kfz vermessen werden. In der Regel sind zwei oder mehrere parallele Fahrspuren in einem Scheinwerferprüfstand vorgesehen, deren Längs- und ggf. auch Querneigung jeweils einzeln, aber auch deren Querlage zueinander von der Vermessungsvorrichtung ausgemessen werden kann. Dabei können die Ebenheit sowie die Neigung der Oberfläche mit einer Genauigkeit bis zu einem dreistelligem Mikrometerbereich bestimmt werden. Versuche haben gezeigt, dass eine horizontale Vermessung bis zu einer Genauigkeit von mindestens 0,2 mm/m erreicht werden kann, wie dies von den oben genannten Richtlinien vorausgesetzt wird. Insoweit können laterale Verkippungen als auch transversale Unebenheiten zuverlässig und auch bei hoher Verfahrgeschwindigkeit mit extrem hoher Präzision erkannt werden. Grundsätzlich ist die Erfassungsgeschwindigkeit der Kamera, deren Frame-Per-Second-Auflösung (fps) und die kinematischen Eigenschaften des Verfahreinheit ausschlaggebend für eine mögliche Verfahrgeschwindigkeit und kann für eine hohe Messfahrtgeschwindigkeit beliebig angepasst werden. Die zu vermessende Oberfläche sollte bevorzugt im Wesentlichen horizontal ausgerichtet sein, wobei auch Oberflächen bestehend aus einzelnen Elementen und Fugen, wie beispielsweise bei einem Fliesenbelag oder einem Belag aus Pflastersteinen, vermessen werden können. Ebenso ist die Vermessung von kurvigen Strecken sowie geneigten Kurven möglich. Die Vermessung erfolgt dabei in Fahrtrichtung einer Verfahreinheit, auf der bevorzugt zumindest eine Kamera sowie ein Projektionselement angeordnet sein können. Ein Umstellen des Linienlasers während der Messung ist ebenfalls möglich. Dazu wird die auf dem Projektionselement detektierte vertikale Position des Linienlasers vor und nach der Umstellung des Lasers neu eingestellt und normiert. Somit wird eine Intensitätsabnahme der Laserlinie auf dem Projektionselement bei zunehmendem Abstand zwischen Laser und Messgerät vermieden. Des Weiteren kann so auch der vertikale Messbereich der Messeinrichtung über die physikalische Abmessung des Projektionselements vergrößert werden. Dies ist vor allem bei der Vermessung von Oberflächen mit erhöhter Neigung vorteilhaft.

Vorteilhafterweise ist das Projektionselement zwischen dem zumindest einen Linienlaser und der zumindest einen Kamera angeordnet, so dass die Kamera eine Transmission der Laserlinie durch die Projektionsfläche erfasst, wobei bevorzugt das Projektionselement eine semintransparente Fläche, insbesondere eine semitransparente Scheibe oder ein semitransparentes Blatt ist, das vorzugsweise rechtwinklig zu einer Laserlinienebene ausgerichtet ist. Somit kann eine Kamera, räumlich ausgehend vom Linienlaser ausgehend hinter der Projektionsfläche angeordnet sein, so dass bei einer Verfahrbewegung der Verfahreinheit die Kamera in Richtung des Linienlasers ein Abbild der Laserlinie auf der Projektionsfläche im Wesentlichen verzerrungsfrei aufnehmen kann, da die Kamera in gerader Sichtlinie zum Linienlaser ausgerichtet ist.

In diesem Fall kann bevorzugt das Projektionselement aus einem semitransparenten Material bestehen. Da das Projektionselement zwischen dem Linienlaser und der Kamera angeordnet ist kann sichergestellt werden, dass die Kamera die vom Linienlaser auf das Projektionselement projizierte Laserlinie als Transmissionslinie aufnehmen kann. Weiterhin kann insbesondere das Projektionselement aus einer semitransparenten Scheibe oder einem semitransparenten Blatt bestehen. Das Projektionselement hat dabei die Funktion, eine Laserlinie abzubilden und für die Kamera transmittierend sichtbar zu machen, so dass diese grundsätzlich für das Laserlicht durchscheinbar, aber auch teilreflektierend wirkt, so dass der Laserstrahl eine Linie auf das Projektionselement abbildet.

Alternativ zur vorhergehenden Ausführungsform, oder auch vorteilhaft kombiniert werden kann, kann der zumindest eine Linienlaser und die zumindest eine Kamera auf einer Seite des Projektionselements angeordnet sein, so dass die Kamera eine Reflexion der Laserlinie auf der Projektionsfläche erfassen kann. Bevorzugt ist hierzu das Projektionselement zumindest als teilreflektierende Fläche ausgebildet, und bevorzugt opak ausgebildet. Insoweit kann ausgehend vom Linienlaser die Kamera auf derselben Seite der Projektionsfläche angeordnet sein, und die Projektionsfläche dient als Reflexionsschirm, auf der sich die Laserlinie abbildet, die ähnlich wie in einem Kino von der Kamera aufgenommen werden kann. Dazu ist in der Regel der Aufnahmewinkel der Kamera auf die Projektionsfläche gegenüber dem Auftreffwinkel der Laserlinie in der Regel abgewinkelt. Hierdurch kann eine kompakte Bauweise der Verfahreinheit erreicht werden, auch kann beispielsweise eine Projektion der Laserlinie auf einer, auf einem Abschnitt der Bodenfläche aufliegendes Projektionselement, oder ggf. auf der Bodenfläche selbst, erfasst werden.

Bevorzugt wird die Vorrichtung händisch von einem Benutzer über die zu vermessende Oberfläche gezogen bzw. geschoben.

Es wäre ebenso denkbar, die Vorrichtung über eine Fernsteuerung anzusteuern, und zum Verfahren motorisch anzutreiben oder durch einen Seilzug oder eine Schiebegestänge entlang einer Fahrspur zu ziehen oder zu schieben.

Das Projektionselement kann bevorzugt vertikal ausgerichtet sein. Es ist ebenso denkbar, das Projektionselement geneigt bezüglich einer vertikalen anzuordnen. Bevorzugt kann das Projektionselement eben ausgebildet sein. Es ist weiterhin denkbar, das Projektionselement zumindest abschnittsweise abgewinkelt, gekrümmt bzw. geneigt bezüglich der Ausrichtung des Projektionselements auszuführen.

Das Projektionselement kann ebenso als Projektionsfläche bezeichnet werden. Im Folgenden wird für dieses Merkmal die Bezeichnung Projektionsfläche sowie die Bezeichnung Projektionselement verwendet.

Vorteilhafterweise ist das Projektionselement in einem konstanten sowie unveränderlichen Abstand und Winkel bezüglich der Kamera angeordnet. Dadurch kann sichergestellt werden, dass das Messergebnis nicht durch eine Relativbewegung des Projektionselements bezüglich der Kamera verfälscht wird.

In einer üblichen Ausführungsform einer sogenannten 2D-Vermessung der Vermessungsvorrichtung kann der Linienlaser außerhalb der Verfahreinheit angeordnet sein und eine im Wesentlichen horizontal zur Schwerkraftsnormalen der Oberfläche ausgerichtete Laserebene aufspannen, wobei die Verfahreinheit relativ zum Linienlaser bewegbar ist. Dabei ist der Linienlaser stationär aufgestellt und erzeugt ein horizontal zur Schwerkraftnormalen ausgerichtete Laserebene. Die Verfahreinheit umfasst dabei die Projektionsfläche und vorzugsweise die Kamera, und die Laserlinie wird auf der Projektionsfläche der Verfahreinheit für die Kamera entweder transmittierend oder reflektierend aufnehmbar abgebildet. Dabei kann die Kamera auf einer gegenüberliegenden Seite des Projektionselementes oder auf derselben Seite des Projektionselementes wie der Linienlaser angeordnet sein. In dieser Ausgestaltungsform ermöglicht die Vermessungsvorrichtung die Bestimmung der Abweichung der Oberfläche zur Horizontalen, sowie die Bestimmung der Querneigung, jeweils in Abhängigkeit des Abstands zwischen Linienlaser und Verfahreinheit.

In einer alternativen Ausgestaltungsform einer sogenannten 3D-Vermessung können zusätzliche Informationen über die detaillierte Oberflächenstruktur gewonnen werden. Zusammen mit der der Information über die Neigung zur Horizontalebene kann sogar ein komplettes 3D-Abbild der Oberfläche erstellt werden. Dazu kann vorteilhafterweise der Linienlaser innerhalb der Verfahreinheit angeordnet sein, und das Projektionselement kann aus einem biegeschlaffen, flexiblen Material bestehen, und vorzugsweise in einem horizontal über der Oberfläche ausgerichteten Rahmen aufgehängt sein. Das Projektionselement liegt dabei mit einem Kontaktabschnitt auf einem Abschnitt der zu vermessenden Oberfläche auf, wobei der Linienlaser und die Kamera auf den Kontaktabschnitt ausgerichtet sind, und vorzugsweise auf derselben Seite des Projektionselements angeordnet sind. Vorzugsweise ist in diesem Fall der Linienlaser und die Kamera ebenfalls in der Verfahreinheit auf derselben Seite des Projektionselementes angeordnet. Somit kann in dieser Ausführungsform das Projektionselement aus einem biegeschlaffen, flexiblen Material bestehen, das in einem Rahmen eingehängt wird und in einem Kontaktabschnitt auf dem zu vermessenden Bodenoberfläche aufliegt. Das Projektionselement kann dabei als eine Art Laken ausgebildet sein und beispielsweise aus einem mechanisch robusten, biegeschlaffen Folien- oder Flächenstoff wie Kunststoff, Gummi oder einem reisfesten, hochstabilen Gewebestoff bestehen. Vorteilhafterweise hat das Projektionselement ein für das Laserlicht optimierten Reflexionsgrad, um ein kontrastreiche. trennscharfe Abbildung des Laserlichts auf dem Projektionselement zu ermöglichen, insbesondere ein helle, idealerweise weiße Oberflächenfarbe. Das Projektionselement kann in dem Rahmen derart eingehängt sein, dass dieses mit einem Kontaktabschnitt mit der zu vermessenden Oberfläche in Kontakt steht. Wird nun der Rahmen über einen Boden verschoben, so folgt das Laken der Bodenkontur, wobei scharfe Kanten des Untergrunds oder auch tiefe Löcher glättend abgebildet werden. Der Laser ist bevorzugt auf der einen Seite des Rahmens angeordnet und auf den Kontaktabschnitt gerichtet, sodass der Linienlaser bevorzugt quer zur Fahrtrichtung eine Laserlinie mit einem definierten Winkel auf den Kontaktabschnitt projiziert. Eine dem Laser bevorzugt gegenüberliegende Kamera kann ebenso auf diesen Kontaktabschnitt ausgerichtet sein und eine Reflexion der Laserlinie auf dem Projektionselement filmen. Über einen Wegsensor wie beispielsweise eine Computermaus, ein Laser, einen Seilzug oder auch ein Messrad kann die aktuelle Position der Vermessungsvorrichtung mit dem Rahmen und dem flexiblen Projektionselement bestimmt werden. In einer bevorzugten Ausführungsform kann der Bereich innerhalb des Rahmens, in welchen sich das Promotionselement befindet, verdunkelt werden. Dies kann beispielsweise mit einem Volant erfolgen, sodass eine Art Dunkelkammer entsteht. Mit einer derartigen Ausführungsform ist es beispielsweise möglich, ein Bodenrelief von im Wesentlichen ebenen Oberflächen zu erstellen. Dazu wird die Vermessungsvorrichtung über die zu vermessende Oberfläche gezogen, wobei zu jeder Position die Kamera die Laserlinie filmt, welche auf das Projektionselement wie beispielsweise ein Laken projiziert wird. Diese Laserlinie bildet die Bodenkontur der sich darunter befindenden Oberfläche derart ab, dass scharfe Kanten sowie tiefe Löcher geglättet werden. Aus den bekannten geometrischen Verhältnissen aus dieser geglätteten Laserlinie sowie der Position auf dem zu vermessenden Untergrund kann mittels Bildverarbeitung ein Relief eines zu vermessenden Bodens erstellt bzw. berechnet werden. Diese Ausführungsform eignet sich insbesondere für eine flächige Vermessung ausgedehnter Oberflächen, wobei die Größe der Kontaktfläche skalierbar ist. In der Verfahreinheit sind sowohl Kamera, Projektionsfläche und Linienlaser umfasst, so dass kein externes Messequipment zu berücksichtigen ist und eine freie Verfahrbarkeit der Verfahreinheit über alle Bereiche einer großen Fläche ermöglicht wird. Je nach Bodenbeschaffenheit, insbesondere Reflexionseignung der Oberfläche kann optional auf das Projektionselement verzichtet werden, so dass die Oberfläche selbst als Projektionselement dient und die Unebenheit entlang der Projektionslinie des Linienlasers erfasst werden kann.

Die vorgenannten beiden Ausführungsformen einer 2D und 3D-Vermessung können vorteilhaft kombiniert werden, um die Ergebnisse der beiden Oberflächenvermessungssignale zur Genauigkeitserhöhung zu kombinieren. Insbesondere können hierzu zwei oder mehrere Linienlaser, zwei oder mehrere Projektionselemente und ein, zwei oder mehrere Kameras kombiniert werden, die jeweils die Ausrichtung von Laserlinien auf Projektionsflächen zur 2D und 3D-Erfassung einer Oberflächenneigung kombinieren. Denkbar ist, auf einem Display oder einem Bildschirm die von einer ersten Kamera erfasste relative Lage einer Laserlinie auf einem Projektionselement darzustellen, wobei das Display oder der Bildschirm von einer zweiten Kamera zusammen mit einer relativen Lage einer Laserlinie eines zweiten Linienlasers auf einem zweiten Projektionselement aufnehmbar ist. Somit erfasst die zweite Kamera die relative Lage von Laserlinien auf zwei verschiedenen Projektionsflächen, um eine erhöhte Genauigkeit der Oberflächenvermessung zu erreichen. Vorteilhaft kann diese Art der kombinierten Oberflächenvermessung auf weitere Linienlaser, Kameras und Projektionsflächen erweitert werden.

Als Linienlaser wird bevorzugt ein Linienlaser bzw. Nivellierlaser eingesetzt, der eine horizontale Laserlinie exakt horizontal ausrichtet, beispielsweise ein Bosch PCL 20. Insbesondere spielt es dabei keine Rolle, ob das Projektionselement horizontal bzw. vertikal exakt ausgerichtet ist. Es sollte lediglich sichergestellt sein, dass die Laserlinie zu jedem Zeitpunkt einer Prüfung einer zu vermessenden Oberfläche zumindest abschnittsweise auf das Projektionselement sichtbar ist.

Anstatt eines kalibrierten Nivellierlasers, dessen Laserebene exakt parallel zu einer horizontalen Oberfläche bezüglich auf die Schwerkraftnormalen ausgerichtet ist, insbesondere eines nach den Vorschriften der DAkkS (Deutsche Akkreditierungsstelle GmbH) kalibrierten Nivellierlasers, kann vor der Vermessung eine Kalibrierung eines beliebigen, auch kostengünstigen Lasers erfolgen. Aufgrund der im Kamerabild bzw. Videobild eingeblendeten Referenzanzeige ist keine aufwändige Kalibrierung erforderlich. Einfache sowie kostengünstige Nivellierlaser aus Baumärkten oder dergleichen können daher ebenso verwendet werden, wobei diese idealerweise soweit kalibriert werden, dass eine der Genauigkeitsanforderung entsprechende horizontale Ausrichtung der Laserebene zur Schwerkraftsnormalen erreicht werden kann. Im Folgenden werden zwei mögliche Varianten bezüglich eines Verfahrens bzw. einer Vorrichtung vorgestellt, mit welchen ein gewöhnlicher Laser horizontal kalibriert werden kann.

Der Laser kann hierfür bevorzugt auf eine Drehscheibe bzw. einen Drehteller gestellt werden, sodass die Laserdiode des Lasers etwas oberhalb des Drehpunktes des Drehtellers und auf der Drehachse positioniert ist. Ein zu untersuchender Drehwinkelbereich kann mit einer geeigneten Vorrichtung ausgelesen werden. Eine geeignete Vorrichtung kann beispielsweise aus einer Computermaus bestehen, die dazu dient, den Drehwinkel der Drehscheibe oder des Drehtellers auszuwerten. Diese kann beispielsweise über eine Funkverbindung mit einem Einplatinencomputer der Vermessungsvorrichtung, beispielsweise einem Raspberry Pi verbunden sein. Es kann sich hierbei vorteilhafterweise um dieselbe Computermaus handelt, die auch als Wegsensor eingesetzt werden kann, oder auch um eine zweite Computermaus.

In einer ersten Variante kann die Vermessungsvorrichtung mit dem Projektionselement in einem definierten Abstand vor dem Laser platziert werden, sodass die Laserlinie bzw. der Laserstrahl auf der Projektionsfläche bzw. dem Projektionselement sichtbar wird. Bevorzugt kann das Positionselement in einem Abstand zwischen 1,5 m und 2,5 m, insbesondere in einem Abstand von 2,0 m, platziert werden. Da sich die Laserdiode auf dem Drehpunkt des Drehtellers befindet, ändert sich die y-Komponente (vertikale Position) der vom rotierenden Nivellierlaser aufgespannten Fläche in diesem Punkt während einer Drehung des Drehtellers per Definition nicht. Durch diesen Punkt sowie eine diesen Punkt schneidende Linie (im vorliegenden Fall die Laserlinie bzw. Laserlinienebene) kann eine Ebene eindeutig definiert werden. Bevorzugt kann über eine Neigung und eine Position der Laserlinie, die auf dem Projektionselement auftrifft und von einer Kamera der Vermessungsvorrichtung erfasst werden kann, die vom Laser aufgespannte Laserlinienebene für jeden beliebigen Drehwinkel eindeutig bestimmt werden. Bevorzugt kann diese Information dazu verwendet werden, den Nivellierlaser zu kalibrieren oder ihn zu justieren.

Soll beispielsweise der Nivellierlaser für einen Scheinwerfereinstellplatz bzw. Scheinwerferprüfstand kalibriert werden, kann beispielsweise bezüglich eines Mindestabstands von 2 m zwischen dem Nivellierlaser und dem Projektionselement sowie eine sich aus der Richtlinie bzw. Norm ergebenden geometrischen Parameter, wie die maximal zu vermessende Spurweite von 2,2 m, sowie die maximale Länge des Scheinwerfereinstellplatzes von 8 m, ein Winkelbereich von beispielsweise 60° kalibriert werden. Dabei sollte bevorzugt in diesem Winkelbereich von 60° sichergestellt werden, dass die Relativposition der Laserlinienebene auf dem Projektionselement während einer Rotation der Drehscheibe im Bereich von 60° nahezu konstant ist. Bevorzugt ist daher zur Kalibrierung lediglich noch ein Maßband zur Bestimmung des Abstandes zwischen dem Projektionselement sowie dem drehbar gelagerten Nivellierlaser erforderlich. Im Falle einer Vermessung eines Scheinwerfereinstellplatzes kann die maximal erlaubte Positionsabweichung direkt aus der Norm abgelesen werden. Durch die Kalibrierung kann ein auf eine Neigung der Laserebene resultierender Messfehler direkt ermittelt werden und muss nicht mittels Fehlerfortpflanzung aus weiteren Messgrößen extrahiert werden.

Darauf aufbauend kann weiterhin bevorzugt im Falle einer Justierung des Nivellierlasers unmittelbar vor der eigentlichen Vermessung einer Oberfläche bzw. einer zu vermessenden Strecke eine Drehung des Nivellierlasers auf dem Drehteller durchgeführt werden. Dieser Justierungsvorgang kann bereits mit der Kamera der Vermessungsvorrichtung gefilmt werden, sodass diese Justierung ebenso auf derselben Kameradatei bzw. Videodatei vor Beginn der Messung aufgezeichnet wird. Da der Abstand zwischen dem Nivellierlaser sowie dem Projektionselement bei einem bekannten Anfangsabstand aufgrund der integrierten Streckenmessung zu jedem Zeitpunkt der Vermessung bekannt ist, kann somit eine eventuell vorhandene Fehlstellung bzw. Fehleinstellung des Nivellierlasers nachträglich aus den Messdaten kompensiert werden. Bevorzugt ist daher ebenso nur die Verwendung eines zusätzlichen Maßbandes zur Justierung ausreichend, und sich einstellende Messfehler durch eine schiefe Laserlinienebene kann im Vorfeld der Messung durch Justage kompensiert oder nachträglich aus den Messdaten herausgerechnet werden.

In einer zweiten Variante kann der Nivellierlaser absolut gegenüber der Schwerkraftsnormalen kalibriert werden, in dem der Neigungswinkel in Abhängigkeit vom Rotationswinkel kontinuierlich erfasst werden. Auch in dieser Variante kann der zu prüfende Laser zentral auf einen motorisch betriebenen Drehteller gestellt und automatisiert mit geringer Winkelgeschwindigkeit gedreht werden. Über einen stationären Detektor kann während der Drehung die zum jeweiligen Drehwinkel gehörende Höhe des Laserstrahls erfasst werden. Als Detektor kann eine Kamera sowie ein Projektionsschirm vergleichbar zu einer Ausführungsform der erfindungsgemäßen Vorrichtung eingesetzt werden. Diese eignen sich unter anderem aufgrund des umgesetzten Dunkelkammerprinzips besonders gut. Eine Kamera kann dabei von einer Rückseite einen Projektionsschirm filmen, der sich in einer Dunkelkammer befindet und auf welchen eine Laserlinie abgebildet ist.

Für diese zweite Variante ist des Weiteren ein Reflektor notwendig, wobei der Laser auf einer Linie zwischen dem Detektor und dem Reflektor angeordnet ist. Dabei sollte der Abstand zwischen dem Laser und Detektor relativ kurz gewählt werden, bevorzugt 0,5 m bis 1,5 m, insbesondere 1 m. Im Gegensatz dazu sollte der Abstand zwischen dem Laser und dem Reflektor deutlich größer gewählt werden, und beispielsweise bei 7 m bis 10 m, insbesondere 8 m liegen.

Als Reflektor kann mindestens ein lotrecht aufgehängter, schwingungsgedämpfter Spiegel eingesetzt werden. Bei Rotation des Lasers durch Anordnung auf einem Drehteller trifft der Laserstrahl abwechselnd direkt auf den Detektor sowie auf den Reflektor auf. Für jeden Rotationswinkel kann dadurch ein Strahlneigungswinkeln direkt bei Auftreffen auf den Detektor, d. h. bei einem Direktstrahl, sowie auch im Falle einer Reflexion am Reflektor und anschließendem Auftreffen auf dem Detektor, bestimmt werden. Aus den unterschiedlichen Entfernungen vom Laser zum Detektor bzw. vom Laser zum Spiegel sowie zum Detektor, sowie den ermittelten Höheninformationen am Detektor, kann direkt ein Neigungswinkel des untersuchten Lasers ermittelt werden. Dies ist unter anderem dadurch möglich, dass die genauen Entfernungen zwischen Reflektor, Laser und Detektor bekannt sind.

Zur Ausbildung eines Reflektors können beispielsweise zwei baugleiche Spiegel rückseitig aneinander befestigt werden. Diese können beispielsweise an einer dünnen Drahtschlaufe angebracht werden, die beispielsweise an einer Decke oberhalb montiert werden kann. Ein möglicher Fehler zu einer Lotrechten kann durch eine derartige Aufhängung effektiv minimiert werden. In einer Ausführungsform können die beiden lotrecht verlaufenden Drähte der Drahtschlaufe über einen Umlenkmechanismus an der Decke miteinander verbunden werden, um die beiden Spiegel gegen Verdrehung um die Lotrechte zu stabilisieren. In einer weiteren Ausführung kann an der Unterseite der Drahtschlaufe ein Gewicht, insbesondere ein sehr schweres Gewicht, angeordnet sein. Dadurch kann ein Winkelfehler zu einer Lotrechten weiter effektiv minimiert werden. In einer weiteren bevorzugten Ausführungsform kann das Gewicht gedämpft werden, beispielsweise durch ein Federsystem oder eine Flüssigkeit. In einer Ausführungsform kann dies dadurch umgesetzt werden, dass sich das Gewicht in einem Behältnis mit Flüssigkeit, beispielsweise Wasser, befindet. Dadurch kann insbesondere eine Zeitkonstante zur Stabilisierung des Spiegelsystems, d. h. der Konstruktion aus den beiden Spiegeln, minimiert werden.

Aufgrund der unterschiedlich großen gewählten Abstände zwischen Laser und Reflektor bzw. zwischen Laser und Detektor kann im Falle einer Reflexion des Laserstrahls der vom Laserstrahl zurückgelegte Abstand zwischen Laser und Detektor um ein Vielfaches länger sein als bei der Messung eines Direktstrahls, d. h. bei direkter Ausrichtung des Lasers auf den Detektor. Wird als Abstand zwischen Laser und Detektor eine Länge von 1 m, sowie als Abstand zwischen Laser und Reflektor eine Länge von 8 m gewählt, so ist der von einem reflektierten Laserstrahl zurückgelegte Abstand 16 mal länger als bei direkter Einstrahlung vom Laser auf den Detektor. In einer weiteren bevorzugten Ausführung kann der Laser mit minimalem seitlichen Versatz zwischen dem Spiegel und den Detektor angeordnet werden, wodurch während der Reflexion ein ungehinderter Strahlengang zwischen Spiegel und Detektor gewährleistet werden kann.

Bevorzugt erfolgt der Rotationsantrieb der Drehscheibe mittels eines Motors mit einstellbarer Geschwindigkeit, sodass eine definierte Windgeschwindigkeit erzielt werden kann. Bevorzugt wird die Winkelgeschwindigkeit während der Messung derart klein gewählt, dass die im Laser verbaute Mechanik, beispielsweise Ausrichtungsmechanik, optimal arbeiten kann.

Vergleichbar zur ersten Variante kann der aktuelle Drehwinkel während der Messung gemessen werden. Wie bereits beschrieben kann auch hier eine Computermaus eingesetzt werden. Vergleichbar zu der erfindungsgemäßen Vorrichtung kann dieser Drehwinkel in einem Display unterhalb des Projektionsschirms zeitgleich zur Ermittlung der Höhe des Lasers eingeblendet werden. Dies wird im Folgenden bezüglich der erfindungsgemäßen Vorrichtung bzw. des erfindungsgemäßen Verfahrens weiter beschrieben.

Die Vorteile der eben beschriebenen Variante zu Kalibrierung bzw. Nivellierung von Lasern liegen zum Einen in der deutlich genaueren Messung eines Neigungswinkels im Vergleich zum manuellen Ablesen bei einer Kalibrierung bzw. Nivellierung mit einer Schlauchwaage, wie bisher aus dem Stand der Technik bekannt. Vorteilhaft ist weiterhin, dass das Verfahren vollautomatisch realisiert werden kann. Da die Höhe des Laserstrahls automatisch ermittelt wird, ist ein Einfluss durch einen den Versuch durchführenden Experimentator ausgeschlossen. Vorteilhaft ist weiterhin, dass der Neigungswinkel nicht nur als Skala, sondern als Funktion aller möglichen Rotationswinkel erfasst werden kann. Insbesondere ist dadurch je nach späterem Anwendungsfall sogar dann eine Betrieb des Lasers möglich, wenn dieser nicht in direktem "0°-Frontalbetrieb" genutzt wird.

Es wird weiterhin ein Verfahren vorgeschlagen, um den Neigungswinkelfehler eines verwendeten Linienlasers direkt zu ermitteln. Ein so ermittelter Neigungswinkelfehler kann verwendet werden, um das Messergebnis zu korrigieren. Ein derartiges Verfahren ermöglicht es insbesondere, DAkkS-konforme Messungen mit unkalibrierten Linienlasern, beispielsweise gewöhnlichen Baumarktlasern, durchzuführen. Die Präzision solcher Messungen kann im Vergleich zu bekannten Verfahren deutlich verbessert werden, obwohl ein derartiger nivellierter Laser starke Abweichungen zu Horizontalen aufweist.

In einer bevorzugten Ausführungsform können zumindest zwei auf einer Linie liegende Messpunkte verwendet werden. Insbesondere können mehr als zwei unterschiedliche, sowie auf einer Linie liegende Messpunkte verwendet werden. Ein Linienlaser wird bevorzugt in einer gedachten Verlängerung zu der Linie, welche die Messpunkte ausbilden, aufgestellt. An diesen Messpunkten kann in einer Hinwärts-Messung die lotrechte Höhe, d. h. der Abstand zwischen der Laserebene und dem Boden, gemessen werden. Dabei befindet sich der Laser beispielweise an einer Position vor dem ersten Messpunkt. Anschließend kann der Laser derart umgestellt werden, dass der Abstand zu dem auf der Linie ursprünglich am weitesten entfernt Messpunkt nun am nächsten zum Laser liegt. Der Laser befindet sich nun an einer Position für eine Rückwärts-Messung. Bevorzugt kann der Laser dabei um 180° zur lotrechten rotiert werden. Bei Durchführung der Rückwärts-Messung erfolgt eine Messung an denselben Referenzpunkten, jedoch von der anderen Seite. Dabei kann jede Art eines Messprinzips für eine Höhenmessung verwendet werden. Beispielsweise ist auch eine Messung mit Lineal denkbar. Anschließend kann für alle Referenzpunkte als verwendbarer Messwert der Mittelwert aus dem Messergebnis aus der Hinwärts-Messung sowie aus dem Messergebnis aus der Rückwärts-Messung definiert werden. Dieser Wert ist um den Winkelfehler des Linienlasers bereinigt.

Bevorzugt kann für die Messung ein Linienlaser eingesetzt werden, der auch zur Vermessung eine Scheinwerfereinstellplatzes oder allgemeiner Oberflächen gemäß der erfindungsgemäßen Vorrichtung bzw. des erfindungsgemäßen Verfahrens eingesetzt werden kann. Bevorzugt kann je eine Hinwärts-Messung sowie eine Rückwärts-Messung mittels eines geeigneten Algorithmus synchronisiert werden, beispielsweise durch Kreuzkorrelation mittels eines abgeleiteten Korrelationskerns. Dadurch können beispielsweise die Referenzpunkte exakter aufeinander abgeglichen werden.

Insbesondere kann bei dem erfindungsgemäßen Verfahren bzw. der erfindungsgemäßen Vorrichtung zur Vermessung eines Scheinwerfereinstellplatzes bzw. allgemeiner Oberflächen das eben beschriebene Verfahren zusätzlich dafür genutzt werden, um den Einbauwinkel bzw. Neigungswinkelfehler des integrierten Linienlasers mit extrem hoher Präzision zu bestimmen. Beispielsweise können je nach Linienlaser Genauigkeiten von +/- 0,008° erreicht werden. Ein derartig ermittelter Wert kann ebenfalls zur Kompensation für zukünftige Messungen verwendet werden. Bevorzugt führt dies zu einem noch geringeren Fehler bei der Bestimmung der sogenannten Torsion, d. h. einen horizontalen Winkel senkrecht zu einer zu vermessenden Oberfläche bzw. zu einer Fahrspur, als Funktion des Abstands vom Beginn der zu vermessenden Oberfläche bzw. Fahrspur.

Aufgrund beispielsweise spezieller Richtlinien für die Vermessung von Scheinwerfereinstellplätzen sowie für bautechnische Vermessungen allgemeiner im Wesentlichen ebenen Oberflächen werden an die Genauigkeit der Linienlaser hohe Anforderungen gestellt. Das eben vorgestellte Verfahren kann dabei beispielsweise zur Bestimmung der Ebenheit eines Scheinwerfereinstellplatzes genutzt werden. Dadurch kann zum einen die zulässige Gesamtdifferenz beider Fahrspuren, insbesondere an den vorgeschriebenen Punkten im Abstand von 0, 1, 2, 3, 4, 6 und 8 Metern zueinander eingehalten werden. Gleichzeitig kann sichergestellt werden, dass die zwingend erforderlichen Toleranzgrenzen nach DIN 1802 für die "Formabweichung der einzelnen Fahrspur" bzw. "Ebenheitsabweichung" erfüllt werden. Das Verfahren ist insbesondere dann vorteilhaft, wenn für einen Scheinwerfereinstellplatz zukünftig ungleich mehr Referenzpunkte vermessen werden müssen, um die Anforderungen an zukünftige Richtlinien zu erfüllen. Ebenso kann dieses Verfahren vorteilhafterweise bei bautechnische Vermessungen verwendet werden. Das eben vorgestellte Verfahren ist insbesondere dann von Vorteil, wenn bisher eine regelmäßige Kalibrierung der Messgeräte umgänglich war. Bisher führt eine Abweichung des Neigungswinkels von der Horizontalebene unmittelbar zu einem Messfehler, was durch das ebenso beschriebene Verfahren verhindert werden kann.

Bezüglich der erfindungsgemäßen Vorrichtung ist der Linienlaser bzw. Nivellierlaser bevorzugt über die komplette Messung, d. h. über die eigentliche Vermessung, auf einer konstanten Höhe und unbeweglich angeordnet. Bevorzugt wird dies durch ein Stativ erreicht. Der Linienlaser bzw. Nivellierlaser kann folglich unbewegt verbleiben, während die Verfahreinheit bewegt wird.

Als Kamera kann eine gewöhnliche Digitalkamera sowie ebenso die Kamera eines mobilen Endgerätes wie Smartphone, Tablet oder Laptop eingesetzt werden. Dabei sollte weiterhin sichergestellt sein, dass das Kamerabild zu jedem Zeitpunkt einer Prüfung auf das Projektionselement ausgerichtet ist. Des Weiteren sollte sichergestellt sein, dass das Kamerabild die auf das Projektionselement projizierte Laserlinie zu bevorzugt jedem Zeitpunkt der Prüfung abbildet.

Bevorzugt kann jede Art von Kamera ohne Bildstabilisator bzw. mit deaktiviertem Bildstabilisator verwendet werden.

Die Vermessung der Oberfläche auf Unebenheiten bzw. Neigungen erfolgt bevorzugt durch Ermittlung der Lage der Laserlinie bezüglich zumindest eines Referenzobjekts, wie eines Referenzwerts bzw. zumindest einer Referenzlinie. Eine Referenzlinie ist bevorzugt im Wesentlichen horizontal ausgerichtet. Ebenso kann ein Rechteck bzw. Quadrat als Referenzrahmen dienen. So kann im Erfassungsbereich der Kamera ein Referenzobjekt mit bekannter Abmessung angeordnet sein Hierbei kann es sich bevorzugt um ein geometrisches Objekt handeln, welches bevorzugt über den Bildschirm oder das Display eingeblendet wird und mit dessen Hilfe mittels eines geeigneten Algorithmus eine Entzerrung des Bild- bzw. Videosignals möglich ist. Somit kann ein Neigungs- Dreh- und Kippwinkel der Kamera und Kissenverzerrungen kompensiert werden. Das Referenzobjekt kann insbesondere dafür verwendet werden, um die Positionen und die Abmessung der gefilmten Laserlinie im Video präzise in Millimeter umrechnen zu können. Bevorzugt kann eine spätere Auswertung aller beliebigen Messwerte rein auf Basis der Videodatei erfolgen.

Bevorzugt kann dieser zumindest eine Referenzwert bzw. die zumindest eine Referenzlinie über die komplette Prüfung auf dem Kamerabild der Kamera sichtbar sein. Bevorzugt kann die Lage des zumindest einen Referenzwert bzw. der zumindest einen Referenzlinie innerhalb des Kamerabildes bekannt sein. Dasselbe gilt für den Fall, wenn eine geometrische Form wie ein Quadrat oder Rechteck als Referenzrahmen eingesetzt wird.

Bevorzugt kann bezüglich eines derartigen Referenzwertes, zumindest einer Referenzlinie oder eines Referenzrahmens zu jedem Zeitpunkt einer Prüfung die x-, y- und z-Position an jeder Stelle der Laserlinie ausgewertet werden. Eine Ausweitung in allen drei Raumrichtungen wird ermöglicht, dass zumindest das Projektionselement sowie die Kamera auf einer Verfahreinheit angeordnet sind, wobei die Verfahreinheit über die zu überprüfende Oberfläche bewegt werden kann. Die Verfahreinheit ist bevorzugt ohne bewegbare Räder bzw. ohne bewegbare Rollen im Bereich des Projektionselements ausgebildet, sodass Relativbewegungen durch Abweichungen vom Rundlauf der Räder bzw. Rollen ausgeschlossen werden und die Messwerte bezüglich der Laserlinie und einem der oben genannten Referenzwerte nicht verfälscht werden.

Bevorzugt steht die Verfahreinheit zumindest an zwei Positionen punktuell oder linienförmigen mit der zu vermessenden Oberfläche in Kontakt, wobei diese Kontaktstellen die Bereiche darstellen, an welchen die Oberfläche vermessen wird. Dadurch, dass die Verfahreinheit kontinuierlich über die zu vermessende Oberfläche, wie beispielsweise eine Fahrbahn oder Prüffläche oder auch eine Oberfläche von Industrieböden, Parkflächen oder Fundamenten, geschoben oder gezogen werden kann, kann eine kontinuierliche sowie zeitoptimierte Vermessung erfolgen. Bevorzugt kann die Verfahreinheit mit nahezu konstanter Geschwindigkeit über die Oberfläche bewegt werden.

In einer weiteren Ausführungsform kann das Projektionselement zumindest teilweise abgewinkelt und oder gekrümmt ausgebildet sein. Beispielsweise kann das Projektionselement abschnittsweise durch eine Dreiecksform von seiner Ebene abweichen, und somit zickzackförmig verlaufen. Trifft eine horizontale Laserlinie auf ein derartiges zumindest abschnittsweise fächerartiges Projektionselement auf, so kann die Laserlinie in diesem Bereich in Abhängigkeit von der Ausrichtung des Projektionselements zu einer vertikalen Ebene abgewinkelt abgebildet werden. Bei einer kontinuierlichen Messung durch Verfahren bzw. Verschieben der Verfahreinheit über eine Oberfläche mit Unebenheiten verändert sich die Lage der Laserlinie in diesem abgewinkelten Bereich, wobei durch die Änderung der Lage auf die Unebenheiten auf der Oberfläche oder die Neigung des Projektionselements geschlossen werden kann. Somit ergeben durch die verschiedenen Abstände der gezackten oder gebogenen Projektionsfläche zur Kameralinse bei einer an sich geraden Laserlinie und einer nicht rechtwinklig zur Laserlinienebene ausgerichteten Projektionselement Höhenunterschiede der Laserlinienabbildung auf dem Projektionselement, die ein Maß der Winkelabweichung der Projektionselementabweichung von einer rechtwinkligen Ausrichtung zur Laserebene darstellen. Diese kann für eine weitere Verbesserung des Messergebnisses genutzt werden.

In einer weiteren Ausführungsform kann ein zweites Projektionselement bevorzugt parallel benachbart zu dem ersten Projektionselement angeordnet werden, sodass der Laserstrahl auf beide Projektionselemente auftrifft. Mit zwei parallelen und abstandsmäßig zur Kamera hintereinander liegenden Projektionsflächen bzw. zwei hintereinander liegenden Projektionselementen kann die Neigung der Verfahreinheit in Fahrtrichtung gemessen werden, wodurch die ermittelten Messwerte bezüglich der Unebenheiten bzw. Neigungen korrigiert werden können.

In einer vorteilhaften Weiterentwicklung kann eine Auswertungseinrichtung umfasst sein, oder eine Schnittstelle zur Übermittlung vom Kameradaten umfasst sein, so dass die Auswertungseinrichtung oder eine entfernte Auswerteeinrichtung beruhend auf einer von der Kamera aufgenommenen relativen Lage der Laserlinie auf dem Projektionselement eine Neigung und/oder Unebenheit entlang der Oberfläche des Scheinwerfereinstellplatzes ermitteln kann. Die interne oder externe Auswertungseinrichtung kann auf Basis einer relativen Lageänderung der Laserlinie über dem Projektionselement eine Veränderung der Neigung oder Unebenheit der Oberfläche des Scheinwerfereinstellplatzes, dort vor allem der Radabstellbahnen, feststellen. Zur Feststellung der relativen Lageänderung sind zumindest zwei Kamerabilder, oder eine Videosequenz einer Lageänderung bezogen auf einer Verfahrbewegung der Vermessungsvorrichtung entlang des Scheinwerfereinstellplatzes notwendig. Die Auswertungseinrichtung kann die Bilder oder die Videosequenz hinsichtlich einer Lageänderung der Laserlinie entlang zumindest einer Ausdehnung des Projektionselementes, bevorzugt eines flächigen Projektionselementes auswerten. Die Auswertungseinrichtung kann in einer Variante in der Vermessungsvorrichtung umfasst sein, insbesondere baulich in einer Kamerabaugruppe, insbesondere einem mobilen Endgerät wie Smartphone, Tablet oder Laptop umfasst sein, und auf Basis einer Bildauswertung eine relative Lageänderung bestimmen. Es ist alternativ oder zusätzlich denkbar, dass eine Schnittstelle, beispielsweise eine Datenkabelverbindung, Funkschnittstelle wie beispielsweise WLAN, Mobilfunk, Bluetooth oder ähnliches, oder über einen mobilen Datenträger, beispielsweise einer Speicherkarte, Speicherstick, oder externer Festplatte, vorgesehen ist, die Kameradaten wie Kamerabilder oder eine Videosequenz zur externen Auswertung in einer räumlich entfernten Auswertungseinrichtung bereitstellt. Zusätzlich zu Kameradaten oder einer Videosequenz einer relativen Lageänderung kann vorteilhaft eine Position der Vermessungsvorrichtung entlang des Scheinwerfereinstellplatzes zu jedem Bild, zu jedem Zeitpunkt der Videosequenz durch die Auswertungseinrichtung berücksichtigt werden.

Vorteilhaft kann die vorgenannte Auswerteeinrichtung zur erleichterten Benutzung und Information eines Benutzers eine akustische und/oder optische Ausgabeeinheit zur Ausgabe einer aktuell zurückgelegten Strecke und/oder weiterer Statusangaben umfassen. Dabei kann die Ausgabeeinheit auch Störungen bei der Messaufnahme wie eine zu schnelle oder zu langsame Messgeschwindigkeit, eine Anzeige für ein Unebenheitsmaß und für die bereits vermessene Länge bzw. Fläche ausgeben. Vorteilhaft kann die Ausgabeeinheit mit einer weiter unten vorgestellten Display oder Bildschirm kombiniert oder separat davon ausgebildet sein, insbesondere als Sprachausgabe beim Ablauf des Messvorgangs einen Bediener unterstützen und korrigieren. Die Ausgabeeinheit kann auch vermittelt über eine drahtgebundene oder drahtlose Datenschnittstelle auf einem räumlich entfernten Auswerteeinrichtung wie einem Smartphone, Tablet oder Laptop eine Ausgabe bereitstellen.

In einer bevorzugten Ausführungsform kann die Verfahreinheit zumindest zwei Kufenabschnitte oder Zylinderabschnitte aufweisen, mit welchen die Verfahreinheit punktuell oder durch linienförmigen Kontakt entlang der Strecke verfahrbar ist. Die Verfahreinheit steht folglich über diese Kufenabschnitte bzw. Zylinderabschnitte in Kontakt mit einer Oberfläche, welche auf der zu vermessenden Strecke liegt. Eine zu vermessende Oberfläche bzw. Strecke wird folglich in dem Bereich vermessen, der in Kontakt mit den Kufen bzw. Zylinderabschnitten steht. Bei einem linienförmigen Kontakt ist die Kontaktfläche bevorzugt rechtwinklig zu einer Verfahrrichtung ausgerichtet, in welcher die Vermessungsvorrichtung bewegt bzw. verfahren wird. Durch mehrmaliges Überfahren einer Oberfläche an unterschiedlichen bzw. versetzten Positionen können so große Bereiche einer Oberfläche vermessen werden. Bevorzugt kann die Position, insbesondere die x-Position, der Verfahreinheit auf der Oberfläche bekannt sein. Die Verfahreinheit kann in beliebiger Richtung sowie vor und zurück verfahren werden.

Bevorzugt sind die Kufen- oder Zylinderabschnitte starr an der Unterseite oder Seitenfläche der Verfahreinheit angeordnet. Dabei können die Kufen- oder Zylinderabschnitte bevorzugt undrehbar starr an der Verfahreinheit fixiert sein. Dies ist insbesondere vorteilhaft, da selbst gut laufende Rollen unrund laufen können, um die in der oben genannten Richtlinie geforderte Genauigkeit einzuhalten. Insoweit können hochfein gelagerte Rollen, z.B. Kugellagerrollen eingesetzt werden, die eine hohe Rundlaufpräzision bei geringem Verschleiß haben. Dies gilt insbesondere für eine Vermessung einer Aufstandsfläche eines Scheinwerfereinstellgeräts. Die hier offenbarte Vermessungsvorrichtung besitzt vorteilhafterweise im Bereich der zu vermessenden Position keine Räder, die bei einer Bewegung der Vermessungsvorrichtung eine rollende Bewegung ausführen.

In einer bevorzugten Ausführungsform können die zwei Kufen- oder Zylinderabschnitte an zwei gegenüberliegenden Randbereichen der Verfahreinheit angeordnet sein. Dabei kann bei möglichst kompakter Bauart der Vorrichtung eine möglichst breite Spurbreite erreicht werden. Durch eine möglichst breite Spurbreite erfolgt demnach die Auswertung bezüglich zweier möglichst weite beabstandeter Punkte bzw. Linienabschnitte, wodurch die Genauigkeit der Messung weiter verbessert werden kann.

Bevorzugt ist die Position der Kufen- bzw. Zylinderabschnitte bekannt, sodass über die Schrägstellung der Laserlinie auf dem Projektionselement die Querneigung der Vorrichtung bezüglich zweier bekannter Punkte bzw. Linien gemessen werden kann. Folglich können mit einer Messung mindesten zwei Positionen zugleich gemessen, und ein Querneigungsma0 bestimmt werden.

Bevorzugt können die zwei Kufen- oder Zylinderabschnitte an der Unterseite der Verfahreinheit angeordnet sein. Dadurch kann die Baugröße der Vorrichtung möglichst gering gehalten werden

In einer bevorzugten Ausführungsform können die zumindest zwei Kufen- oder Zylinderabschnitte in der Ebene des Projektionselements an der Verfahreinheit montiert sein. Dadurch kann der Einfluss einer Neigung der Verfahreinheit möglichst gering gehalten werden.

Bevorzugt können die Kufen bzw. Zylinderabschnitt eine Breite von 2 cm bis 15 cm, bevorzugt 5 cm bis 12 cm, insbesondere 5 cm bis 10 cm, bevorzugt 2 cm bis 5 cm aufweisen, und bevorzugt zueinander im Abstand verstellbar sein.

In einer bevorzugten Ausführungsform kann die Verfahreinheit zumindest zwei Rollen aufweisen, durch welche die Verfahreinheit entlang der Strecke verfahrbar ist. Bevorzugt sind die Rollen feststehend und nicht drehbar an der Verfahreinheit gelagert, um einen Einfluss durch eine Unrundheit der Rollen bei der Vermessung zu eliminieren.

In einer Ausführungsform kann die Breite der Vorrichtung, d.h. der Abstand der Kufen-, bzw. Zylinderabschnitte oder der Rollen auf eine Spurbreite eines Vermessungsplatzes eines Scheinwerferprüfstandes einstellbar sein. Somit kann die Spurweite auf die Anforderung der zu messenden Oberfläche angepasst werden, so dass beispielsweise unterschiedlichen Spurweiten von Radaufstandsstrecken entlang der Längsachse des Fahrzeugs und Verfahrstrecke eines Scheinwerfereinstellgerätes quer zur Fahrzeuglängsachse vermessen werden können.

In einer bevorzugten Ausführungsform können das Projektionselement und die Kamera miteinander verbunden sein und nach Art eines freischwingenden Pendels zwischen den Kufenabschnitten bzw. Zylinderabschnitten oder Rollen aufgehängt sein. Dadurch wird erreicht, dass das Projektionselement in jeder Position lotrecht zu einer horizontalen, welche bevorzugt die zu vermessende Strecke darstellt, ausgerichtet wird. Da die Kamera mit dem Projektionselement verbunden ist und ebenso starr an der pendelnden Vorrichtung angeordnet ist, die das freischwingende Pendel ausbildet, bleibt der Abstand zwischen Kamera und Projektionselement in jeder Position unverändert und konstant.

In einer bevorzugten Ausführungsform kann die Verfahreinheit eine Zugdeichsel aufweisen. Bevorzugt weist die Zugdeichsel ein drehbares Rad auf. Folglich entsteht durch einen ersten sowie zweiten Auflagerpunkt durch die beiden Kufen- bzw. Zylinderabschnitte ein dritter Auflagerpunkt durch ein drehbares Rad, wodurch die Verfahreinheit stabil über eine Oberfläche gezogen bzw. geschoben oder auch gefahren werden kann. Die Zugdeichsel bzw. Deichsel ist bevorzugt mittig zwischen den beiden Kufen- bzw. Zylinderabschnitten angeordnet. Weiterhin bevorzugt ist die Zugdeichsel mittig unter der Projektionsfläche bzw. unter dem Projektionselement angeordnet. Das drehbare Rad kann weit genug entfernt von der Projektionsfläche und der Kamera angeordnet sein, sodass dessen Unrundheit kaum einen Einfluss auf die Messergebnisse ausübt. Insbesondere kann das Rad an einer schwenkbaren Gabel mit ausreichendem Nachlauf angeordnet sein, sodass die Vorrichtung bestrebt ist geradeaus zu laufen. Ein drehbares Rad kann von Vorteil sein, um die Vorrichtung kontinuierlich sowie mit nahezu konstanter Geschwindigkeit entlang einer Fahrstrecke zu bewegen.

In einer weiteren bevorzugten Ausführungsform kann an der Deichsel ein Griff bzw. ein Seil oder vergleichbares angeordnet sein, sodass die Vorrichtung händisch von einem Benutzer gegriffen werden und über eine zu vermessende Oberfläche gezogen bzw. geschoben werden kann.

Für eine Vermessung einer Oberfläche eines Scheinwerfer-Prüfstandes kann beispielsweise der dritte Auflagerpunkt in einem Abstand von 0,5 m bis 2,0 m, insbesondere 0,5 m bis 1,0 m, bevorzugt 0,75 m bis 1,25 m, angeordnet sein.

In einer bevorzugten Ausführungsform kann das Projektionselement in einer Art Dunkelkammer angeordnet sein, welche zumindest an einer Seitenfläche eine erste Aussparung, bevorzugt einen Schlitz, aufweist, die bevorzugt auf Höhe des Laserstrahls angeordnet ist. Die Aussparung bzw. der Schlitz sollte dabei mit einer derartigen Höhe ausgebildet werden, dass während der kompletten Bewegung der Vorrichtung die Laserlinie auf das Projektionselement auftreffen kann.

Bevorzugt kann das Projektionselement in einer Art Dunkelkammer angeordnet sein, wodurch das Kamerabild nicht durch Sonneneinstrahlung oder Außenlicht beeinflusst wird. Die Dunkelkammer kann als eine Art geschlossene Schachtel bzw. Box ausgebildet sein.

Bevorzugt kann die Dunkelkammer bzw. Box als rechteckige bzw. quadratische Box bzw. Schachtel ausgebildet sein, wobei durch alle sechs Seitenabschnitte die Einstrahlung von Licht im Wesentlichen verhindert wird. Bevorzugt wird lediglich durch den Schlitz bzw. die Aussparung, welche den Einfall des Laserstrahls ermöglicht, der Einfall von Licht ins Innere der Box ermöglicht.

In einer bevorzugten Ausführungsform kann die Box auf einer, der ersten Aussparung gegenüberliegenden, Seite eine zweite Aussparung aufweisen, auf deren Höhe die Kamera angeordnet ist. Bevorzugt kann die zweite Aussparung in einer zweiten Kammer angeordnet sein, welche ebenso durch die Anordnung des Projektionselements innerhalb der Box entsteht.

In einer bevorzugten Ausführungsform kann die Kamera außerhalb der Box derart angerichtet werden, dass die Kameralinse auf Höhe des Schlitzes bzw. der Aussparung angeordnet ist und ein digitaler Bildschirm der Kamera von außerhalb der Box sichtbar verbleibt. Bevorzugt kann während der Messung der Bildschirm durch den Benutzer optisch überprüft werden. Folglich kann von einem Benutzer während der Messung überprüft werden, ob die Laserlinie während des kompletten Messvorgangs innerhalb des Kamerabildes angeordnet ist.

Bevorzugt können die beiden Schlitze bzw. die beiden Aussparungen derart platziert sein und mit einer derartigen geometrischen Abmessungen ausgebildet sein, dass während einer Vermessung kontinuierlich die Laserlinie zumindest abschnittsweise auf dem Projektionselement auftreffen kann und das Kamerabild der Kamera kontinuierlich diese Laserlinie auf dem Projektionselement ausgerichtet ist.

Die Dunkelkammer bzw. Box kann einen Deckel aufweisen, sodass die Box zugänglich bleibt. Der Deckel ist bevorzugt auf der Oberseite angeordnet und derart ausgebildet, dass eine komplette Seitenfläche der Box bzw. Dunkelkammer geöffnet werden kann.

In einer bevorzugten Ausführungsform kann die Dunkelkammer eine Trennebene aufweisen, in der das Projektionselement angeordnet ist, und die die Dunkelkammer in eine erste und eine zweiten Kammerbereich trennt.

Mit anderen Worten kann das Projektionselement die Dunkelkammer bzw. Box in zwei Kammern aufteilen. Dadurch können zwei getrennten Dunkelkammern ausgebildet werden. An einer ersten Seite kann dabei das Laserlicht des Linienlasers bzw. Nivellierlasers durch eine erste Aussparung bzw. einen ersten Schlitz in eine erste Kammer der Box eintreten und so auf das Projektionselement auftreffen.

In einer bevorzugten Ausführungsform kann die Box bezüglich einer horizontalen um einen Winkel α geneigt angeordnet werden. Dadurch kann die Kamera derart ausgerichtet werden, dass diese ebenfalls um den Winkel α abweichend von der Laserlinie diese auf dem Projektionselement auftreffende Laserlinie aufnehmen kann. Folglich wird die Kamera nicht durch das Laserlicht geblendet, da diese nicht gleichbeabstandet von einer horizontalen Oberfläche angeordnet sind. Demzufolge können bevorzugt die beiden Aussparungen bzw. Schlitze, die bevorzugt an zwei gegenüberliegenden Seiten der Box angeordnet sind, im Betrieb nicht auf einer horizontalen Ebene liegen.

Bevorzugt kann die Dunkelkammer bzw. Box mit Ausnahme der Aussparungen komplett verschlossen sein und mit zumindest einer, bevorzugt zwei getrennt voneinander angeordneten Dunkelkammern bzw. Kammern ausgebildet sein. Dabei kann die Dunkelkammer bzw. Box auf einem Zwei-Dunkelkammerprinzip beruhen.

In einer bevorzugten Ausführungsform kann das Projektionselement eine semitransparente Fläche, insbesondere eine semitransparente Scheibe oder ein semitransparentes Blatt sein, dass vorzugsweise rechtwinklig zu einer Laserlinienebene ausgerichtet ist.

In einer bevorzugten Ausführungsform kann das Projektionselement zumindest abschnittsweise in einer Verfahrrichtung entlang der zu vermessenden Strecke versetzt oder abgewinkelt verlaufen, um eine variierende Neigung der Verfahreinheit zur Oberfläche zu erfassen. Das Projektionselement kann beispielsweise abgewinkelt oder gewölbt ausgebildet sein. Eine Laserlinie, d. h. die Laserlinie Ebene des Linienlasers, wird folglich ebenso geknickt abgebildet wenn diese auf ein derartiges Projektionselement auftrifft. Dabei ändert sich die Lage der Laserlinie, wenn das Projektionselement aus der ursprünglichen Ebene ausgelenkt wird. Übertriebene metrische Zusammenhänge kann auf die Neigung der Verfahreinheit bezüglich der Oberfläche, d. h. bezüglich der zu vermessenen Oberfläche, rückgeschlossen werden.

In einer bevorzugten Ausführungsform kann im Wesentlichen in der Ebene des Projektionselements ein Bildschirm bzw. Display angeordnet sein, der in einem Blickwinkel der Kamera liegt. Bevorzugt werden auf diesem Bildschirm bzw. Display zumindest ein Referenzpunkt, zumindest eine Referenzlinie und/oder zumindest ein Referenzrahmen abgebildet. Der Bildschirm kann beispielsweise an einen Einplatinencomputer, wie beispielsweise einen Raspberry Pi, angeschlossen sein. Bei dem Bildschirm kann es sich um ein TFT-Display handeln. Der Bildschirm kann bevorzugt komplett innerhalb des Kamerabildes angeordnet sein und kann über die komplette Messstrecke filmisch aufgenommen werden. Beispielsweise können innerhalb des Displays und bevorzugt innerhalb eines Referenzrahmens Messwerte, welche die Zeit bzw. Position der Vermessungseinrichtung sowie die Messwerte bezüglich der Unebenheiten der Oberfläche betreffen, angezeigt werden.

Bevorzugt kann über die Konfiguration der Kamera bzw. der Kameralinse und/oder den Abstand des Displays bzw. des Bildschirms von der Kamera bzw. Kameralinse, die genaue Position sowie Größe eines Referenzpunktes, einer Referenzlinie bzw. eines Referenzrahmens bestimmt werden.

Bevorzugt kann eine Videodatei, welche aus dem Kamerabild entsteht, jeden beliebigen Messwert enthalten und zugleich die aufgenommene Laserlinie sowie den Referenzrahmen bzw. Referenzpunkt oder zumindest eine Referenzlinie enthalten. All diese Werte werden in time zu jedem Zeitpunkt aufgezeichnet, sodass durch die Videodateien bevorzugt eine Möglichkeit entsteht, redundant die Messwerte zu überprüfen.

Bevorzugt kann eine spätere Auswertung aller beliebigen Messwerte rein auf Basis der Videodatei erfolgen, wobei über einen Algorithmus die Messwerte in Abhängigkeit der Zeit sowie in Abhängigkeit des zurückgelegten Weges aus der Videodatei ausgelesen und in eine Datendatei eingelesen werden können. Dies kann bevorzugt über eine 7-Segment Anzeige aus der Videodatei erfolgen. Eine dargestellte Information einer 7-Segment Anzeige, die im Bild der Videosequenz mit aufgenommen wird, kann durch eine einfache Bildanalyse wiedergewonnen werden, so dass in der Videosequenz weitergehende Zahleninformationen gespeichert und automatisch extrahiert werden können.

In einer bevorzugten Ausführungsform kann die Kamera eine Videokamera sein, die zur Aufnahme einer Videosequenz der Lage und Ausrichtung des Laserstrahls auf dem Projektionselement im Verlauf einer Verfahrbewegung entlang der zu vermessenden Strecke eingerichtet ist, insbesondere ein mobiles Endgerät wie Smartphone oder Tablett sein.

In einer bevorzugten Ausführungsform kann die auf dem Projektionselement projizierte Laserlinie für die Auswertung in unterschiedliche Abschnitte virtuell unterteilt werden, wobei die jeweiligen Abschnitte separat bezüglich eines Referenzpunktes, einer Referenzlinie und/oder eines Referenzrahmens ausgewertet werden können. Bevorzugt kann für die Auswertung die Laserlinie in einen linken sowie rechten Bereich (gedanklich/virtuell) unterteilt werden, sodass für den jeweiligen Kufen- bzw. Zylinderabschnitt, mit welchen die Vorrichtung mit der Oberfläche kontaktiert ist, eine separate sowie möglichst nahe an dem jeweiligen Kufen- bzw. Zylinderabschnitt angeordnete Auswertung erfolgen kann. Dabei kann beispielsweise eine integrale Auswertung über jeden jeweils virtuell erstellten Laserlinienabschnitt erfolgen, wobei jeder dieser Laserlinienabschnitte separat mit zumindest einem Referenzpunkt, mit zumindest einer Referenzlinie und/oder mit zumindest einem Referenzrahmen verglichen bzw. ausgewertet werden kann.

In einer bevorzugten Ausführungsform kann ein Wegsensor, insbesondere ein berührungsloses Wegsensor, in der Verfahreinheit umfasst sein, der eine Weglänge oder Wegposition der zurückgelegten zu vermessenden Strecke bestimmen kann, wobei bevorzugt die Weglänge und/oder die Wegposition in einem Bildschirm oder Display dargestellt wird, und insbesondere der Wegsensor nach Art einer optischen Computermaus ausgebildet ist. Der Wegsensor kann ebenso als Wegaufnahmeeinheit bezeichnet werden.

Bevorzugt wird die jeweilige Position der Vorrichtung über den Wegsensor bzw. die Wegaufnahmeeinheit zu jedem Zeitpunkt der Messung aufgenommen. Der Wegsensor kann bevorzugt mit der zu vermessenen Oberfläche in Kontakt stehen. Bevorzugt kann die Wegaufnahmeeinheit derart platziert sein, dass diese unabhängig von einer Vorwärts- bzw. Rückwärtsbewegung der Vorrichtung an einer bezüglich der Vorrichtung konstanten Position verbleibt. Unebenheiten der Oberfläche, die durch die Oberfläche selbst bestimmt sind, wie beispielsweise Fugen einer Oberfläche aus Fliesen oder Pflastersteinen, beeinflussen dabei bevorzugt nicht eine kontinuierliche Bewegung der Wegaufnahmeeinheit, wenn die Vorrichtung bewegt wird, da sich diese nicht in den Fugen verhakt. Bevorzugt ist die Wegaufnahmeeinheit derart verbunden, dass die mit der Wegaufnahmeeinheit gemessenen Werte direkt auf dem Bildschirm angezeigt und folglich direkt von dem Kamerabild aufgenommen werden können.

In einer bevorzugten Ausführungsform kann der Wegsensor bzw. die Wegaufnahmeeinheit aus einer Computermaus ausgebildet sein. Bevorzugt ist die Computermaus mit dem Einplatinencomputer / Raspberry Pi und dem Bildschirm verbunden, sodass die Wegwerte bzw. Wegdaten, ausgegeben von der Computermaus, direkt auf dem Bildschirm angezeigt werden können.

In einer bevorzugten Ausführungsform ist der Wegsensor bzw. die Wegaufnahmeeinheit, beispielsweise die Computermaus, über eine Blattfeder mit den weiteren Komponenten der Vorrichtung verbunden. Bevorzugt kann eine Computermaus mit einer Blattfeder aus Metall auf die zu vermessende Oberfläche gedrückt werden. Dadurch kann es bevorzugt ermöglicht werden, auch scharfkantige Absätze mit der Vorrichtung zu überfahren, ohne dass sich die Computermaus mit dem Untergrund verhakt. Dies ist insbesondere bei Oberflächen aus Fliesen oder Pflastersteinen von Vorteil. Die Wegaufnahmeeinheit, beispielsweise die Computermaus, vermisst bevorzugt den zurückgelegten Weg. Bevorzugt wird ausgehend von dem Wert Null die zurückgelegte Strecke vermessen. Die gemessenen Daten können bevorzugt direkt auf dem Display angezeigt werden das von der Kamera während des Messvorgangs zusätzlich zu Laserlinie aufgenommen wird.

Die Blattfeder kann beispielsweise an der Deichsel oder an der Box befestigt werden. Dadurch dass die Blattfederaufzug sowie Druck belastet werden kann, kann die Vorrichtung vorwärts sowie rückwärts bewegt werden, wobei die Wegaufnahmeeinheit auf der Blattfeder entweder hinter der Vorrichtung hergezogen oder vor der Vorrichtung geschoben wird. Dadurch kann beispielsweise dieselbe Wegstrecke einmal hin und einmal zurück vermessen werden, wobei durch Vergleich der beiden Messungen für dieselbe Strecke ebenso die Genauigkeit der gemessenen Messwerte mit der Vorrichtung überprüft werden kann. Erfolgt die Messung ohne Neustart beziehungsweise ohne Neukalibrierung vor dem Rückweg auf derselben Wegstrecke, kann ebenso überprüft werden, ob der Weg auf denselben Koordinaten bezüglich der x-, y- und z-Position zurückgelegt wurde. Dabei kann über den x-Wert ermittelt werden, ob dieselbe Wegstrecke bei dem Rückweg gewählt wurde.

In einer bevorzugten Ausführungsform kann eine akustische und/oder optische Anzeige umfasst sein. Bevorzugt kann über diese Anzeige angegeben werden, ob eine optimale und/oder voreingestellte Geschwindigkeit, mit welcher die Vorrichtung bewegt wird, während der Vermessung überschritten bzw. unterschritten wird. Einem Benutzer kann folglich über ein bevorzugt akustisches Signal mitgeteilt werden, ob eine für die Vermessung voreingestellte Geschwindigkeit während der kompletten Messstrecke eingehalten wird.

Bevorzugt können alle beliebigen Messgrößen, wie die x-, y- und z-Position basierend auf der Auswertung der Laserlinie zu einem Referenzwert sowie basierend auf der Auswertung des Wegsensors bzw. der Wegaufnahmeeinheit, wie beispielsweise eine Computermaus, folglich in der Videodateien, aufgenommen durch eine Kamera, wie beispielsweise durch die Kamera eines Smartphones, ausgegeben bzw. aufgenommen werden.

Bevorzugt kann allein durch die Videodatei eine Auswertung der Messwerte erfolgen, da die komplette Datensequenz sowie auch alle akustischen Signale darin aufgezeichnet werden können. Bevorzugt kann folglich allein aus der Videodatei geschlossen werden, ob Spurfehler sowie Fehler in der Geschwindigkeit der Messung vorliegen. Über eine Auswertesoftware, die auf einem Computer oder Servern läuft, kann bevorzugt über Bildverarbeitung die Videodatei verarbeitet und ein Höhenprofil in Abhängigkeit der x-, y- und z-Position generiert werden. Vorteilhafterweise kann dabei eine Softwareinstallation auf dem mobilen Endgerät entfallen.

Bevorzugt werden alle Messgrößen über die Ausgabe direkt in der Videodatei mit Angabe des jeweiligen Zeitpunktes, sowie durch Abspeicherung in einem Einplatinencomputer, wie beispielsweise einem Raspberry Pi, redundant abgespeichert.

Vorteilhafterweise kann eine Vorrichtung bereitgestellt werden, wobei die gemessenen Werte einfach und ohne technischen Aufwand durch Akkreditierungsstellen wie die der DAkkS nachvollzogen und überprüft werden können. Bevorzugt kann eine nachträgliche Kalibrierung der Kamera allein aus der Videodatei erfolgen, da der Referenzwert in der Videodateien mit enthalten ist.

In einer bevorzugten Ausführungsform kann die Auswertung über eine App erfolgen. Bevorzugt können dabei die Daten über die Videodatei des Smartphones in eine Cloud geladen werden und anschließend eine Videosequenzauswertung erfolgen.

Bevorzugt kann die Auswertung direkt über eine App als Auswertungseinrichtung auf einem Smartphone erfolgen, mit welchem auch die Videodateien erzeugt worden sind.

Gegenstand der Erfindung ist weiterhin ein Vermessungsverfahren, insbesondere Oberflächenvermessungsverfahren, zur Erfassung und Verbesserung von Neigungen und/oder Unebenheiten einer, bevorzugt horizontal ausgerichteten Oberfläche eines Scheinwerfereinstellplatzes.

Das vorgeschlagene Vermessungsverfahren kann ebenso zur Vermessung von Neigungen und oder Unebenheiten von allgemein ebenen Oberflächen, beispielsweise im Hochbau, bei Fundamenten oder allgemeinen ebenen Flächen verwendet werden. Derartige ebene Oberflächen können beispielsweise Industrieböden sein, welchen insbesondere den Toleranzen im Hochbau genügen müssen, allgemeine ebene Außenflächen für beispielsweise Parkplätze oder Lagerflächen sowie Fundamente, insbesondere für Windkraftanlagen. Ebenso können mit dem vorgeschlagenen Verfahren kontinuierliche Vermessungen von Fahrspuren in leitliniengeführten Schmalgängen von Hochregallagern erfolgen.

Bezüglich des Vermessungsverfahrens wird vorgeschlagen, dass eine erfindungsgemäße Vermessungsvorrichtung entlang einer Strecke verfahren und/oder verschoben wird, wobei der Linienlaser in eine Ausgangsposition verbleibt, wobei die Verfahreinheit derart von dem Linienlaser weg bzw. zu dem Linienlaser hin verschoben und/oder verfahren wird, dass der Laserstrahl über die komplette Strecke zumindest teilweise auf die Projektionsfläche bzw. aus das Projektionselement auftrifft, und die Kamera über die komplette Strecke auf den Laserstrahl auf dem Projektionselement ausgerichtet ist und Bilder oder eine Videosequenz der relativen Lage des Laserstrahls auf dem Projektionselement aufnimmt. Anschließend wird eine Auswertung der relativen Lageänderung des Laserstrahls auf dem Projektionselement zur Bestimmung der Neigung und/oder Unebenheit der Fläche herangezogen.

In einer bevorzugten Ausführungsform des Verfahrens kann ein Wegsensor eine Weglänge oder Wegposition entlang einer zu vermessenden Strecke aufnehmen, wobei der Verlauf der Weglänge oder Wegposition synchron zu den Bildern oder der Videosequenz der relativen Lage des Laserstrahls auf dem Projektionselement zur Bestimmung der Neigung oder Unebenheit der Oberfläche der Strecke herangezogen wird. Die zu vermessende Strecke befindet sich entlang eines Verfahrwegs der Vermessungsvorrichtung, entlang dessen das Vermessungsverfahren ausgeführt wird.

In einer bevorzugten Ausführungsform des Verfahrens kann das Bild- oder Videosequenz der relativen Lage des Laserstrahls auf dem Projektionselement in zwei oder mehreren getrennten Bereichen erfasst werden, und zur Bestimmung der Neigung oder Unebenheit der Oberfläche die relative Lageänderung in jedem Bereich gesondert ermittelt werden. Dabei kann insbesondere eine getrennte Bestimmung einer Neigung der Verfahreinheit relativ zur Horizontalen, einer Neigung der Oberfläche quer zur Verfahrrichtung, und / oder einer Höhe der Oberfläche relativ zu der durch den Linienlaser gebildeten Ebene ermittelt werden. Eine derart getrennte Analyse ermöglicht eine exakte Analyse der Querneigung, also der Neigung senkrecht zur Verfahrrichtung.

Gegenstand der Erfindung ist weiterhin eine Verwendung einer Vermessungsvorrichtung und eines Vermessungsverfahrens zur Ausmessung eines Scheinwerfereinstellplatzes.

Es wird vorgeschlagen, die Vermessungsvorrichtung bzw. das Vermessungsverfahren zur Vermessung einer Oberflächenneigung und einer Unebenheitsbestimmung eines Scheinwerfereinstellplatzes zu verwenden. So kann beispielsweise die Prüfstrecke bzw. der Prüfplatz eines Scheinwerferprüfstands, insbesondere die Fahrzeugaufstellfläche und ein Verfahrweg eines Einstellgerätes auf Unebenheiten und/oder Neigungen vermessen werden.

Gegenstand der Erfindung ist weiterhin im Rahmen einer vorgenannten Verwendung der Vermessungsvorrichtung ein Einsatz in einem Reparaturverfahren für einen Scheinwerfereinstellplatz, wobei der Scheinwerfereinstellplatz mit einer erfindungsgemäßen Vermessungsvorrichtung oder einem erfindungsgemäßen Vermessungsverfahren vermessen wurde. Es wird vorgeschlagen, dass aus den ermittelten Messdaten der Vermessungsvorrichtung bezüglich der Neigungen und/oder Unebenheiten der Oberfläche der Strecke oder eines Verfahrwegs eines Scheinwerfereinstellgerätes in Abhängigkeit der jeweiligen Wegposition der Strecke ein Bodenprofil erzeugt wird, wobei zumindest ein Füllelement entsprechend einer Negativform des Bodenprofils erzeugt, beispielsweise gefräst, geschnitten, gelasert, gegossen, oder aus überlagerten Folienelementen zusammengesetzt wird, wobei anschließend das Füllelement auf den Scheinwerfereinstellplatzes aufgelegt, insbesondere fixiert, wird. Das Reparaturverfahren kann vorteilhaft sowohl für die Aufstellbahn eines Fahrzeugs auf den Scheinwerfereinstellplatz als auch für eine Verfahrstrecke eines Einstellgerätes quer zur Fahrzeugfront eingesetzt werden. Dadurch entfallen doppelte oder mehrfache Anfahrwege für Reparatur und anschließende Neuvermessung mit Abnahme und Erstellung des Kalibrierscheins. Zudem kann der Prüfplatz sofort wieder genutzt werden.

Ein derartiges Reparaturverfahren kann von einem Anwender der Vermessungsvorrichtung bzw. des Vermessungsverfahrens direkt vor Ort in die Wege geleitet sowie angewendet und umgesetzt werden. Nach der Vermessung eines Scheinwerfereinstellplatzes kann die Videosequenz mit den Messdaten beispielsweise per E-Mail verschickt werden. Durch Auswertung der Messdaten, wie zuvor bereits ausführlich erläutert, kann ein Bodenprofil der gemessenen Strecke erzeugt werden. Eine Negativform des Bodenprofils kann beispielsweise in eine CNC-Maschine eingelesen werden, welche das zumindest eine Füllelement erstellt. Das zumindest eine Füllelement kann ebenso auf andere Weise und mit einem anderen Verfahren hergestellt werden. Bei besonders großen Unebenheiten bzw. Neigungen können auch mehrere Füllelemente übereinander angeordnet werden. Nachdem das zumindest eine Füllelement auf die vermessende Strecke aufgelegt und/oder fixiert wurde, steht eine ebene Prüfstrecke eines Scheinwerfereinstellplatzes bereit, die sich zur Vermessung von Scheinwerfern von Fahrzeugen eignet. Das zumindest eine Füllelement kann dabei aufgeklebt oder anderweitig fixiert werden. Dies kann beispielsweise mit einem doppelseitigen Klebeband, Montagekleber oder auch einer selbstklebenden Oberfläche des Füllelements erfolgen.

In einer bevorzugten Ausführungsform des Reparaturverfahrens kann das Füllelement mehrteilig ausgebildet sein, oder aus einem aufrollbaren Material in Art eines Rolladenkörpers mit unterschiedlich hohen Lamellen bestehen, welches auf einer Unterseite lamellenartig ausgebildet ist, so dass die Lamellen eine entsprechend der Negativform des Bodenprofils ermittelte Lamellenhöhe aufweisen.

Insbesondere bei längeren Prüfstrecken kann das Füllelement aus mehreren aneinandergereihten Abschnitten bzw. Einzelteilen bestehen oder vergleichbar zu einzelnen Puzzleteilen miteinander verbunden sein. Es ist ebenso denkbar, dass sich die einzelnen Teile dabei nicht berühren, sondern in einen gewissen Abstand, abhängig von der Unebenheit bzw. Neigung der gemessenen Strecke, angeordnet sind. So kann es beispielsweise notwendig sein, dass lediglich in gewissen Teilabschnitten ein derartiges Füllelement entlang der Prüfstrecke angeordnet wird, um punktuell Unebenheiten auszugleichen. Dass Füllelement kann dabei aus einem biegsamen oder starren Material bestehen. Es ist ebenso denkbar, pro Fahrbahn der Prüfstrecke ein Füllelement vorzusehen, das aus einem aufrollbaren Material besteht. Dabei kann das Füllelement beispielsweise aus einem Thermoplastik bestehen, welches schnell und einfach mit einem Gasbrenner verlegt werden kann. Ein derartiges sehr widerstandsfähiges Material weist eine hohe Verkehrsbelastung, hohe Frost-, Schnee-, Salz-, und Ölbeständigkeit auf und erfordert keine spezielle Ausrüstung zur Verlegung. Des Weiteren kann das Füllelement aus einer selbstklebenden Folie wie einem Bodenmarkierungsband bestehen. Derartige Bodenmarkierungsbänder sind extrem strapazierfähig, selbstklebend und weisen eine gute Bodenhaftung auf. Diese bestehen beispielsweise aus PU oder einem gewebeverstärkten Elastomer. Der Kleber derartiger Bodenmarkierungsbänder besteht beispielsweise aus einem Synthesekautschuk und eignet sich für eine Innen- sowie Außenanwendung. Die Dicke beträgt beispielsweise 1,6 mm. Derartige selbstklebende Folien eignen sich insbesondere zum Ausgleich punktueller Unebenheiten, wobei mehrere zugeschnittene Teile übereinander einfach und schnell zum Ausgleich der Unebenheit aufgebracht werden können.

Des Weiteren kann das aufrollbare Material auf der Unterseite lamellenartig im Sinne eines Ausgleichsrollos ausgebildet sein, wobei die Lamellen bevorzugt quer zur Aufrollrichtung angeordnet sind, sodass die Lamellen im aufgerollt Zustand nicht entlang der jeweiligen Länge der Lamelle verbogen bzw. gekrümmt werden. Die einzelnen Lamellen können dabei entsprechend der Negativform des Bodenprofils in ihrer Höhe angepasst werden, was ebenso durch eine CNC-Maschine oder dergleichen erfolgen kann. Weiterhin können die Lamellen unterschiedlich breit ausgebildet sein. Das Aufwickeln des Materials wird durch die Lamellenstruktur auf der Unterseite erleichtert, sodass das Material mit einem kleinen Radius gewickelt werden kann, was sich positiv auf die Transportierbarkeit auswirkt. Als Material kann beispielsweise Forex verwendet werden, das aus einer leicht geschäumten und geschlossenzelligen Hartschaumstoffplatte gebildet wird. Durch die Lamellenstruktur kann folglich auch an sich nicht biegbares Material gerollt werden. So kann ein Anwender eine Bild- oder Videosequenz der relativen Lage des Laserstrahls auf dem Projektionselement beim Abfahren einer Prüfspur/Fahrstrecke erstellen und zu einem Bestellserver bzw. einem Hersteller eines Ausgleichsrollos senden. Dort kann automatisiert auf Basis der Videosequenz CNC-Fräsdaten einer Negativform der Abweichhöhe zur Sollhöhe der Fahrstrecke/Prüfspur erstellt und eine Ausgleichsrolle gefräst werden. Dieser kann kompakt zusammengerollt und via Paketdienst an die jeweiligen Scheinwerferprüfstand geschickt und dort mit einfachen Mitteln, beispielsweise Klebstoff oder doppelseitigem Klebeband zum Niveauausgleich auf die Fahrstrecke/Prüfspur zur Korrektur von Neigung und Unebenheit aufgebracht werden.

Somit kann das einteilig oder mehrteilig ausgebildete Füllelement, aufgerollt oder aufgestapelt direkt vor Ort angeliefert werden und dort ohne spezielles Werkzeug verlegt und fixiert werden. Das aufgerollte Material wird beispielsweise vor Ort abgerollt, umgedreht und mit speziellem doppelseitigem Klebeband auf die Prüfstrecke bzw. Fahrspur geklebt. Durch die unterschiedlich hoch ausgebildeten Lamellen bzw. die entsprechend der Negativform geformte Unterseite können Unebenheiten sowie Neigungen entlang der Prüfstrecke korrigiert werden. Insbesondere ist bei einem zusammenhängenden Füllelement, das über die komplette Länge eines Fahrstreifen des Scheinwerfereinstellplatzes verläuft, die genaue Verlegeposition des Füllelement auf dem Fahrstreifen bekannt, sodass das Füllelement durch einfaches Ausrollen passgenau verlegt werden kann.

Gegenstand der Erfindung ist weiterhin ein Reparaturverfahren zur Erstellung nivellierter Laufflächen für eine Verfahrstrecke eines Scheinwerfereinstellgerätes eines Scheinwerfereinstellplatz. Es wird vorgeschlagen, dass zumindest zwei flexible Schienen auf den Scheinwerfereinstellplatz entlang der Verfahrstrecke des Scheinwerfereinstellgerätes aufgeklebt werden, wobei die Schienen entlang ihrer Länge jeweils eine Vertiefung aufweisen, die anschließend mit einer ausgehärteten Flüssigkeit, insbesondere mit Epoxidharz, ausgegossen wird, sodass eine ebene Fahrfläche für ein Scheinwerfereinstellgerät bereitgestellt wird. Bevorzugt können die beiden Schienen parallel zueinander auf die Oberfläche des Scheinwerfereinstellplatzes lösbar aufgeklebt werden. Dies kann im einfachsten Fall mit doppelseitigem Klebeband erfolgen. Jede der Schienen weist dabei beispielsweise eine im Querschnitt rechteckige Vertiefung auf, die über die komplette Länge der jeweiligen Schiene verläuft. Dabei kann die Schiene mehrteilig ausgebildet sein, und beispielsweise aus einem flexiblen Unterbau bestehen, der sich an die ebene Oberfläche des Scheinwerfereinstellplatzes anpassen kann. Des Weiteren kann auf der Oberseite eine weitere flexible Konstruktion, beispielsweise aus mehreren Gummileisten, angeordnet sein, welche die Vertiefung ausbildet bzw. beinhalten. Vor Ort, d. h. nach dem Aufkleben der Schiene auf die Oberfläche, kann die Vertiefung mit Epoxidharz ausgegossen werden. Bevorzugt wird dabei ein schnell aushärtendes Harz verwendet, sodass sofort anschließend eine Versuchsdurchführung erfolgen kann. Eine Prüfung kann demnach zeitnah bzw. im Wesentlichen direkt nach Aufbringung der Schienen erfolgen, sodass ein Sachverständiger nicht erneut vorbeikommen muss. Da das Epoxidharz nicht mit der Oberfläche des Scheinwerfereinstellplatzes in Berührung kommt, können alle Bestandteile nach Durchführung einer Prüfung einfach und schnell sowie rückstandslos entfernt werden. Dies ist insbesondere vorteilhaft im Gegensatz zu Ausgießverfahren nach dem Stand der Technik, bei welchen im Boden Vertiefungen eingebracht werden, die anschließend mit einem Harz oder Fließestrich ausgegossen werden müssen. Dieser Stand der Technik bietet insbesondere den Nachteil, dass Bauarbeiten notwendig sind, welche einen entsprechenden Zeitrahmen in Anspruch nehmen sowie dauerhafte Veränderungen am Gebäude bzw. an der Oberfläche des Scheinwerfereinstellplatzes vornehmen. Aufgrund der Größe der im Boden erzeugt Vertiefungen dauert die Aushärtung entsprechend länger, wodurch giftige Dämpfe entstehen und eine anschließende Prüfung zeitlich verzögert wird sowie höhere Kosten verursacht. Da das Scheinwerfereinstellgerät auf drei Rädern vor einem Fahrzeug auf einer gedachten Linie verschoben wird reicht es folglich aus, lediglich zwei nivellierte Schienen zu erstellen, welche die Aufstandsflächen für die bevorzugt zwei frontseitige Räder des Scheinwerfereinstellgeräts darstellen können.

Bevorzugt können die Schienen klappbar oder aufrollbar sein oder aus einzelnen zusammensteckbaren Teilen bestehen, sodass ein Sachverständiger diese mitführen und einfach transportieren kann.

Die Schiene bzw. alle ihre Bestandteile können bevorzugt in horizontaler Richtung flexibel ausgebildet sein, d. h. sich an die Oberfläche des Scheinwerfereinstellplatz anpassen, aber in vertikaler Richtung nicht komprimierbar sein. Dadurch kann sichergestellt werden, dass ein Scheinwerfereistellgerät, das über die Schienen gefahren wird, nicht in diese einsinkt, wobei dies das Messergebnis verfälschen würde.

Alternativ oder zusätzlich zum vorherig dargestellten Reparaturverfahren für den Verfahrweg eines Einstellgerätes kann im Bereich der Laufflächen eines Scheinwerfereinstellgeräts auf dem Boden Umrandungen, beispielsweise ein Rahmen aus Kunststoff oder Metall, insbesondere Aluminium angebracht werden, so dass beispielsweise 4 cm breite und ca. 3 m lange Vertiefungen bzw. Laufrinnen definiert sind. Diese Vertiefungen können beispielsweise mit Schmelzkleberkugeln (PVA) oder einer anderen schmelzfähigen Substanz befüllt werden. Idealer Weise kann diese Umrandung vor Ort verbleiben und später als seitliche Führung für das Scheinwerfereinstellgeräts dienen. Die schmelzfähige Substanz (beispielsweise ein Granulat) kann über eine gut wärmeleitfähige, bevorzugt metallische, Trennschicht bis zur Schmelze erwärmt werden. Die Trennschicht kann beispielsweise entweder ein dünner Aluminiumstreifen oder eine Aluminiumfolie sein, mit der Zielsetzung, eine exakt plane und horizontal ebene Fläche zu erzeugen. Dies kann auf unterschiedliche Arten erreicht werden. Vorzugsweise wird dazu ein Heizelement thermisch mit der Trennschicht verbunden. Bei dem Heizelement kann es sich z.B. entweder um eine Metallröhre handeln, welche mit Heißluft durchströmt wird, oder aber um eine elektrische Heizschiene mit geeigneten Abmessungen, wie sie auch in der holzverarbeitenden Industrie (z.B. bei der Furnierverarbeitung) eingesetzt werden. Diese Heizschienen sind sehr verbreitet, günstig zu beziehen, haben die notwendigen Abmessungen und Ebenheitsanforderungen und weisen zudem die für unseren Einsatz optimalen Temperaturen auf. Zum Aufschmelzen wird das Heizelement in einem geeigneten Rahmen fixiert, welcher beispielsweise mit Stellschrauben oder sogar automatisiert ein definiertes Absenken ermöglicht. Die Position des Heizelements wird beispielsweise mit Hilfe einer Wasserwaage oder einem Neigungsmesser so ausgerichtet, dass nach dem Erkalten des Heißklebers eine richtlinienkonforme, exakt horizontal ausgerichtete und ebene Lauffläche für das SEG entsteht. Um die Trennschicht während des Schmelzprozesses mit der Heizschiene formschlüssig zu verbinden existieren mehrere Möglichkeiten. Beispielsweise kann die Trennschicht in geeignetem Abstand mit Teflonband oder mit Draht an die Schiene gebunden werden. Alternativ kann die Heizschiene auch mit Alufolie umwickelt werden, wobei die Folie nach dem Schmelzvorgang auf dem Verfahrweg verbleiben kann.

Mit den vorgenannten Reparaturverfahren für die Aufstellfläche bzw. Aufstellstrecke eines Fahrzeugs, d.h. der Rollstrecke der Fahrzeugreifen und des Einstellweges eines Scheinwerfereinstellgeräts können unerwünscht unebene Flächen schnell vor Ort mit hoher Präzision nivelliert werden, ohne dass aufwändige Baumaßnahmen nötig werden.

Alle Vorteile bzw. Ausführungsformen, die bezüglich der Vorrichtung genannt werden, treffen auch für das Verfahren zu.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- **Fig. 1**: einen Teilausschnitt einer Außenansicht einer Ausführungsform einer erfindungsgemäßen Vorrichtung;
- **Fig. 2**: eine Ausführungsform eines Linienlasers;
- **Fig. 3**: eine schematische Darstellung einer Ausführungsform einer erfindungsgemäßen Vorrichtung;
- **Fig. 4**: eine schematische Darstellung einer Ausführungsform einer Dunkelkammer einer erfindungsgemäßen Vorrichtung;
- **Fig. 5**: ein weiterer Teilausschnitt eine Außenansicht einer Ausführungsform einer erfindungsgemäßen Vorrichtung;
- **Fig. 6**: eine schematische Darstellung einer Ausführungsform eines Kamerabildes;
- **Fig. 7**: eine schematische Darstellung einer Ausführungsform der messbaren Messrichtungen bezüglich einer möglichen Fahrtrichtung einer Vorrichtung;
- **Fig. 8**: eine schematische Darstellung eines Längsschnittes durch eine Ausführungsform eines Teilausschnitts einer Vermessungsvorrichtung;
- **Fig. 9**: eine schematische Darstellung eines Längsschnittes durch eine Ausführungsform einer Vermessungsvorrichtung;
- **Fig. 10**: eine schematische Darstellung einer weiteren Ausführungsform einer Vermessungsvorrichtung;
- **Fig. 11**: eine schematische Darstellung einer weiteren Ausführungsform einer Vermessungsvorrichtung;
- **Fig. 12**: eine Ausführungsform eines unebenen Projektionselements;
- **Fig. 13**: eine Darstellung eine Ausführungsform eines Kamerabildes;
- **Fig. 14**: ein Diagramm mit einer Auswertung gemessener Höhendaten in Abhängigkeit der Zeit einer möglichen Messung;
- **Fig. 15**: ein Diagramm mit einer Auswertung gemessener Höhendaten in Abhängigkeit der Strecke einer möglichen Messung;
- **Fig. 16**: ein Diagramm mit einer Auswertung eine x-Position in Abhängigkeit der zurückgelegten Strecke einer möglichen Messung;
- **Fig. 17**: eine weitere Ausführungsform einer erfindungsgemäßen Vorrichtung;
- **Fig. 18**: einen Ausschnitt der Ausführungsform aus Fig. 17;
- **Fig. 19**: maximal zulässige Abweichungen einer Prüffläche eines Scheinwerfer-Prüfstands nach der Normung;
- **Fig. 20**: eine schematische Darstellung einer geneigten Oberfläche;
- **Fig. 21a**: eine Möglichkeit der Justierung und/oder Kalibrierung der Laserebene eines Nivellierlasers;
- **Fig. 21b, c**: eine weitere Möglichkeit der Justierung und/oder Kalibrierung der Laserebene eines Linienlasers;
- **Fig. 21d**: Diagramm einer Auswertung der Nivelliermessung nach Fig. 21b und 21c;
- **Fig. 21e**: eine weitere Möglichkeit zur Ermittlung eines Neigungswinkelfehlers eines Linienlasers;

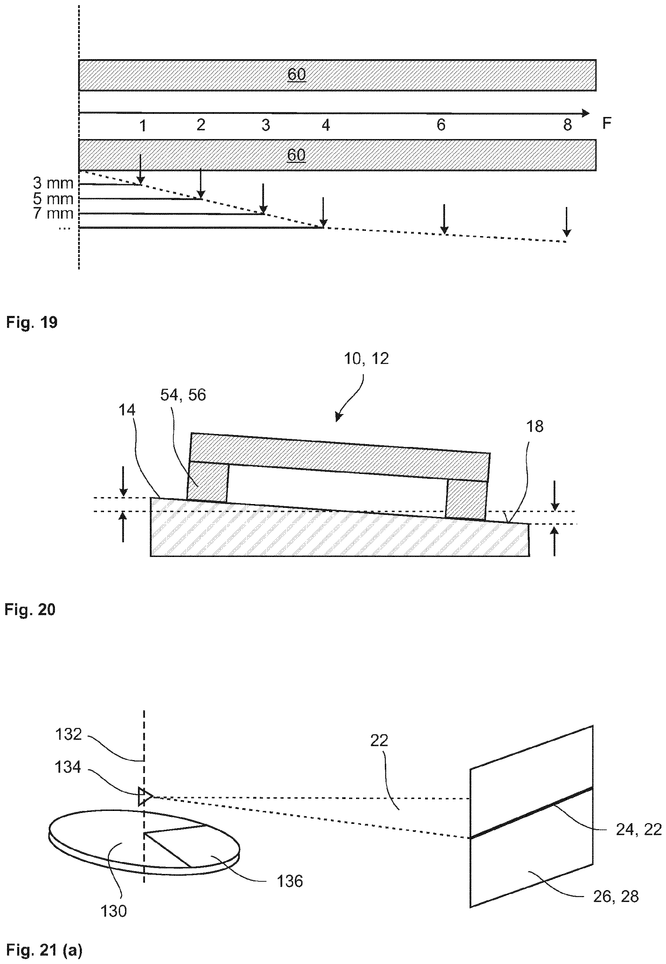

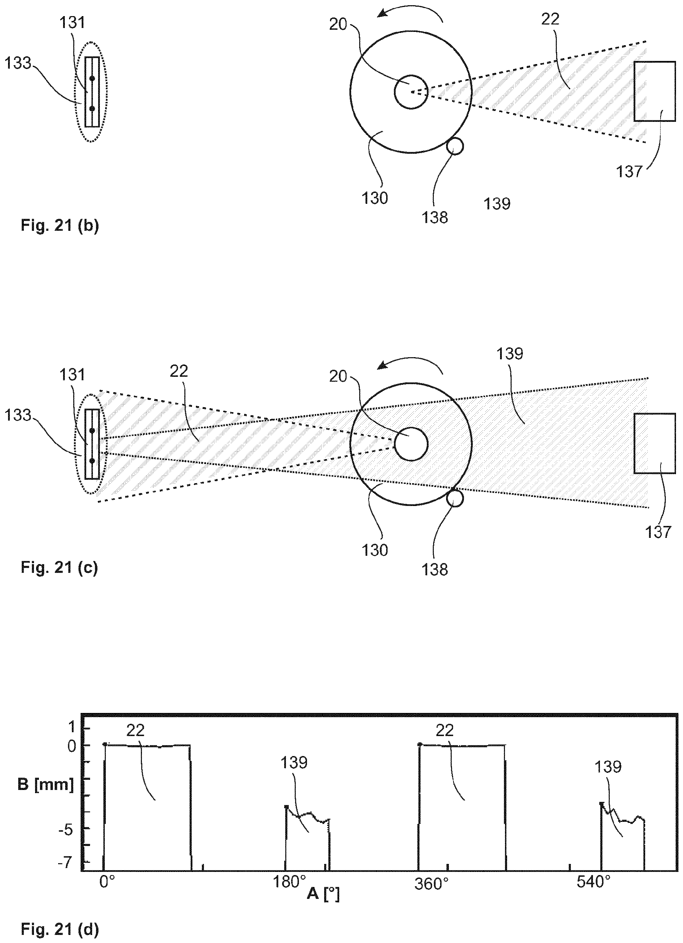

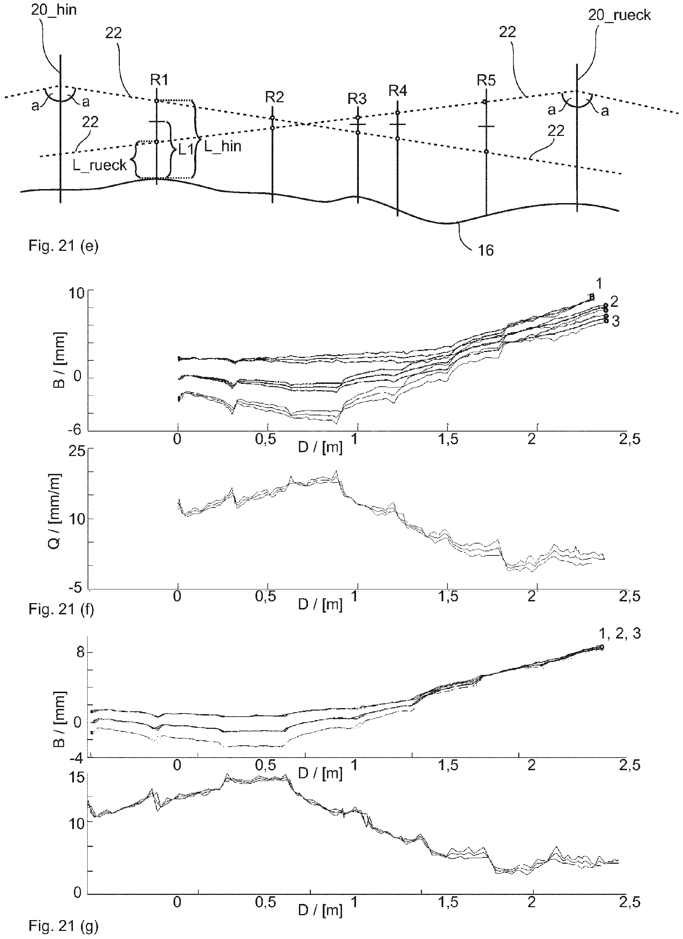

- **Fig. 21 f, g**: **vier** Diagramme mehrerer Auswertungen der Messung nach Fig. 21e;

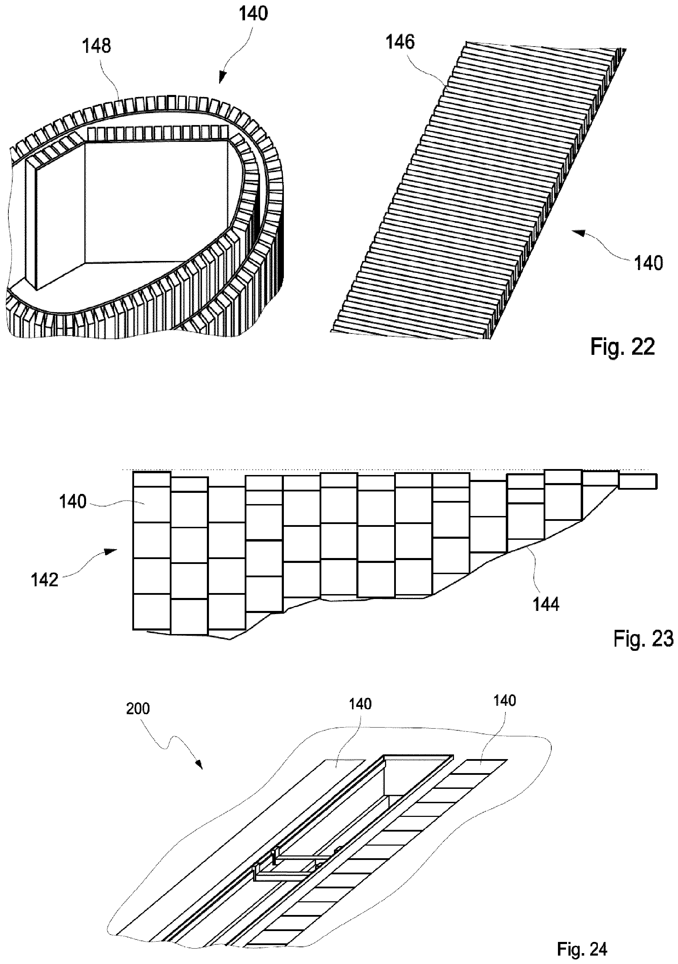

- **Fig. 22**: ein lamellenartiges Füllelement für ein Reparaturverfahren;
- **Fig. 23**: einen Querschnitt durch ein Bodenprofil mit einer Mehrzahl aufgebrachter Füllelemente;
- **Fig. 24**: einen Scheinwerfereinstellplatz mit zwei Fahrbahnen und darauf aufgebrachten Füllelementen;

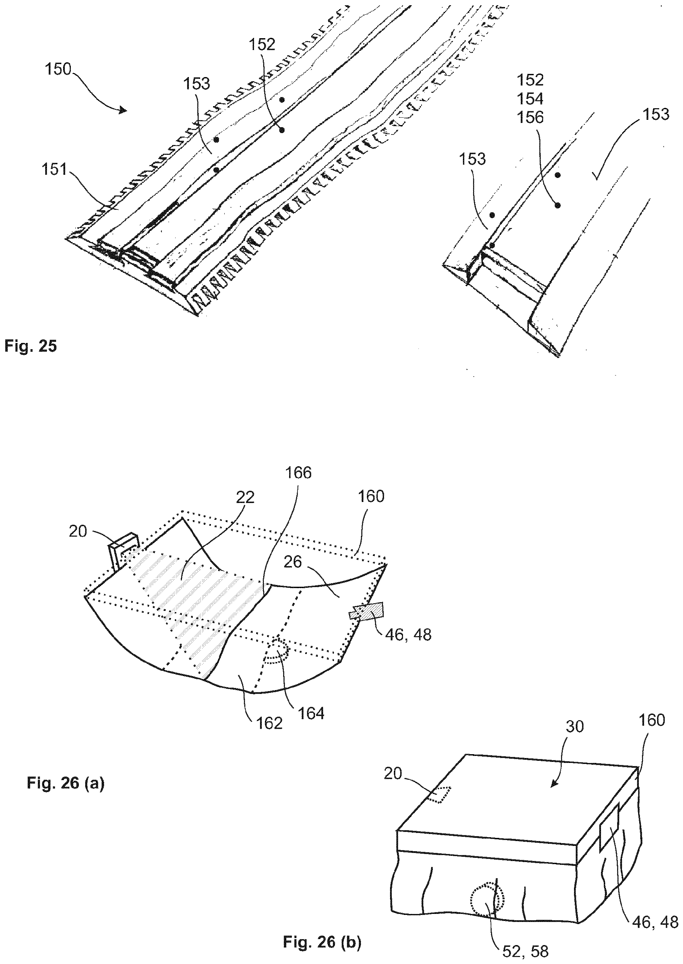

- **Fig. 25**: eine Ausführungsform einer flexiblen Bodenschiene;
- **Fig. 26**: eine weitere Ausführungsform einer erfindungsgemäßen Vermessungsvorrichtung.

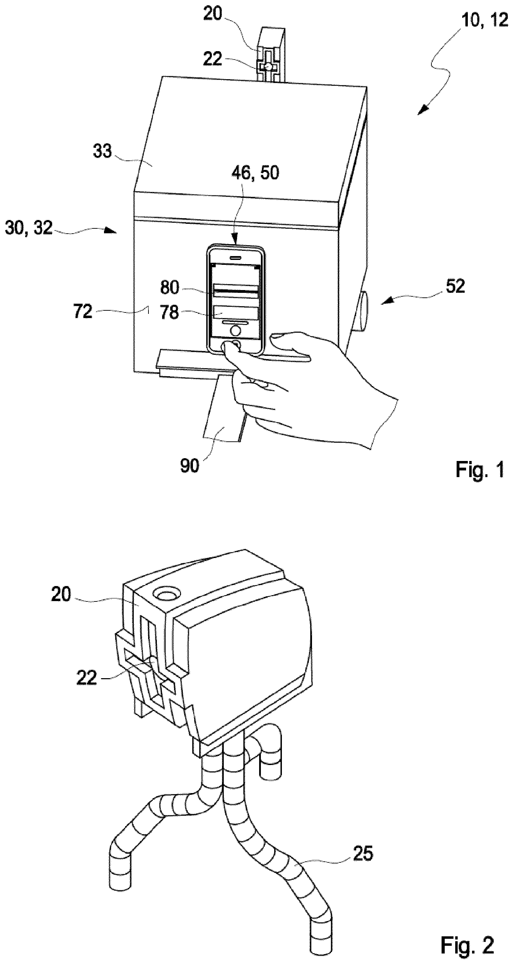

Fig. 1 zeigt einen Teilausschnitt einer Ausführungsform einer erfindungsgemäßen Vermessungsvorrichtung 10. Die Vorrichtung 10 weist eine Dunkelkammer 30 bzw. Box 32 mit einem Deckel 33 auf, wobei an der in dieser Ansicht frontseitigen Seitenfläche 72 bzw. an der vorderen Seite der Box 32 eine Kamera 46 angeordnet ist. Die Kamera 46 ist in Form eines Handys bzw. Smartphones 50 ausgebildet und außerhalb der Box 32 angeordnet. Die Kamera 46 ist auf der Unterseite auf eine Art Stützstruktur bzw. Ablage abgestützt, sodass diese auf dieser Ablage fixiert bzw. abgestützt werden kann. Auf dem Handydisplay ist dabei das von der Kamera 46 bzw. dem Smartphone 50 aufgenommene Bild dargestellt. Dabei ist sichtbar, dass im mittleren Bereich der Laserstrahl 22 des Linienlasers 20 abgebildet ist. Darunter ist zur Referenz eine Referenzanzeige 78 in Form eines Referenzkastens mit darin angeordneten Messwerten abgebildet. Die Kamera 46 kann folglich von außerhalb der Box 32 durch eine Bedienperson bedient werden. Mittig unterhalb sowie vor der Box 32 ist ein Teilabschnitt eine Deichsel 90 sichtbar, die zur Fortbewegung der Vorrichtung 10 und zur Ausbildung eines dritten Aufstandspunktes (nicht dargestellt) dient. Die Box 32 kann aus einem beliebigen Material ausgebildet sein, kann jedoch bevorzugt aus einem blickdichten Material bestehen. An der gegenüberliegenden Seite der Box bezüglich der Kamera ist im Hintergrund ein Linienlaser 20 sichtbar, der einen horizontalen Laserstrahl 22 in Form einer Laserlinie (nicht dargestellt) auf die bezüglich der Kamera 46 gegenüberliegende Seite der Box 32 projiziert. Die Box 32 kann dabei derart geneigt sein, dass der Laserstrahl 22 nicht in einer Ebene direkt auf die Kameralinse auftrifft.

In Fig. 2 ist ein Linienlaser 20 dargestellt, der auf einem Stativ 25 auf eine entsprechende Höhe ausgerichtet werden kann. Dieser Linienlaser 20 kann eine horizontale Laserlinie abgeben. Es kann beispielsweise ein Bosch PCL 20 Linienlaser bzw. Nivellierlaser zum Einsatz kommen.

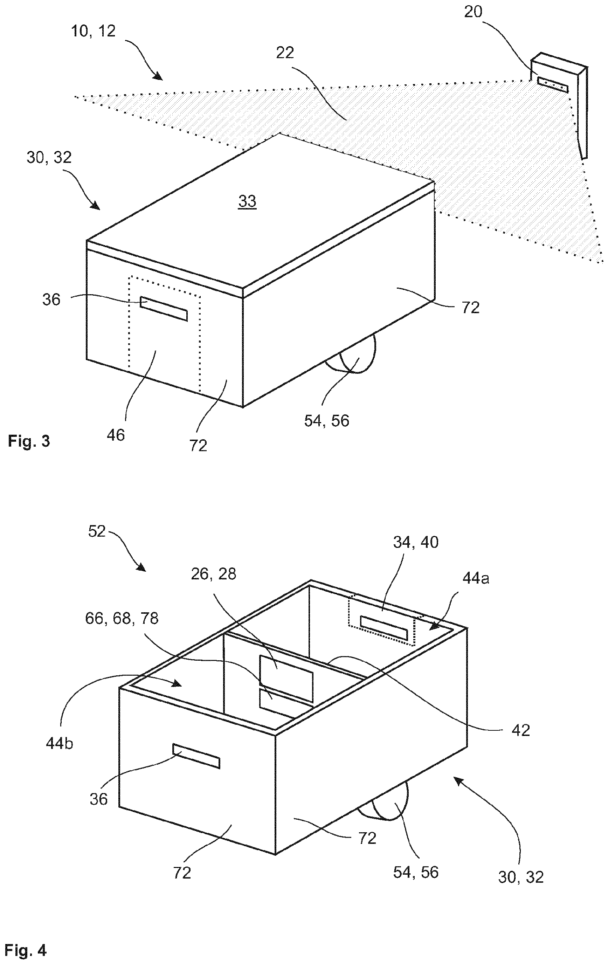

Fig. 3 zeigt eine schematische Darstellung einer Ausführungsform einer erfindungsgemäßen Vorrichtung 10. In dieser Darstellung ist die Deichsel 90 nicht abgebildet. An einer Frontseite bzw. einem Seitenabschnitt bzw. einer Seitenfläche 72 der Box ist eine zweite Aussparung 36 bzw. ein Schlitz sichtbar, der ein Durchgangsloch für die Kamera 46 bzw. die Kameralinse ausbildet. Die zweite Aussparung 36 ist daher bevorzugt in der Position angeordnet, sodass die Kamera 46 an der Unterkante der Box 32 bzw. der Dunkelkammer 30 bündig abschließt bzw. bündig aufliegt und/oder auf eine Art Abstellfläche (nicht dargestellt) abgestützt werden kann. Mit weiteren Fixierungselementen (nicht dargestellt) kann die Kamera 46 von außen an der Box 32 bzw. der Dunkelkammer 30 fixiert werden. Eine mögliche Position der Kamera 46 bzw. des Smartphones 50 ist durch eine gestrichelte Linie dargestellt. An der Unterseite der Box 32 ist eine Kufenabschnitt 54 bzw. ein Zylinderabschnitt 56 oder Räder sichtbar, der drehfest bzw. drehbar mit der Box 32 fixiert ist. Auf der der Kamera 46 gegenüberliegenden Seite der Box ist ein Linienlaser 20 angeordnet, der eine horizontale Laserlinie bzw. einen horizontalen Laserstrahl 22 in Richtung einer weiteren Seite bzw. einer weiteren Seitenfläche 72 der Box 32 ausstrahlt. Der Linienlaser 20 ist dabei unbeweglich auf der Unterlage fixiert bzw. abgestellt, während die Box eine Verfahreinheit 52 ausbildet, die von dem Laser 20 weg bzw. zu dem Laser 20 hin bewegt werden kann.

In Fig. 4 ist eine weitere Ausführungsform einer erfindungsgemäßen Vorrichtung 10 dargestellt, wobei in dieser Darstellung die Box 32 bzw. die Dunkelkammer 30 ohne Deckel 33 gezeigt ist. Das Innern der Box 32 ist als eine Art Dunkelkammer ausgebildet, die durch eine Trennebene 42, in welche ein Bildschirm 66 bzw. Display 68 sowie ein Projektionselement 26 angeordnet ist, in zwei Kammerbereiche 44a, 44b aufgeteilt wird. Dadurch entstehen zwei voneinander getrennte Dunkelkammern, wobei in der ersten und zweiten Dunkelkammer eine erste bzw. zweite Aussparung 34, 36 bzw. ein Schlitz 40 für den Laserstrahl 22 angeordnet sind. In der Darstellung sind zwei Varianten dargestellt, wobei eine Aussparung 34 durch eine gestrichelte Linie dargestellt ist. In dem zweiten Kammerbereich 44b ist ebenso eine Aussparung 36 erkennbar, welche jedoch durch die Kameralinse bzw. die Kamera (nicht dargestellt) von außen abgedeckt wird. Mit dieser Kamera kann der Bildschirm 66 bzw. das Display 68 im Bereich der Trennebene 42 sowie die darin angeordnete Referenzanzeige 78 aufgenommen werden. Als Referenz kann beispielsweise zumindest ein Referenzpunkt, zumindest eine Referenzlinie oder auch zumindest ein Referenzkasten dienen. Durch die Abstände der Trennebene 42 zu der Kameralinse sowie die kamerainternen Kennwerte und die Größe der Referenzanzeige 78 kann eine genaue Ermittlung der Messwerte erfolgen. Desweiteren liegt das Projektionselement 26 im Bereich des Kamerabildes.

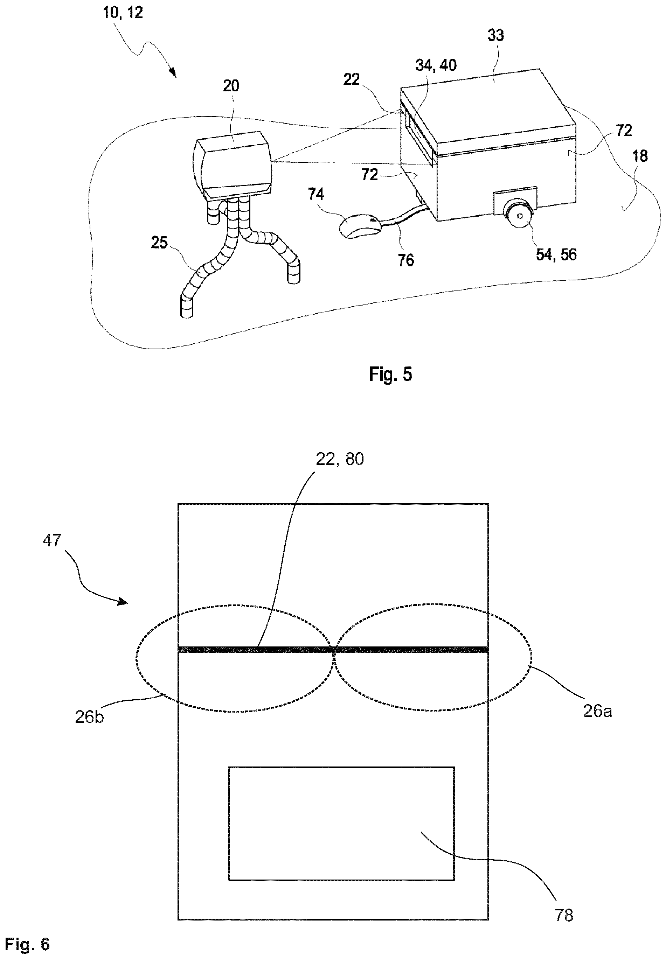

Fig. 5 zeigt einen weiteren Teilausschnitt einer Ausführungsform einer erfindungsgemäßen Vorrichtung 10. In dieser Darstellung ist die Seite bzw. die Seitenfläche 72 der Box sichtbar, die in Richtung Linienlaser 20 orientiert ist. Es ist erkennbar, dass der Laserstrahl 22 im Bereich der ersten Aussparung 34 in die Box 32 eintritt und außerhalb der ersten Aussparung 34 in dieser Höhe an der Außenseite der Box sichtbar ist. Die Box wird über zwei nicht drehbar fixierte Kufenabschnitte 54 bzw. Zylinderabschnitte 56 oder alternativ über Räder mit dem zu vermessenen Boden kontaktiert. Mittig zwischen diesen beiden Kufenabschnitten 54 bzw. Zylinderabschnitten 56 oder Räder ist eine Computermaus 74 angeordnet, die über eine Blattfeder 76 in einem gewünschten Abstand fixiert und auf die zu vermessende Oberfläche 18 gedrückt wird. Die Computermaus 74 dient als Wegaufnahmeeinheit bzw. Wegsensor 70 um die zurückgelegte Strecke 60 zu messen und an das Display 68 auszugeben.

Eine Ausführungsform eines Kamerabildes 47 zeigt Fig. 6. Im oberen Bereich ist die Laserlinie bzw. der Laserstrahl 22 dargestellt als aufgenommene Laserlinie 80, welche im Folgenden beispielsweise bezüglich zweier Bereiche 26a, 26b ausgewertet werden kann. Im unteren Bereich des Kamerabildes ist die Referenzanzeige 78 in Form eines Referenzkastens dargestellt. Da die Lage des Referenzkastens innerhalb des Kamerabildes 47 genau bekannt ist, kann die Lageänderung eines gewissen Laserlinienabschnittes bezüglich dieses Referenzkastens ausgewertet werden. In dieser Ausführungsform wird beispielsweise eine rechte sowie linke Auswertung durchgeführt, wobei jeweils die Hälfte der Laserlinie integral ausgewertet wird. Dadurch kann eine Zuordnung zu einem rechten bzw. linken Kufenabschnitt 54 bzw. zu einem rechten oder linken Zylinderabschnitt 56 erfolgen. Es wäre ebenso denkbar, die Laserlinie 80 virtuell in mehrere derartige Abschnitte bzw. Bereiche 26a, ..., 26i zu unterteilen und an mehreren bzw. abweichenden Abschnitten auszuwerten.

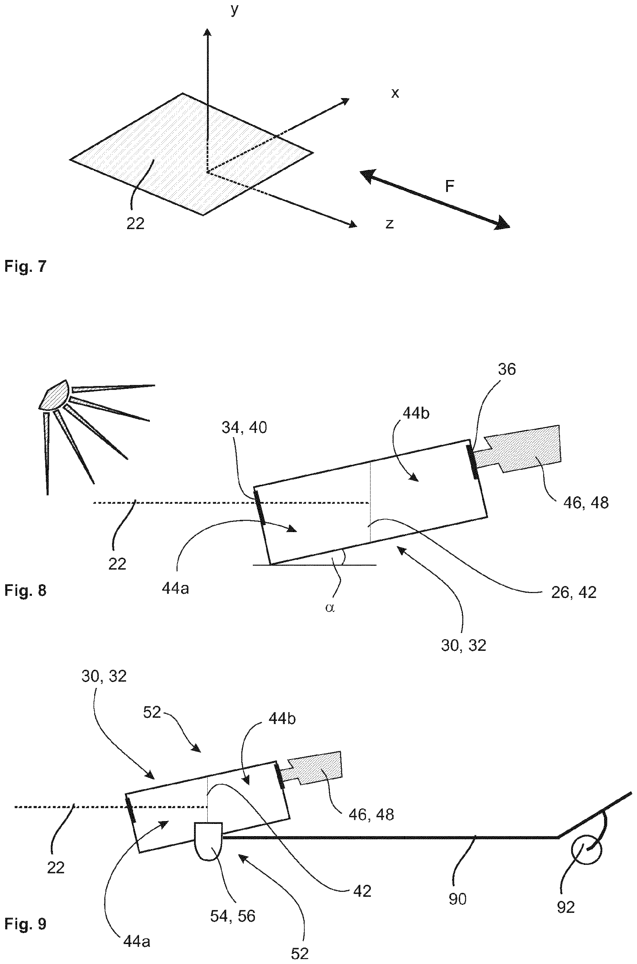

Fig. 7 zeigt eine Zuordnung eines Koordinatensystems zu einer Fahrtrichtung F der Vorrichtung 10 bzw. eines Vermessungsverfahrens 100. Die Vorrichtung 10 bewegt sich folglich in z-Richtung, während eine Abweichung der Messwerte in x- sowie in y-Richtung ausgewertet werden kann, um die Ebenheit einer Oberfläche 18 zu bestimmen können so Unebenheiten 16 sowie Neigungen 14 ermittelt werden. Zur Ermittlung der Messgrößen wird die zurückgelegte Strecke 60 über die Computermaus 74 sowie die Lage der Laserlinie 80 bezüglich einer Referenzanzeige 78 über die Zeit ausgewertet.

Fig. 8 zeigt eine schematische Darstellung eines Längsschnittes durch eine Ausführungsform eines Teilausschnitts einer erfindungsgemäßen Vermessungsvorrichtung 10. die Vermessungsvorrichtung 10 weist in dieser Ausführungsform eine Dunkelkammer 30 in Form einer im Längsschnitt länglichen Box 32 auf. Im Innern der Box ist mittig eine Trennebene 42 angeordnet, sodass die Dunkelkammer 30 in zwei Kammern 44 aufgeteilt wird. Ein erster Kammerbereich 44 a weist eine erste Aussparung 34 in Form eines Schlitzes 40 auf, durch welche ein Laserstrahl 22 in das Innere der Dunkelkammer gelangen kann. Im Inneren der Dunkelkammer trifft der Laserstrahl 22 auf die Trennebene 42, auf der ein Projektionselement 26 angeordnet ist. Ein zweiter Kammerbereich 44b weist eine zweite Aussparung 36 auf, durch welche eine Kamera 46, in dieser Ausführungsform in Form einer Videokamera 48 das Innere der Dunkelkammer aufnehmen kann. Die Vermessungsvorrichtung 10 beruht in dieser Ausführungsform auf einem 2-Dunkelkammerprinzip. Der Laserstrahl 22 gelangt durch eine erste Aussparung 34 in das Innere des ersten Kammerbereich 44a und trifft dort auf das Projektionselement 26, auf welchem eine waagrechte Linie erscheint. Die Kamera filmt durch die zweite Aussparung 36 in dem zweiten Kammerbereich 44b den auf dem Projektionselement 26 projizierte Laserstrahl 22, der als eine horizontale Laserlinie 80 ausgebildet ist. Die Dunkelkammer 30 bzw. die Box 32 kann um einen Winkel α bezüglich einer horizontalen gekippt angeordnet werden, sodass die Kamera 46 nicht direkt auf den Laserstrahl 22 bzw. eine Sonneneinstrahlung durch die erste Aussparung 34 gerichtet ist. Bevorzugt liegen daher die erste Aussparung 34 sowie die zweite Aussparung 36 während dem Betrieb der Vermessungsvorrichtung nicht ausgerichtet auf einer horizontalen, sodass die Kamera 46 so wenig wie möglich geblendet wird.

Fig. 9 zeigt eine Ausführungsform einer erfindungsgemäßen Vermessungsvorrichtung 10 mit einer Verfahreinheit 52 die Kufenabschnitte 54 umfasst. Vorteilhafterweise sind die beiden Kufenabschnitte 54 als eine Art Querkufen ausgebildet und unter dem Projektionselement 26 angeordnet. Zur Ausbildung eines dritten Auflagerpunktes, sodass die Verfahreinheit 52 verkippsicher auf eine Oberfläche 18 abgestellt werden kann, ist eine Deichsel 90 sowie ein Rad 92 in Fahrtrichtung vor dem Projektionselement 26 angeordnet. Bevorzugt sind die Deichsel 90 sowie das Rad 92 auf einer Mittelachse bezüglich einer Längsrichtung der Vermessungsvorrichtung 10 angeordnet. Die Deichsel 90 sowie das Rad 92 sind folglich bevorzugt auf der Symmetrieebene in Längsrichtung der Vermessungsvorrichtung 10 angeordnet. So kann ein verkippsicherer Stand gewährleistet werden. In der Darstellung sind die Kufenabschnitte 54 derart dargestellt, dass diese in das Innere der Dunkelkammer 30 hineinragen. Bevorzugt sind die Kufenabschnitte 54 jedoch außerhalb bzw. unterhalb der Dunkelkammer 30 angeordnet. In den Figs. 9 bis 11 kann diese Darstellung so interpretiert werden, dass die Kufenabschnitte 54 nicht im Längsschnitt bezüglich einer Symmetrieachse der Vermessungsvorrichtung 10 dargestellt sind, sondern in einer Außenansicht bzw. Seitenansicht. In den weiteren Ausführungen entspricht die Ausführungsform aus Fig. 9 der aus Fig. 8.

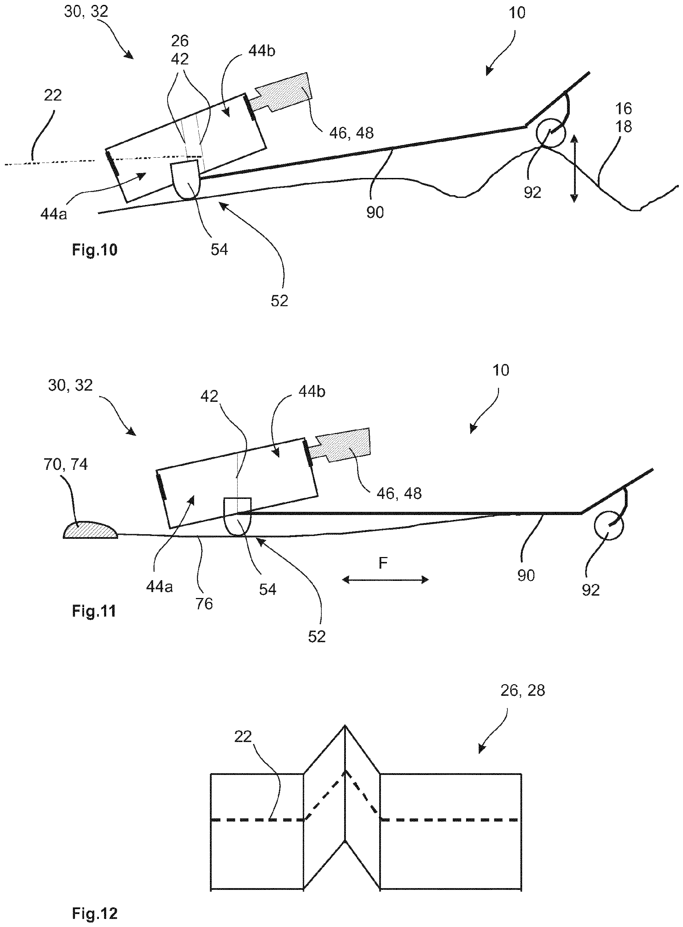

In Fig. 10 ist eine schematische Darstellung einer weiteren Ausführungsform einer Vermessungsvorrichtung 10 dargestellt. Diese umfasst zwei Trennebenen 42, auf der jeweils ein Projektionselement 26 angeordnet ist. Die Darstellung zeigt die Vermessungsvorrichtung 10 angeordnet auf einer ebenen Oberfläche 18. Beim Überfahren der Unebenheiten 16 bleibt eine Unebenheit 16 auf Höhe des Rades 92 ohne Einfluss auf die Messung, wenn die Deichsel 90 eine genügende Länge aufweist. Das Rad 92 ist bevorzugt als drehbares Rad ausgebildet, damit die Vermessungsvorrichtung 10 optimal entlang einer Fahrspur bzw. einer zu vermessenen Strecke 60 gezogen oder gefahren werden kann. Dabei hat eine Unrundheit dieses Rades 92 einen vernachlässigbaren Einfluss auf die Messung, da es sehr weit von der Projektionsebene entfernt ist. In dieser Ausführung ist das Rad 92 an einer schwenkbaren Gabel mit ausreichendem Nachlauf angeordnet, damit die Vermessungsvorrichtung 10 bestrebt ist, geradeaus zu laufen. Mit den zwei hintereinanderliegenden Projektionselement 26 kann dennoch die Neigung der Vermessungsvorrichtung 10 in Fahrtrichtung gemessen werden, wodurch die ermittelten Höhenmesswerte korrigiert werden können. Dabei werden die relativen Abweichungen des Laserstrahls 22 bezüglich der Abbildung auf den beiden Projektionselement 26 relativ zueinander ausgewertet. Folglich kann zusätzlich zu der Schrägstellung der Vermessungsvorrichtung 10 auf Höhe der Kufenabschnitte 54 in Querrichtung eine Schrägstellung der Vermessungsvorrichtung 10 in Längsrichtung gemessen und aufgezeichnet werden.

Fig. 11 zeigt eine schematische Darstellung einer weiteren Ausführungsform einer Vermessungsvorrichtung 10. diese weist einen Wegsensor 70 in Form einer Computermaus 74 auf. Die Computermaus 74 wird über eine Blattfeder 76 auf die zu vermessende Oberfläche 18 (nicht dargestellt) während des Messvorgangs gedrückt. Dadurch kann mit der Vermessungsvorrichtung 10 ebenso über scharfkantige Absätze bzw. Fugen gefahren werden, ohne dass ich der Wegsensor 70 verhakt. Während des Messvorgangs vermisst die Computermaus 74 den zurückgelegten Weg und blendet die gemessenen Daten auf einem Bildschirm 66 oder einem Display 68 (nicht dargestellt bzw. in dieser Ansicht nicht sichtbar) ein. Die Blattfeder 76 ist in dieser Ausführungsform an der Deichsel 90 fixiert. Dadurch kann sichergestellt werden, dass der Wegsensor 70 ebenso auf der Symmetrieebene bezüglich der Längsrichtung der Vermessungsvorrichtung 10 angeordnet ist. Der Wegsensor 70 kann dabei an einer beliebigen Position angeordnet werden, beispielsweise unterhalb der Dunkelkammer 30 sowie auch vor oder hinter der Dunkelkammer 30 angeordnet werden.

In Fig. 12 ist eine Ausführungsform eines unebenen Projektionselements 26 dargestellt. In dieser Ausführungsform weist das Projektionselement 26 eine Abweichung in Form eines dreifachen Knicks auf, sodass das Projektionselement 26 teilweise eine Dreiecksform ausbildet. Das Positionselement 26 kann ebenso andersartig abgewinkelt oder auch gewirkt ausgebildet sein. Ein Laserstrahl 22, der auf ein derart abgewinkeltes Projektionselement 26 auftrifft, wird ebenso umgeknickt abgebildet. Die Position bzw. Lage dieses Laserstrahls 22 ändert sich, wenn das Projektionselement 26 aus einer ursprünglichen Ebene, d. h. aus einer Startebene, ausgelenkt wird. Über trigonometrische Zusammenhänge kann auf die Neigung des Projektionselements 26 rückgeschlossen werden, wodurch auf die Neigung der Vermessungsvorrichtung 10 rückgeschlossen werden kann.

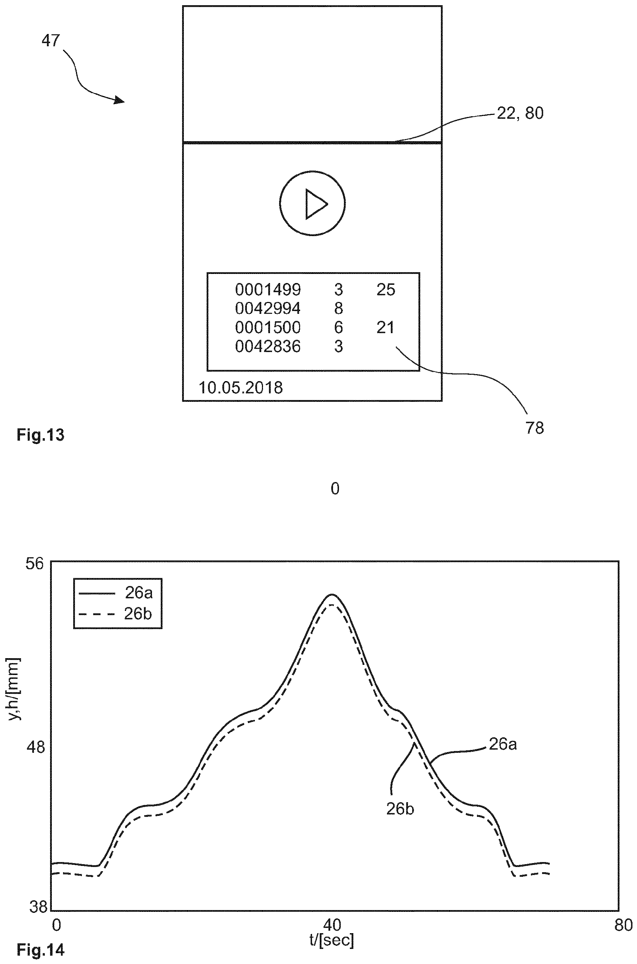

Eine Ausführungsform eines Kamerabildes 47 ist in Fig. 13 dargestellt. Das Kamerabild 47 zeigt den Laserstrahl 22 in Form eine horizontale Linie, die durch das Kamerabild als aufgenommene Laserlinie 80 dargestellt ist. Das Kamerabild 47 in Fig. 13 kann beispielsweise auf einem Display eines Smartphones 50 dargestellt werden, das über eine Touchfunktion bedient werden kann. Im unteren Bereich des Kamerabild 47 sind innerhalb einer Referenzanzeige 78, die in Form eines Referenzkastens bzw. Referenzrechtecks als Referenzobjekt dargestellt ist, alle Kalibrierdaten, d. h. alle Messdaten, insbesondere die Lage der Laserlinie 80 sowie die Positionsdaten eines Wegsensors 70 sind in Abhängigkeit der Zeit dargestellt. Dabei sind die Positionen und Zeitpunkte, an welchen die Daten innerhalb der Referenzanzeige 78 abgebildet werden, bekannt. Über eine Auswertesoftware, die auf einem Computer oder Servern läuft, kann über die Verarbeitung dieser Filmdatei, d. h. über eine Bildverarbeitung, ein Höhenprofil in Abhängigkeit der x- und y-Position erstellt werden. Dadurch entfällt die Installation einer komplexen Software auf einem mobilen Endgerät. Gleichzeitig wird durch die bekannte Abmessung des Referenzkastens eine automatische Kamerakalibrierung bereitgestellt, wobei lediglich eine Videosequenz, die alle erforderlichen Kalibrierdaten umfasst, simultan oder nachträglich, aufgezeichnet wird.

Die Fig. 14 - 16 zeigen mögliche Beispiele unterschiedlicher Messprotokolle. Die Beispiele zeigen Messungen für beliebige Oberflächen die zu Testzwecken untersucht wurden und dienen lediglich zur Demonstration.

In Fig. 14 ist ein Diagramm mit einer Auswertung gemessener Höhendaten in Abhängigkeit der Zeit einer möglichen Messung dargestellt. Das Diagramm zeigt eine Auswertung für je einen ersten Bereich 26a bzw. einen zweiten Bereich 26b eines Laserstrahls 22 wie in Fig. 6 dargestellt. Im vorliegenden Fall wurde an einem Umkehrpunkt die Vermessungsvorrichtung 10 wieder zurück zur Ausgangsposition A1 bewegt. Der Umkehrpunkt ist als Peak in dem Diagramm erkennbar. Es ist erkennbar, dass auf dem Rückweg nach dem Umkehrpunkt die Messung etwas beschleunigt durchgeführt wurde. Bei dieser Messung wurde beliebig auf einem Untergrund eine Fahrstrecke gewählt, wobei auch leichte Abweichungen bezüglich des Hinwegs sowie des Rückwegs vorliegen.

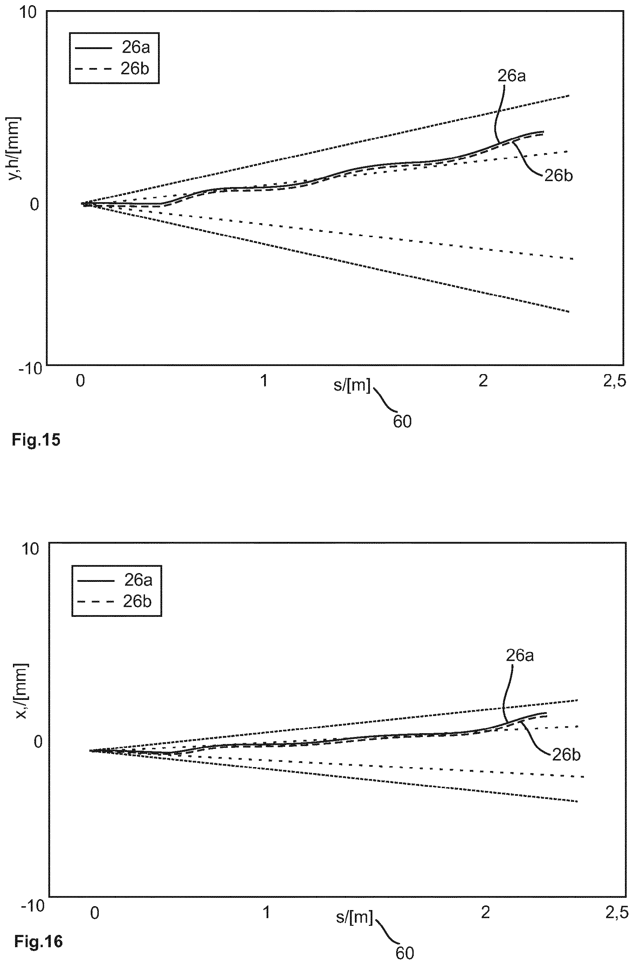

Fig. 15 zeigt ein Diagramm mit einer Auswertung gemessener Höhendaten in Abhängigkeit der zurückgelegten Strecke 60 einer möglichen Messung mit einer Vermessungsvorrichtung 10. In diesem Diagramm sind die Toleranzgrenzen nach der "Richtlinie für die Überprüfung der Einstellung der Scheinwerfer von Kraftfahrzeugen bei der Hauptuntersuchung nach § 29 StVZO" eingezeichnet. Für die beliebig ausgewählte Oberfläche 18 zeigt sich, dass bis ungefähr der Hälfte der zurückgelegten Strecke 60 diese beliebige Oberfläche 18 innerhalb der Toleranzgrenzen liegt. Für die Messung wurde vor dem Start die Höhendifferenz des Bodens auf den Startwert Null gesetzt.

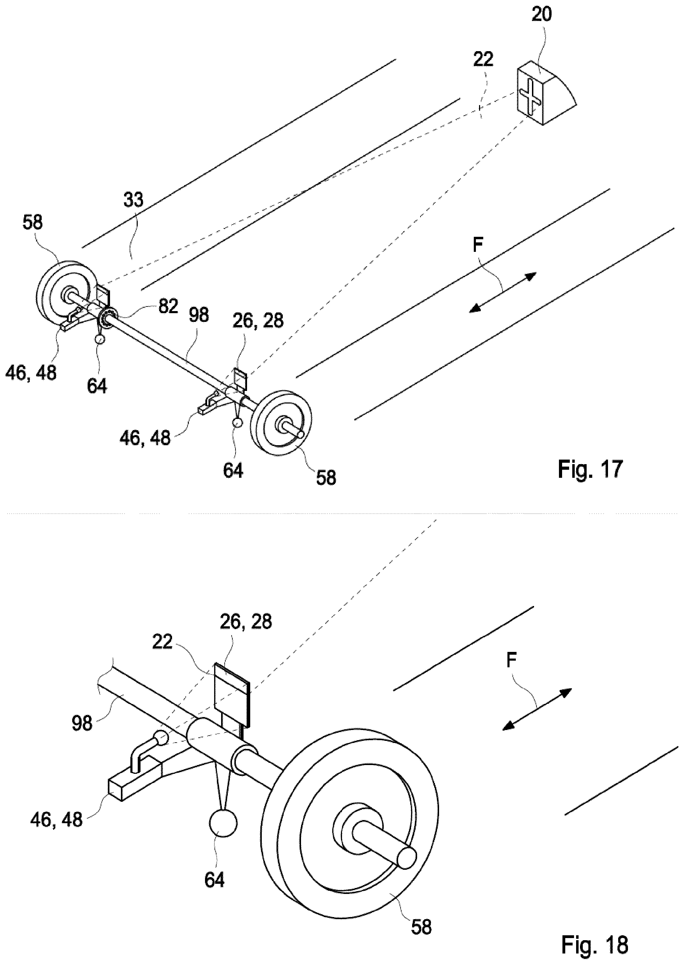

In Fig. 16 ist ein Diagramm mit einer Auswertung eine x-Position in Abhängigkeit der zurückgelegten Strecke 60 der Messung nach Fig. 17 gezeigt. Diese x-Position stellt die Abweichung im Wesentlichen 90° zur Fahrtrichtung F entlang der Strecke 60 dar. Die Toleranzgrenzen sind wie in Figs. 17 gemäß der Richtlinie eingezeichnet. Folglich kann auch die zurückgelegte Strecke 60 daraufhin überprüft werden, ob diese auf einer geraden oder einer Kurve erfolgte, falls auf der Oberfläche 18 keine Markierung zur Kennzeichnung der zu vermessenden Strecke 60 angebracht wird.

Die Figs. 17 und 18 zeigen eine weitere Ausführungsform einer erfindungsgemäßen Vorrichtung 10. Zwei Räder werden mit einer Verbindungsstange 98 fest verbunden, so dass sich die Spurbreite ergibt. Zwischen den Rädern befinden sich zwei Pendellager, welche mit einem schweren Pendel 64 nach unten gezogen werden. An diesen Lagern wird ein Projektionselement 26 angebracht, so dass sie lotrecht zur Horizontalen stehen. An dieser pendelnden Vorrichtung wird zusätzlich eine Kamera 46 angebracht, welche das Projektionselement 26 von hinten filmt. Die gesamte Apparatur kann nun entlang der Prüfstraße gezogen werden. Mit einem Winkeldrehgeber, z. B. Lochscheibe 82 und Gabellichtschranke, kann die zurückgelegte Strecke gemessen werden. Zeitgleich wird die jeweilige Position der Laserlinenebene 24 auf dem Projektionselement 26 gefilmt und mit Hilfe optischer Bildbearbeitung in eine Höheninformation umgerechnet. So kann ein exaktes Abbild der Prüfstrecke inklusive lokaler Steigung bzw. Neigungen und aller Unebenheiten für beide Fahrspuren berechnet werden. Auch für diese Ausführungsform sind die Merkmale der zuvor gezeigten Ausführungsformen denkbar.

Fig. 19 zeigt eine schematische Darstellung auf eine Aufstellfläche eines Scheinwerfer-Prüfstandes für zweispurige Fahrzeuge. Diese besteht aus zwei Fahrspuren. Diese beiden Fahrspuren bestehen jeweils aus einer separaten Fläche. Die Größe, Lage und Kennzeichnung dieser beiden Flächen müssen nach der Richtlinie gemäß § 29 StVZO den Abmessungen bzw. Toleranz nach Fig. 20 entsprechen. Nach der Richtlinie liegt folglich eine zulässige Toleranz auf einer Länge von 2 m bei 5 mm. Dabei kann die Abweichung von 0 mm bis 5 mm liegen oder zwischen -2,5 mm und +2,5 mm. Die Einhaltung dieser genannten Toleranzen, die auf nationale oder internationale Normen rückführbar sind, kann mit einer Vermessungsvorrichtung 10 sichergestellt werden. Für die Messung derartiger Toleranzen sind Prüfmittel mit einer Genauigkeit von mindestens 0,2 mm/m erforderlich, was die Vermessungsvorrichtung 10 erfüllt.

In Fig. 20 ist eine schematische Darstellung eines Querschnitts einer Vermessungsvorrichtung 10 bzw. Oberflächenvermessungsvorrichtung 12 auf einer geneigten Oberfläche 18 dargestellt. Eine derartige Neigung 14 kann beispielsweise auf einer Fahrspur nach Fig. 19 auftreten. Folglich kann die Vermessungsvorrichtung 10 entlang einer Fahrspur bewegt werden, wobei beide Kufenabschnitte 54 bzw. beide Zylinderabschnitte 56 mit derselben Fahrspur, d. h. einer Fahrspur, in Kontakt kommen. Es wäre ebenso denkbar eine Vermessungsvorrichtung 10 in einer derartigen Größe auszubilden, dass beide Fahrspuren bereits bei einer Messung mit je einem Kufenabschnitt 54 bzw. mit je einem Zylinderabschnitt 56 in Kontakt kommen. Die Neigung 14 darf nach der Richtlinie maximal 1,5 % betragen und muss für beide Bahnen gleichgerichtet sein. Die exakte Messung der Neigung 14 kann beispielsweise dazu verwendet werden, den Verfahrweg von Scheinwerfereinstellgeräten zu vermessen. Dieser Fahrweg verläuft beim Scheinwerfereinstellplatz an der Frontseite senkrecht zu den beiden Fahrspuren. Die maximale Neigungsänderung darf über den gesamten Verfahrweg des Scheinwerfereinstellgerätes laut Richtlinie um max. +/-1mm/m variieren. Der Abstand zwischen den Kufenabschnitten 54 bzw. beide Zylinderabschnitten 56 kann variabel eingestellt werden, so dass die Vermessungsvorrichtung 10 an die Spurweite des Scheinwerfereinstellgeräts angepasst werden kann.

Fig. 21a zeigt eine Ausführungsform einer Möglichkeit der Justierung und/oder Kalibrierung eines Nivellierlasers bzw. Linienlasers 20 nach einer ersten Variante, wie oben beschrieben. Ein Linienlaser 20 wird dabei auf einem Drehteller 130 bzw. einer Drehscheibe auf der Drehachse 132 derart positioniert, dass die Laserdiode 134 auf dem Drehpunkt, d. h. auf der Drehachse 132 des Drehtellers 130, angeordnet ist. In einer derartigen Anordnung kann der Linienlaser 20 in einem Abstand von beispielsweise 1,5 m bis 2,5 m von der Vermessungsvorrichtung 10 mit einem Projektionselement 26 sowie bevorzugt mit einer Kamera 46 (nicht dargestellt) positioniert werden. Ein zu untersuchender Drehwinkelbereich 136 kann über eine geeignete Vorrichtung ausgelesen werden. Diese kann beispielsweise aus einer Computermaus (nicht dargestellt) gebildet werden. Im Falle einer Kalibrierung muss lediglich sichergestellt werden, dass die Position der Laserlinienebene 24 bzw. des Laserstrahls 22 auf dem Projektionselement 26 während einer Änderung des Drehwinkels im Bereich des zu untersuchenden Bereichs 136 nahezu konstant ist. Im Falle einer Justierung wird diese bevorzugt direkt vor Beginn der Vermessung einer Oberfläche 18 bzw. eine zu vermessenden Strecke 60 durchgeführt, sodass die Kamera 46 der Vermessungsvorrichtung 10 die Phase der Justierung direkt vor Beginn der Messung auf derselben Kameradatei bzw. Videodateien aufnehmen kann. Eine eventuell weiterhin vorhandene Fehlstellung des Linienlasers 20 im Laufe der Messung kann nachträglich aus den Messdaten kompensiert werden.

Fig. 21b und 21c zeigen eine weitere Möglichkeit der Justierung und/oder Kalibrierung der Laserebene eines Linienlasers 20 nach einer weiteren Variante. Die beiden Darstellungen zeigen eine Anordnung in einer schematischen Draufsicht. Der Linienlaser 20 wird dabei auf einem Drehteller 130 mittig auf der Drehachse 132 derart positioniert, dass die Laserdiode 134 auf dem Drehpunkt, d. h. auf der Drehachse 132 des Drehtellers 130, der über einen Motor 138 angetrieben wird, angeordnet ist.. Im rechten Bereich der Darstellung ist ein Detektor 137 angeordnet, im linken Bereich ein Reflektor 131. Der Reflektor 131 kann beispielsweise aus zwei baugleichen Spiegeln bestehen, welche rückseitig an einer dünnen, langen Drahtschlaufe befestigt sind. Dadurch kann ein zu erwartender Fehler zur Lotrechten effektiv minimiert werden. An den Reflektor 131 bzw. die beiden baugleichen Spiegel ist in dieser Ausführungsform ein Gewicht unterhalb angeordnet (nicht sichtbar), welches in einer Flüssigkeit 133 zur Dämpfung gelagert ist. Die Abstände zwischen den Reflektor 133 sowie dem Laser 20 bzw. dem Laser 20 und dem Detektor 137 sind bevorzugt unterschiedlich groß ausgebildet. Die Darstellungen zeigen die Anordnung lediglich schematisch, wodurch diese Abstände, d. h. insbesondere der Abstand zwischen dem Laser 20 und dem Reflektor 131, verkürzt dargestellt sind. In der Darstellung in Fig. 21b zeigt der Laser 20 auf den Detektor 137, wodurch der Laserstrahl 22 direkt auf den Detektor 137 als Direktstrahl ausgerichtet ist auf diesen auftrifft. In der Darstellung in Fig. 21c ist der Laser 20 auf dem Drehtellers 130 derart rotiert, dass der Laserstrahl 22 auf den Reflektor 131 ausgerichtet ist. Der Laserstrahl 22 wird folglich am Reflektor 131 reflektiert, wobei ein reflektierter Laserstrahl 139 schließlich auf den Detektor 137 auftrifft. Die zurückgelegte Strecke dieses reflektierten Laserstrahls 139 ist um ein Vielfaches länger als bei einem Direktstrahl.

Aus den eben beschriebenen unterschiedlichen Längen des Laserstrahls 22 bzw. des reflektierten Laserstrahls 139 sowie den Abständen zwischen den Reflektor 131, dem Laser 20 sowie dem Detektor 137 kann schließlich eine Kalibrierung des Lasers 20 erfolgen. Fig. 21d zeigt ein Diagramm einer Auswertung der Nivelliermessung bzw. Kalibriermessung mit einer Variante des Verfahrens nach Fig. 21b und 21c. Dabei ist die Höhe B in mm des Laserstrahls am Detektor als Funktion des Rotationswinkels A in Grad dargestellt. Aus den Werten des Laserstrahls 22 bzw. des reflektierten Laserstrahls 139 kann dabei eine Steigerung des Lasers 20 ermittelt werden. In diesem Beispiel könnte diese beispielsweise, 0,22 mm/m betragen.

Fig. 21e zeigt eine weitere Möglichkeit, den Neigungswinkelfehler β eines verwendeten Linienlasers 20 zu ermitteln. Anschließend kann der ermittelte Neigungswinkelfehler β verwendet werden, um das Messergebnis zu korrigieren. Das Verfahren ermöglicht es insbesondere, DAkkS-konforme Messungen mit unkalibrierten Linienlasern, beispielsweise gewöhnlichen Baumarktlasern, durchzuführen. Die Präzision solcher Messungen kann im Vergleich zu bekannten Verfahren deutlich verbessert werden, obwohl ein derartiger nivellierter Laser starke Abweichungen zu Horizontalen aufweist. Wie in Fig. 21 (e) dargestellt, können dazu mehrere auf einer Linie liegende Messpunkte R1 bis R5 verwendet werden. Insbesondere sind mindestens zwei unterschiedliche, sowie auf einer Linie liegende Messpunkte R1, R2 erforderlich. An diesen Messpunkten R1, ..., R5 wird in einer Hinwärts-Messung die lotrechte Höhe, d. h. der Abstand L_hin zwischen der Laserebene 22 und dem Boden 16, gemessen. Dabei befindet sich der Laser an der Position 20_hin vor dem ersten Messpunkt R1. Anschließend wird der Laser 20 an eine andere Position gestellt. Der Laser 20 wird derart umgestellt, dass der Abstand zu dem auf der Linie ursprünglich am weitesten entfernt Messpunkt R5 nun am nächsten zum Laser 20 liegt. Der Laser befindet sich nun an der Position 20_rueck für eine Rückwärts-Messung. Bevorzugt kann der Laser 20 dabei um 180° zur lotrechten rotiert werden. Infolge der Rückwärts-Messung erfolgt eine Messung an denselben Referenzpunkten R1 bis R5. Dabei kann jede Art eines Messprinzips für eine Höhenmessung verwendet werden. Beispielsweise ist auch eine Messung mit Lineal denkbar. Anschließend kann für alle Referenzpunkte R1 bis R5 als verwendbarer Messwert der Mittelwert L1 aus dem Messergebnis L_hin aus der Hinwärts-Messung sowie aus dem Messergebnis L_rueck aus der Rückwärts-Messung definiert werden. Dieser Wert ist um den Winkelfehler β des Linienlasers 20 bereinigt, wie in Fig. 21 (g) näher dargestellt.

Bevorzugt kann für die Messung ein Linienlaser 20 eingesetzt werden, der auch zu Vermessung eine Scheinwerfereinstellplatz oder allgemeine Oberflächen gemäß der erfindungsgemäßen Vorrichtung bzw. des erfindungsgemäßen Verfahrens eingesetzt werden kann. Bevorzugt kann je eine Hinwärts-Messung sowie eine Rückwärts-Messung mittels eines geeigneten Algorithmus synchronisiert werden, beispielsweise durch Kreuzkorrelation mittels eines abgeleiteten Korrelationskerns. Dadurch können beispielsweise die Referenzpunkte R1 bis R5 exakter aufeinander abgeglichen werden.

Insbesondere kann bei dem erfindungsgemäßen Verfahren bzw. der erfindungsgemäßen Vorrichtung zur Vermessung eines Scheinwerfereinstellplatzes bzw. allgemeiner Oberflächen das eben beschriebene Verfahren zusätzlich dafür genutzt werden, um den Einbauwinkel bzw. Neigungswinkelfehler β des integrierten Linienlasers 20 mit extrem hoher Präzision zu bestimmen. Beispielsweise können je nach Linienlaser 20 ca. +/- 0,008° erreicht werden. Ein derartig ermittelter Wert kann ebenfalls zur Kompensation für zukünftige Messungen verwendet werden. Bevorzugt führt dies zu einem noch geringeren Fehler bei der Bestimmung der sogenannten Torsion, d. h. einen horizontalen Winkel senkrecht zu einer zu vermessenden Oberfläche bzw. zu einer Fahrspur, als Funktion des Abstands vom Beginn der vermessenden Oberfläche bzw. Fahrspur. Abweichend von der dargestellten Ausführung können selbstverständlich mehr oder weniger Referenzpunkte R1, R2, ... verwendet werden.

In den Figs. 21f und 21g sind zwei Diagramme dargestellt. Im oberen Diagramm ist jeweils die Höhe B in mm des Laserstrahls als Funktion der Distanz D in Metern dargestellt. Im unteren Diagramm jeweils die Querneigung Q in mm/m des Linienlasers als Funktion der Distanz D in m. Fig. 21f zeigt drei Messungen ohne Kompensation des Winkelfehlers, eine Hinwärts-Messung, eine Rückwärts-Messung sowie einen Mittelwert. In der obigen Darstellung ist erkennbar, dass jeweils die Hinwärts-Messung deutlich von der Rückwärts-Messung abweicht. Im Diagramm ist dies durch die Kreise an den Positionen 1, 2 sowie 3 deutlich gemacht.

Die Darstellung in Fig. 21g zeigt eine Messung nach Kompensation des Winkelfehlers β. Es wird deutlich, dass die Ergebnisse der Hinwärts-Messung, der Rückwärts-Messung sowie der kompensierten Messung nicht mehr unterscheidbar sind. Dies ist dadurch erkennbar, dass das Endergebnis an den Positionen 1, 2 und 3 aufeinander liegt.

In Fig. 22 ist ein lamellenartiges Füllelement 140 in einer aufgerollten Position (linke Darstellung) sowie ein einer ausgebreiteten Position (rechte Darstellung) zu sehen. In der ausgebreiteten Position ist das Füllelement 140 derart ausgebreitet, dass die Unterseite 146 sichtbar ist, an der eine Vielzahl von Lamellen 148 quer zur Ausfallrichtung angeordnet sind. Im verlinkten Zustand erfolgt eine Ausrichtung des Füllelement 140 mit der Unterseite 146 nach unten. Orientiert In der aufgerollten Position ist die glatte Oberfläche sichtbar, die im verlinkten Zustand nach oben zeigt. Die Darstellung zeigt ein Füllelement 140 mit parallel verlaufenden Lamellen, die in einem Abstand zueinander angeordnet sind. In der dargestellten Ausführungsform sind die Lamellen im Wesentlichen mit einer identischen Lamellenhöhe ausgebildet. Dies kann beispielsweise ein Füllelement 140 vor der CNC-Bearbeitung darstellen, d. h. bevor die Lamellen 148 an eine Negativform 142 eines Bodenprofils 144 angepasst werden. Es ist ebenso denkbar, dass die Nummer Lamellen eine unterschiedliche Lamellenbreite aufweisen. Die Gesamtzahl der Lamellen kann somit nach der CNC-Bearbeitung auf einer zweidimensionalen Ebene eine Negativform 142 eines Bodenprofils 144 ausbilden.

In Fig. 23 ist ein Querschnitt durch ein Bodenprofil 144 mit einer Mehrzahl von Füllelementen 140 dargestellt. Die Mehrzahl an Füllelementen 140 ist lediglich beispielhaft dargestellt, wobei übereinander angebrachte, im Querschnitt quadratische Füllelemente 140, beispielsweise in der Gesamtheit einen Querschnitt einer Lamelle darstellen können. In diesem Querschnitt ist erkennbar, dass dabei die einzelnen Lamellen eine unterschiedliche Lamellenhöhe aufweisen können, wie zuvor bezüglich Fig. 22 beschrieben.

In Fig. 24 ist ein Scheinwerfereinstellplatz 200 mit einer Prüfstrecke aus zwei einzelnen Fahrstreifen dargestellt. Auf dem in der Darstellung rechten Fahrstreifen ist ein mehrteiliges Füllelement 140 dargestellt, das aus einzelnen Teilen besteht, die benachbart zueinander angeordnet sind. Auf dem in der Darstellung linken Fahrstreifen ist ein Füllelement 140 dargestellt, dass einteilig ausgebildet ist. In beiden Varianten kann das Füllelement 140 an der Unterseite (nicht sichtbar) Lamellen 148 aufweisen.

In Fig. 25 ist eine Verwendung der Vermessungsvorrichtung und des Vermessungsverfahrens für die Nivellierung einer Aufstellfläche eines Scheinwerfereinstellgerätes mit einer flexiblen, insbesondere aufrollbare, zusammensteckbare oder klappbare Schiene 150 dargestellt. Somit wird eine Verwendung für ein Reparaturverfahren einer Querfahrbahn eines Scheinwerfereinstellgerätes eines Scheinwerfereinstellplatz 200 vorgeschlagen, das eingesetzt werden kann, falls die Oberflächenvermessung eine inakzeptable Unebenheit der Querfahrbahn ergibt. Die Schiene 150 weist einen in horizontaler Richtung flexiblen Unterbau 151 auf, welche sich an einen unebenen Untergrund anpassen kann. Bevorzugt ist dieser Unterbau 151 nicht komprimierbar, sodass beim Überfahren bzw. Entlangfahren mit dem Scheinwerfereinstellgerät keine Deformation in vertikaler Richtung erfolgt. Auf der Oberseite des Unterbaus 151 sind zwei flexible Gummileisten 153 in einem Abstand zueinander angeordnet, sodass dazwischen eine Vertiefung 152 entsteht. Diese Vertiefung 152 verläuft folglich über die komplette Länge der Schiene 150. In den Endbereichen kann die Vertiefung 152 mit zwei zusätzlichen Elementen abgegrenzt werden, um eine geschlossene Gießform auszubilden. Die Gummileisten 153 können sich an die Form des Unterbaus 151 derart anpassen, dass eine dichte Verbindung entsteht. Die Gummileisten 153 werden bevorzugt fest mit dem Unterbau 151 verbunden. In die Vertiefung 152 kann folglich eine fließfähige Masse 154 wie beispielsweise Epoxidharz 156 eingefüllt werden, welche sich von selbst durch Einfluss der Schwerkraft im viskosen Zustand horizontal ausrichtet, sodass eine horizontal ausgerichtete Fläche innerhalb der Vertiefung 152 entsteht. Alternativ können auch in die Vertiefung 152 oder direkt auf den Boden Heißklebegranulatsplitter aufgebracht werden, wobei ggf. eine langestreckte rechteckförmige Umrandung als Kunststoff- oder Metallrahmen als Gießform zuvor ausgelegt wird, die gleichzeitig als Führungsrahmen für die Rollen des Scheinwerfereinstellgerätes genutzt werden kann. Auf dieser gefüllten Vertiefung 152 kann nach Aushärten der Masse 154 beispielsweise ein Scheinwerfereinstellgerät verfahren werden. Die ausgehärtete Oberfläche der Masse 154 bildet folglich eine ebene Fläche aus. Bevorzugt werden zwei baugleiche Schienen parallel zueinander auf einer Oberfläche angeordnet, sodass ein Scheinwerfereinstellgerät mit zumindest zwei Rädern parallel auf jeweils einer Schiene 150 platziert und verfahren werden kann.

Fig. 26a zeigt eine Vermessungsvorrichtung mit einem Projektionselement 26, das aus einem flexiblen Material besteht. Das Projektionselement 26 kann in einen Rahmen 160 (mit gestrichelten Linien dargestellt) derart eingehängt werden, dass ein Kontaktabschnitt 162 mit der zu vermessenden Oberfläche in Kontakt steht. Ein Linienlaser 20 ist auf der einen Seite des Rahmens derart angeordnet und ausgerichtet, dass eine projizierte Laserlinie 166 auf dem Kontaktabschnitt 162 auftrifft. Auf der gegenüberliegenden Seite des Rahmens 160 ist eine Kamera 46 bzw. eine Videokamera 48 angeordnet, die auf den Kontaktabschnitt 162 mit der projizierte Laserlinie 166 ausgerichtet ist. Die Kamera 46 bzw. Videokamera 48 filmt dabei diese projizierte Laserlinie 166, welche die sich darunter befindenden Bodenunebenheiten 164 geglättet abbildet. Über einen Wegsensor 70 (nicht dargestellt), wie beispielsweise eine Computermaus, kann die genaue Position der Vermessungsvorrichtung bzw. die neue Position des Kontaktabschnitts 162 auf der zu vermessenden Oberfläche bestimmt werden. Wird nun die Vermessungsvorrichtung über eine zu vermessende Oberfläche gefahren, beispielsweise indem der Rahmen auf Kufen oder Räder geführt wird, kann ein vollständiges Bodenrelief erstellt werden.

Gemäß Fig. 26b kann das Projektionselement 26 bevorzugt in einer Art Dunkelkammer 30 angeordnet sein, die beispielsweise durch einen Volant gebildet wird, der über den Rahmen gespannt ist. Wie in Fig. 26b dargestellt kann unter dem Volant eine Verfahreinheit 52 angeordnet sein, welche beispielsweise aus Rollen 58 besteht. Mit einer derartigen Ausführungsform können beispielsweise größere Fußbodenflächen, wie in Lebensmittelmärkten, auf Parkplätzen oder auch Fahrbahnoberflächen im Straßen- und Wegebau auf Ebenheit vermessen werden. Dadurch können insbesondere Toleranzbereiche, wie beispielsweise im Hochbau gemäß DIN 18 202 vorgegeben, eingehalten werden. Des Weiteren können kontinuierliche Vermessungen von Fahrspuren in leitliniengeführten Schmalgängen von Hochregallager durchgeführt werden, um einen Standard gemäß DIN 15 185 Teil 1 zu erreichen.

Folglich kann mit der erfindungsgemäßen Vorrichtung sowie mit dem erfindungsgemäßen Verfahren eine möglichst kleine Prüfvorrichtung bereitgestellt werden, mit welcher beispielweise einzelne Fahrspuren eines Scheinwerferprüfstandes separat vermessen werden können. Des Weiteren kann die Vorrichtung derart ausgebildet sein beziehungsweise eine derartige Größe aufweisen, dass beide Fahrspuren parallel und gleichzeitig vermessen werden können.

Mit den unterschiedlichen Ausführungsformen der vorgeschlagenen Vermessungsvorrichtung können ebenso allgemein ebenen Oberflächen, beispielsweise im Hochbau, sowie Oberflächen von Fundamenten beispielsweise bei Windkraftanlagen, vermessen werden. Derartige ebene Oberflächen können beispielsweise Industrieböden sein, welchen insbesondere den Toleranzen im Hochbau genügen müssen, sowie allgemeine ebene Außenflächen für beispielsweise Parkplätze oder Lagerflächen. Mit der erfindungsgemäßen Vermessungsvorrichtung sowie dem erfindungsgemäßen Verfahren ist folglich eine flächige Vermessung von allgemeinen Flächen möglich.

Bevorzugt ist die Vorrichtung klein und kompakt ausgebildet, sodass diese leicht transportabel ist. Mithilfe der Reparaturvorrichtung kann ein gesamtes Konzept bereitgestellt werden, das mit einfachen Mitteln vor Ort durchführbar ist, wobei keine speziellen Werkzeuge oder sperrige Vorrichtungen notwendig sind.

### Bezugszeichenliste

- 10: Vermessungsvorrichtung
- 12: Oberflächenvermessungsvorrichtung
- 14: Neigung
- 16: Unebenheiten
- 18: Oberfläche
- 20: Linienlaser
- 22: Laserstrahl
- 24: Laserlinienebene
- 25: Stativ
- 26: Projektionselement
- 26a: erster Bereich
- 26b: zweiter Bereich
- 28: semintransparente Fläche
- 30: Dunkelkammer
- 32: Box
- 33: Deckel
- 34: ersten Aussparung
- 36: zweite Aussparung
- 38: Aussparung
- 40: Schlitz
- 42: Trennebene
- 44: Kammer
- 44a: erster Kammerbereich
- 44b: zweiter Kammerbereich
- 46: Kamera
- 47: Kamerabild
- 48: Videokamera
- 50: Smartphone
- 52: Verfahreinheit
- 54: Kufenabschnitt
- 56: Zylinderabschnitt
- 58: Rollen
- 60: Strecke
- 62: Kontakt
- 64: Pendel
- 66: Bildschirm
- 68: Display
- 70: Wegsensor
- 72: Seitenfläche
- 74: Computermaus
- 76: Blattfeder
- 78: Referenzanzeige
- 80: aufgenommene Laserlinie
- 82: Lochscheibe

- 90: Deckel
- 92: Rad
- 98: Verbindungsstange
- 100: Vermessungsverfahren
- 120: Oberflächenvermessungsverfahren

- 130: Drehteller
- 131: Reflektor
- 132: Drehachse
- 133: Flüssigkeit
- 134: Laserdiode
- 136: Drehwinkelbereich
- 137: Detektor
- 138: Motor
- 139: reflektierter Laserstrahl

- 140: Füllelement
- 142: Negativform
- 144: Bodenprofil
- 146: Unterseite
- 148: Lamelle

- 150: Schiene
- 151: Unterbau
- 152: Vertiefung
- 153: Gummileiste
- 154: Masse
- 156: Epoxidharz
- 158: Fahrfläche

- 160: Rahmen
- 162: Kontaktabschnitt
- 164: Bodenunebenheit
- 166: projizierte Laserlinie

- 200: Scheinwerfereinstellplatz

- F: Fahrtrichtung
- A1: Ausgangsposition
- α: Winkel

- A: Rotationswinkel
- B: Höhe
- D: Distanz
- Q: Querneigung
- β: Winkelfehler

## Patentansprüche

1. Vermessungsvorrichtung (10), insbesondere Oberflächenvermessungsvorrichtung (12), zur Vermessung von Neigungen (14) und/oder Unebenheiten (16) einer, bevorzugt horizontal ausgerichteten, Oberfläche (18) eines Scheinwerfereinstellplatzes (200), umfassend zumindest einem Linienlaser (20), der sich bevorzugt selbst horizontal ausrichtet, zumindest ein Projektionselement (26), auf welchem ein Laserstrahl (22) des Linienlasers (20) zumindest teilweise als Laserlinie (80) abbildbar ist, sowie zumindest eine Kamera (46), die eingerichtet ist, eine relative Lage der Laserlinie (80) auf dem Projektionselement (26) aufzunehmen, wobei das Projektionselement (26) und die Kamera (46) in einer Verfahreinheit (52) umfasst sind, die entlang einer zu vermessenden Strecke (60) eines Scheinwerfereinstellplatzes (200) verfahrbar und / oder verschiebbar ist.

2. Vermessungsvorrichtung (10) nach Anspruch 1, **dadurch gekennzeichnet, dass** das zumindest eine Projektionselement (26) zwischen dem zumindest einen Linienlaser (20) und der zumindest einen Kamera (46) angeordnet ist, so dass die Kamera (46) eine Transmission der Laserlinie (80) durch die Projektionsfläche (26) erfasst, wobei bevorzugt das Projektionselement (26) eine semintransparente Fläche (28), insbesondere eine semitransparente Scheibe oder ein semitransparentes Blatt ist, das vorzugsweise rechtwinklig zu einer Laserlinienebene (24) ausgerichtet ist, und/oder dass der zumindest eine Linienlaser (20) und die zumindest eine Kamera (46) auf einer Seite des Projektionselements (26) angeordnet sind, so dass die Kamera (46) eine Reflexion der Laserlinie (80) auf der Projektionsfläche (26) erfasst, wobei bevorzugt das Projektionselement (26) eine zumindest teilreflektierende Fläche (28) ist.

3. Vermessungsvorrichtung (10) nach Anspruch 1 oder 2, **dadurch gekennzeichnet, dass** eine Auswertungseinrichtung umfasst ist, oder eine Schnittstelle zur Übermittlung vom Kameradaten umfasst ist, so dass die Auswertungseinrichtung oder eine entfernte Auswerteeinrichtung beruhend auf einer von der Kamera (46) aufgenommenen relativen Lage der Laserlinie (80) auf dem Projektionselement (26) eine Neigung und/oder Unebenheit entlang der Oberfläche (18) des Scheinwerfereinstellplatzes (200) ermitteln kann, wobei bevorzugt die Auswerteeinrichtung eine akustische und/oder optische Ausgabeeinheit zur Ausgabe einer aktuell zurückgelegten Strecke (60) und/oder weiterer Statusangaben an einen Bediener umfasst.

4. Vermessungsvorrichtung (10) nach einem der vorhergehenden Ansprüche, **dadurch gekennzeichnet, dass** die Verfahreinheit (52) zumindest zwei Kufenabschnitte (54) oder Zylinderabschnitte (56) aufweist, mit welchen die Verfahreinheit (52) punktuell oder durch linienförmigen Kontakt (62) entlang der Strecke (60) verfahrbar ist, oder dass die Verfahreinheit (52) zumindest zwei Rollen (58) aufweist, durch welche die Verfahreinheit (52) entlang der Strecke (60) verfahrbar ist, wobei bevorzugt der Abstand der Kufen (54), Zylinderabschnitte (56) oder der Rollen (58) einstellbar ist.

5. Vermessungsvorrichtung (10) nach einem der vorgenannten Ansprüche, **dadurch gekennzeichnet, dass** das Projektionselement (26) und die Kamera (46) miteinander verbunden und nach Art eines freischwingenden Pendels (64) zwischen den Kufenabschnitten (54) oder Zylinderabschnitten (56) oder Rollen (58) aufgehängt sind.

6. Vermessungsvorrichtung (10) nach einem der vorgenannten Ansprüche, **dadurch gekennzeichnet, dass** der Linienlaser (20) außerhalb der Verfahreinheit (52) angeordnet ist und eine im Wesentlichen horizontal zur Schwerkraftsnormalen der Oberfläche (18) ausgerichtete Laserebene aufspannt, wobei die Verfahreinheit (52) relativ zum Linienlaser (20) bewegbar ist, und / oder der Linienlaser (20) innerhalb der Verfahreinheit (52) angeordnet ist und das Projektionselement (26) aus einem biegeschlaffen, flexiblen Material besteht, das vorzugsweise in einem horizontal über der Oberfläche (18) ausgerichteten Rahmen (16) eingespannt ist, wobei einem Kontaktabschnitt (162) auf der Oberfläche (18) aufliegt, wobei der Linienlaser (20) und die Kamera (46) auf den Kontaktabschnitt (162) ausgerichtet sind.

7. Vermessungsvorrichtung (10) nach einem der vorgenannten Ansprüche, **dadurch gekennzeichnet, dass** das Projektionselement (26) in einer Art Dunkelkammer (30) angeordnet ist, welche zumindest an einer Seitenfläche (72) eine erste Aussparung (34), bevorzugt einen Schlitz (40), aufweist, die/der bevorzugt auf Höhe des Laserstrahls (22) angeordnet ist.

8. Vermessungsvorrichtung (10) nach Anspruch 7, **dadurch gekennzeichnet, dass** die Dunkelkammer (30) auf einer der ersten Aussparung (34) gegenüberliegenden Seitenfläche (72) eine zweite Aussparung (36) aufweist, auf deren Höhe die Kamera (46) angeordnet ist.

9. Vermessungsvorrichtung (10) nach Anspruch 7 oder 8, **dadurch gekennzeichnet, dass** die Dunkelkammer (30) eine Trennebene (42) aufweist, in der das Projektionselement (26) angeordnet ist, und die die Dunkelkammer (30) in einen ersten und einen zweiten Kammerbereich (44a, 44b) trennt.

10. Vermessungsvorrichtung (10) nach Anspruch 9, **dadurch gekennzeichnet, dass** das Projektionselement (26) zumindest abschnittsweise in einer Verfahrrichtung (F) entlang der zu vermessenden Strecke (60) versetzt oder abgewinkelt verläuft, um eine variierende Neigung (a) der Verfahreinheit (52) zur Oberfläche zu erfassen.

11. Vermessungsvorrichtung (10) nach einem der vorhergehenden Ansprüche, **dadurch gekennzeichnet, dass** im Wesentlichen in der Ebene des Projektionselements (26) ein Bildschirm (66) oder Display (68) angeordnet ist, der/das in einem Blickwinkel der Kamera (46) liegt.

12. Vermessungsvorrichtung (10) nach einem der vorhergehenden Ansprüche, **dadurch gekennzeichnet, dass** die Kamera (46) eine Videokamera (48) ist, die zur Aufnahme einer Videosequenz einer Lage und Ausrichtung des Laserstrahls auf dem Projektionselement (26) in einem Verlauf einer Verfahrrichtung (F) entlang der zu vermessenden Strecke (60) eingerichtet ist, insbesondere ein mobiles Endgerät wie Smartphone (50) oder Tablet ist.

13. Vermessungsvorrichtung (10) nach einem der vorhergehenden Ansprüche, **dadurch gekennzeichnet, dass** ein Wegsensor (70), insbesondere ein berührungsloser Wegsensor, in der Verfahreinheit (52) umfasst ist, der eine Weglänge oder Wegposition der zurückgelegten Strecke (60) bestimmen kann, wobei bevorzugt die Weglänge und/oder die Wegposition in einem Bildschirm (66) oder Display (68) dargestellt wird, und insbesondere der Wegsensor (70) nach Art einer optischen Computermaus (74) ausgebildet ist.

14. Vermessungsverfahren (100), insbesondere Oberflächenvermessungsverfahren (120), zur Vermessung von Neigungen (14) und/oder Unebenheiten (16) einer, bevorzugt horizontal ausgerichteten, Oberfläche (18) eines Scheinwerfereinstellplatzes (200) mittels einer Vermessungsvorrichtung (10) nach einem der vorgenannten Ansprüche, wobei eine Vermessungsvorrichtung (10) entlang einer Strecke (60) verfahren und / oder verschoben wird, wobei
- der Linienlaser (20) in einer Ausgangsposition (A1) verbleibt;
- die Verfahreinheit (52) derart von dem Linienlaser (20) weg bzw. zu dem Linienlaser (20) hin verschoben und/oder verfahren wird, dass der Laserstrahl (22) über die komplette Strecke (60) zumindest teilweise auf dem Projektionselement (26) auftrifft;
- und die Kamera (46) über die komplette Strecke (60) auf den Laserstrahl (22) auf dem Projektionselement (26) ausgerichtet ist und Bilder oder eine Videosequenz einer relativen Lage des Laserstrahls (22) auf dem Projektionselement (26) aufnimmt;
- wonach eine Auswertung einer relativen Lageänderung des Laserstrahls (22) auf dem Projektionselement (26) zur Bestimmung der Neigung oder Unebenheit der Oberfläche (18) herangezogen wird.

15. Vermessungsverfahren (100) nach Anspruch 14, **dadurch gekennzeichnet, dass** ein Wegsensor (70) eine Weglänge oder Wegposition der Strecke (60) aufnimmt, und der Verlauf der Weglänge oder Wegposition synchron zu den Bildern oder der Videosequenz der relativen Lage des Laserstrahls (22) auf dem Projektionselement (26) zur Bestimmung der Neigung (14) oder Unebenheit (16) der Oberfläche (18) der Strecke (60) herangezogen wird.

16. Vermessungsverfahren (100) nach Anspruch 14 oder 15, **dadurch gekennzeichnet, dass** das Bild oder die Videosequenz der relativen Lage des Laserstrahls (22) auf dem Projektionselement (26) in zwei oder mehreren getrennten Bereichen (26a, 26b) erfasst, und zur Bestimmung der Neigung (14) oder Unebenheit (16) der Oberfläche (18) die relative Lageänderung in jedem Bereich (26a, 26b) gesondert ermittelt wird.

17. Verwendung einer Vermessungsvorrichtung (10) und eines Vermessungsverfahrens (100) nach einem der vorgenannten Ansprüche zur Vermessung von Oberflächenneigungen und zur Unebenheitenbestimmung eines Scheinwerfereinstellplatzes.

18. Verwendung einer Vermessungsvorrichtung (10) und eines Vermessungsverfahrens (100) nach Anspruch 17 für ein Reparaturverfahren für einen Scheinwerfereinstellplatz (200), wobei der Scheinwerfereinstellplatz (200) mit einer Vermessungsvorrichtung (10) oder einem Vermessungsverfahren (100) nach einem der vorgenannten Ansprüche vermessen wird, **dadurch gekennzeichnet, dass**:
- aus Messdaten der Vermessungsvorrichtung (10) bezüglich der Neigungen (14) und/oder Unebenheiten (16) der Oberfläche (18) der Strecke (60) oder eines Verfahrwegs eines Scheinwerfereinstellgeräts in Abhängigkeit der jeweiligen Wegposition der Strecke (60) ein Bodenprofil (144) erzeugt wird,
- wobei zumindest ein Füllelement (140) entsprechend einer Negativform (142) des Bodenprofils (144) erzeugt, beispielsweise gefräst, geschnitten, gelasert oder gegossen wird,
- wobei anschließend das Füllelement (140) auf die gemessene Strecke (60) des Scheinwerfereinstellplatzes (200) aufgelegt, insbesondere fixiert, wird.

19. Verwendung einer Vermessungsvorrichtung (10) und eines Vermessungsverfahrens (100) für ein Reparaturverfahren nach Anspruch 18, **dadurch gekennzeichnet, dass** das Füllelement (140) mehrteilig ausgebildet ist, oder aus einem aufrollbaren Material besteht, welches auf einer Unterseite (146) lamellenartig ausgebildet ist, wobei die Lamellen (148) eine entsprechend der Negativform (142) des Bodenprofils (144) ermittelte Höhe aufweisen.

20. Verwendung einer Vermessungsvorrichtung (10) und eines Vermessungsverfahrens (100) nach Anspruch 17 für ein Reparaturverfahren für einen Scheinwerfereinstellplatz (200), wobei der Scheinwerfereinstellplatz (200) mit einer Vermessungsvorrichtung (10) oder einem Vermessungsverfahren (100) nach einem der vorgenannten vermessen wird, **dadurch gekennzeichnet, dass** zur Nivellierung einer Verfahrstrecke eines Scheinwerfereinstellgeräts zumindest zwei flexible Schienen (150) auf den Scheinwerfereinstellplatz (200) aufgeklebt werden, wobei die Schienen (150) entlang ihrer Länge jeweils eine Vertiefung (152) aufweisen, die anschließend mit einer aushärtenden Masse (154), insbesondere mit Epoxidharz (156), ausgegossen wird, sodass eine ebene Fahrfläche (158) für das Scheinwerfereinstellgerät bereitgestellt wird, wobei die Schienen (150) im Wesentlichen rückstandslos wieder entfernt werden können, oder eine Umrandungsform auf den Scheinwerfereinstellplatz (200) aufgebracht und mit einer schmelzfähigen Substanz aufgefüllt und hiernach flächig zur Ausbildung einer nivellierten Verfahrstrecke des Scheinwerfereinstellgeräts aufgeschmolzen wird.

## Claims

1. Surveying device (10), in particular a surface surveying device (12), for surveying inclinations (14) and/or unevennesses (16) of a preferably horizontally aligned surface (18) of a headlight setting area (200), comprising at least one line laser (20) which preferably self-aligns horizontally, at least one projection element (26) on which a laser beam (22) of the line laser (20) is at least partially imageable as a laser line (80), and at least one camera (46) which is configured to record a relative position of the laser line (80) on the projection element (26), wherein the projection element (26) and the camera (46) are comprised in a mobile unit (52) which is moveable and / or displaceable along a distance (60) to be surveyed of a headlight setting area (200).

2. Surveying device (10) according to claim 1, **characterized in that** the at least one projection element (26) is arranged between the at least one line laser (20) and the at least one camera (46), such that the camera (46) records a transmission of the laser line (80) through the projection surface (26), the projection element (26) preferably being a semi-transparent surface (28), in particular a semi-transparent pane or semi-transparent sheet which is preferably aligned at right angles to a laser line plane (24), and/or that the at least one line laser (20) and the at least one camera (46) are arranged on one side of the projection element (26) such that the camera (46) records a reflection of the laser line (80) on the projection surface (26), the projection element (26) preferably being an at least partially reflecting surface (28).

3. Surveying device (10) according to claim 1 or 2, **characterized in that** an evaluation device is comprised, or an interface for transmitting camera data is comprised, such that the evaluation device or a remote evaluation device can determine, based on a relative position of the laser line (80) on the projection element (26) recorded by the camera (46), an inclination and/or unevenness along the surface (18) of the headlight setting area (200), the evaluation device preferably comprising an acoustic and/or optical output unit to output a currently covered distance (60) and/or further status information to an operator.

4. Surveying device (10) according to any of the preceding claims, **characterized in that** the mobile unit (52) has at least two runner sections (54) or cylinder sections (56) with which the mobile unit (52) is moveable in point contact or by linear contact (62) along the distance (60), or that the mobile unit (52) has at least two rollers (58) by which the mobile unit (52) is moveable along the distance (60), the spacing of the runners (54), cylinder sections (56) or rollers (58) preferably being settable.

5. Surveying device (10) according to any of the aforementioned claims, **characterized in that** the projection element (26) and the camera (46) are connected to one another and suspended in the manner of a freely swinging pendulum (64) between the runner sections (54) or cylinder sections (56) or rollers (58).

6. Surveying device (10) according to any of the aforementioned claims, **characterized in that** the line laser (20) is arranged outside the mobile unit (52) and creates a laser plane aligned substantially horizontal to the gravity normal of the surface (18), the mobile unit (52) being movable relative to the line laser (20), and / or the line laser (20) being arranged inside the mobile unit (52), and the projection element (26) consisting of a limp and flexible material which is preferably clamped in a frame (160) aligned horizontally above the surface (18) and resting with a contact section (162) on the surface (18), the line laser (20) and the camera (46) being aligned with the contact section (162).

7. Surveying device (10) according to any of the aforementioned claims, **characterized in that** the projection element (26) is arranged in a kind of darkroom (30) which has on at least one lateral surface (72) a first cutout (34), preferably a slot (40), which is preferably arranged at the level of the laser beam (22).

8. Surveying device (10) according to claim 7, **characterized in that** the darkroom (30) has on a lateral surface (72) opposite the first cutout (34) a second one (36), at the level of which the camera (46) is arranged.

9. Surveying device (10) according to claim 7 or 8, **characterized in that** the darkroom (30) has a separating plane (42) in which the projection element (26) is arranged and which separates the darkroom (30) into a first and a second darkroom area (44a, 44b).

10. Surveying device (10) according to claim 9, **characterized in that** the projection element (26) extends at least in some sections offset or angled in a movement direction (F) along the distance (60) to be surveyed, in order to record a varying inclination (α) of the mobile unit (52) relative to the surface.

11. Surveying device (10) according to any of the preceding claims, **characterized in that** a screen (66) or display (68) inside a viewing angle of the camera (46) is arranged substantially in the plane of the projection element (26).

12. Surveying device (10) according to any of the preceding claims, **characterized in that** the camera (46) is a video camera (48) which is configured to record a video sequence of a position and alignment of the laser beam on the projection element (26) during movement in a movement direction (F) along the distance (60) to be surveyed, in particular a mobile device such as a smartphone (50) or tablet.

13. Surveying device (10) according to any of the preceding claims, **characterized in that** a travel sensor (70), in particular a contactless travel sensor, is comprised in the mobile unit (52) and can determine a travel length or travel position of the distance (60) covered, the travel length and/or the travel position preferably being displayed on a screen (66) or display (68), and in particular the travel sensor (70) is designed in the manner of an optical computer mouse (74).

14. Surveying method (100), in particular a surface surveying method (120), for surveying inclinations (14) and/or unevennesses (16) of a preferably horizontally aligned surface (18) of a headlight setting area (200) by means of a surveying device (10) according to any of the aforementioned claims, wherein a surveying device (10) is moved and / or displaced along a distance (60), wherein
- the line laser (20) remains in an initial position (A1);
- the mobile unit (52) is displaced and/or moved away from the line laser (20) / towards the line laser (20) such that the laser beam (22) impinges on the projection element (26) at least partially over the complete distance (60);
- and the camera (46) is aligned over the complete distance (60) with the laser beam (22) on the projection element (26) and records images or a video sequence of a relative position of the laser beam (22) on the projection element (26);
- after which an evaluation of a relative position change of the laser beam (22) on the projection element (26) is used to determine the inclination or unevenness of the surface (18).

15. Surveying method (100) according to claim 14, **characterized in that** a travel sensor (70) records a travel length or travel position of the distance (60) , and the course of the travel length or travel position synchronous to the images or to the video sequence of the relative position of the laser beam (22) on the projection element (26) is used to determine the inclination (14) or unevenness (16) of the surface (18) of the distance (60).

16. Surveying method (100) according to claim 14 or 15, **characterized in that** the image or the video sequence of the relative position of the laser beam (22) on the projection element (26) is recorded in two or more separate areas (26a, 26b), and the relative position change in each area (26a, 26b) is separately determined in order to determine the inclination (14) or unevenness (16) of the surface (18).

17. Use of a surveying device (10) and of a surveying method (100) according to any of the aforementioned claims for surveying of surface inclinations and for determining unevennesses of a headlight setting area.

18. Use of a surveying device (10) and of a surveying method (100) according to claim 17 for a repair method for a headlight setting area (200), the headlight setting area (200) being surveyed with a surveying device (10) or with a surveying method (100) according to any of the aforementioned claims, **characterized in that**:
- a ground profile (144) is generated from measurement data of the surveying device (10) relating to inclinations (14) and/or unevennesses (16) of the surface (18) of the distance (60) or of a movement path of a headlight setting device as a function of the respective travel position of the distance (60),
- at least one filler element (140) being created, for example milled, cut, lasered or cast, to match a negative form (142) of the ground profile (144),
- the filler element (140) then being laid, in particular fixed, onto the measured distance (60) of the headlight setting area (200).

19. Use of a surveying device (10) and of a surveying method (100) for a repair method according to claim 18, **characterized in that** the filler element (140) is designed multipart or consists of a rollable material which is designed slat-like on an underside (146), the slats (148) having a height determined to match the negative form (142) of the ground profile (144).

20. Use of a surveying device (10) and of a surveying method (100) according to claim 17 for a repair method for a headlight setting area (200), the headlight setting area (200) being surveyed with a surveying device (10) or with a surveying method (100) according to any of the aforementioned claims, **characterized in that** for levelling a movement distance of a headlight setting device at least two flexible rails (150) are affixed to the headlight setting area (200), the rails (150) each having along their length a recess (152) which is then filled with a setting compound (154), in particular with epoxy resin (156), such that a flat movement surface (158) for the headlight setting device is provided, the rails (150) being able to be removed substantially without residues, or an edge mould is attached to the headlight setting area (200) and filled with a meltable substance and then melted on over the full surface in order to provide a levelled movement distance for the headlight setting device.

## Revendications

1. Dispositif de mesure (10), en particulier dispositif de mesure de surfaces (12), pour mesurer des inclinaisons (14) et/ou des irrégularités (16) d'une surface (18), de préférence orientée horizontalement, d'un emplacement de réglage de phare (200), comprenant au moins un laser lignes (20), qui s'oriente de préférence lui-même horizontalement, au moins un élément de projection (26), sur lequel un faisceau laser (22) du laser lignes (20) peut être reproduit au moins partiellement sous forme de ligne laser (80), ainsi qu'au moins une caméra (46) qui est configurée pour enregistrer une position relative de la ligne laser (80) sur l'élément de projection (26), sachant que l'élément de projection (26) et la caméra (46) sont compris dans une unité de déplacement (52) qui peut être déplacée et/ou coulissée le long d'un trajet (60) à mesurer d'un emplacement de réglage de phare (200).

2. Dispositif de mesure (10) selon la revendication 1, **caractérisé en ce qu' au** moins un élément de projection (26) est disposé entre au moins un laser lignes (20) et au moins une caméra (46), de sorte que la caméra (46) détecte une transmission de la ligne laser (80) à travers la surface de projection (26), sachant que l'élément de projection (26) est de préférence une surface semi-transparente (28), en particulier un disque semi-transparent ou une feuille semi-transparente, laquelle est orientée de préférence perpendiculairement par rapport à un plan de ligne laser (24), et/ou qu'au moins un laser lignes (20) et au moins une caméra (46) sont disposés sur un côté de l'élément de projection (26), de sorte que la caméra (46) détecte une réflexion de la ligne laser (80) sur la surface de projection (26), sachant que l'élément de projection (26) est de préférence une surface au moins partiellement réfléchissante (28).

3. Dispositif de mesure (10) selon la revendication 1 ou 2, **caractérisé en ce que** ce dernier comprend un dispositif d'évaluation ou une interface pour la transmission des données de la caméra, de sorte que le dispositif d'évaluation, ou un dispositif d'évaluation éloigné reposant sur une position relative de la ligne laser (80) enregistrée par la caméra (46) sur l'élément de projection (26), peut déterminer une inclinaison et/ou une irrégularité le long de la surface (18) de l'emplacement de réglage de phare (200), sachant que le dispositif d'évaluation comprend de préférence une unité de sortie acoustique et/ou optique pour la sortie d'une distance actuellement parcourue (60) et/ou d'autres informations sur le statut à un opérateur.

4. Dispositif de mesure (10) selon l'une des revendications précédentes, **caractérisé en ce que** l'unité de déplacement (52) présente au moins deux sections de patin (54) ou sections de cylindre (56) avec lesquelles l'unité de déplacement (52) peut être déplacée le long du trajet (60) de manière ponctuelle ou par contact linéaire (62), ou que l'unité de déplacement (52) présente au moins deux rouleaux (58), par le biais desquels l'unité de déplacement (52) peut être déplacée le long du trajet (60), sachant que l'écartement des patins (54), des sections de cylindre (56) ou des rouleaux (58) est de préférence réglable.

5. Dispositif de mesure (10) selon l'une des revendications précitées, **caractérisé en ce que** l'élément de projection (26) et la caméra (46) sont reliés entre eux et suspendus à la manière d'un pendule (64) oscillant librement entre les sections de patin (54) ou les sections de cylindre (56) ou les rouleaux (58).

6. Dispositif de mesure (10) selon l'une des revendications précitées, **caractérisé en ce que** le laser lignes (20) est disposé à l'extérieur de l'unité de déplacement (52) et couvre un plan laser orienté essentiellement horizontalement par rapport aux normales de gravitation de la surface (18), sachant que l'unité de déplacement (52) est mobile par rapport au laser lignes (20), et/ou que le laser lignes (20) est disposé à l'intérieur de l'unité de déplacement (52) et que l'élément de projection (26) est constitué d'un matériau flexible et souple à la flexion, lequel est de préférence tendu dans un cadre (16) orienté horizontalement au-dessus de la surface (18), sachant qu'une section de contact (162) repose sur la surface (18), sachant que le laser lignes (20) et la caméra (46) sont alignés sur la section de contact (162).

7. Dispositif de mesure (10) selon l'une des revendications précitées, **caractérisé en ce que** l'élément de projection (26) est disposé dans une sorte de chambre noire (30) laquelle présente, au moins sur une face latérale (72), un premier évidement (34), de préférence une fente (40), qui est disposé de préférence au niveau du faisceau laser (22).

8. Dispositif de mesure (10) selon la revendication 7, **caractérisé en ce que** la chambre noire (30) présente sur une face latérale (72), opposée au premier évidement (34), un second évidement au niveau duquel est disposée la caméra (46).

9. Dispositif de mesure (10) selon la revendication 7 ou 8, **caractérisé en ce que** la chambre noire (30) présente un plan de séparation (42) dans lequel l'élément de projection (26) est disposé et qui sépare la chambre noire (30) en une première et une deuxième zones de chambre (44a, 44b).

10. Dispositif de mesure (10) selon la revendication 9, **caractérisé en ce que** l'élément de projection (26) est décalé ou incliné au moins par sections dans un sens de déplacement (F) le long du trajet (60) à mesurer, afin de détecter une inclinaison variable (a) de l'unité de déplacement (52) par rapport à la surface.

11. Dispositif de mesure (10) selon l'une des revendications précédentes, **caractérisé en ce qu**'un écran (66) ou un affichage (68), situé dans un angle de vision de la caméra (46), est disposé essentiellement dans le plan de l'élément de projection (26).

12. Dispositif de mesure (10) selon l'une des revendications précédentes, **caractérisé en ce que** la caméra (46) est une caméra vidéo (48) qui est agencée pour enregistrer une séquence vidéo d'une position et d'une orientation du faisceau laser sur l'élément de projection (26) au cours du mouvement dans un sens de déplacement (F) le long du trajet à mesurer (60) et qui est en particulier un appareil terminal mobile tel un smartphone (50) ou une tablette.

13. Dispositif de mesure (10) selon l'une des revendications précédentes, **caractérisé en ce qu'un** capteur de déplacement (70), en particulier un capteur de déplacement sans contact, est compris dans l'unité de déplacement (52), lequel peut déterminer une longueur de déplacement ou une position de déplacement de la distance parcourue (60), sachant que la longueur de déplacement et/ou la position de déplacement est représentée de préférence sur un écran (66) ou un affichage (68), et en particulier que le capteur de déplacement (70) est conçu à la manière d'une souris d'ordinateur optique (74).

14. Procédé de mesure (100), en particulier un procédé de mesure de surfaces (120), pour mesurer les inclinaisons (14) et/ou les irrégularités (16) d'une surface (18) - de préférence orientée horizontalement - d'un emplacement de réglage de phare (200) au moyen d'un dispositif de mesure (10) selon l'une des revendications précitées, sachant qu'un dispositif de mesure (10) est déplacé et/ou coulissé le long d'un trajet (60), sachant que
- le laser lignes (20) reste dans une position initiale (A1) ;
- l'unité de déplacement (52) est coulissée et/ou déplacée du laser lignes (20) ou vers le laser lignes (20), de sorte que le faisceau laser (22) atteint au moins partiellement l'élément de projection (26) sur l'ensemble du trajet (60) ;
- et que, sur l'ensemble du trajet (60), la caméra (46) est orientée sur le faisceau laser (22) sur l'élément de projection (26) et enregistre des images ou une séquence vidéo d'une position relative du faisceau laser (22) sur l'élément de projection (26) ;
- à la suite de quoi une évaluation d'un changement de position relative du faisceau laser (22) sur l'élément de projection (26) est établie pour déterminer l'inclinaison ou l'irrégularité de la surface (18).

15. Procédé de mesure (100) selon la revendication 14, **caractérisé en ce qu**'un capteur de déplacement (70) enregistre une longueur de déplacement ou une position de déplacement du trajet (60) et le parcours de la longueur de déplacement ou de la position de déplacement est établi en synchronisme avec les images ou la séquence vidéo de la position relative du faisceau laser (22) sur l'élément de projection (26) pour déterminer l'inclinaison (14) ou l'irrégularité (16) de la surface (18) du trajet (60).

16. Procédé de mesure (100) selon la revendication 14 ou 15, **caractérisé en ce que** l'image ou la séquence vidéo de la position relative du faisceau laser (22) sur l'élément de projection (26) est saisie dans deux ou plusieurs zones séparées (26a, 26b), et **en ce que**, pour déterminer l'inclinaison (14) ou l'irrégularité (16) de la surface (18), le changement de position relative dans chaque zone (26a, 26b) est déterminé séparément.

17. Utilisation d'un dispositif de mesure (10) et d'un procédé de mesure (100) selon l'une des revendications précitées pour la mesure des inclinaisons de surface et la détermination des irrégularités d'un emplacement de réglage de phare.

18. Utilisation d'un dispositif de mesure (10) et d'un procédé de mesure (100) selon la revendication 17 pour un procédé de réparation d'un emplacement de réglage de phare (200), sachant que l'emplacement de réglage de phare (200) est mesuré avec un dispositif de mesure (10) ou un procédé de mesure (100) selon l'une des revendications précitées, **caractérisé en ce :**
- **qu'**un profil de sol (144) est généré à partir des données de mesure du dispositif de mesure (10) concernant les inclinaisons (14) et/ou les irrégularités (16) de la surface (18) du trajet (60) ou d'un trajet de déplacement d'un dispositif de réglage de phare en fonction de la position de déplacement respective du trajet (60),
- sachant qu'au moins un élément de remplissage (140) correspondant à une forme négative (142) du profil de sol (144) est généré, à titre d'exemple fraisé, découpé, découpé au laser ou moulé,
- sachant que l'élément de remplissage (140) est ensuite posé, en particulier placé, sur le trajet mesuré (60) de l'emplacement de réglage de phare (200).

19. Utilisation d'un dispositif de mesure (10) et d'un procédé de mesure (100) pour un procédé de réparation selon la revendication 18, **caractérisée en ce que** l'élément de remplissage (140) est conçu en plusieurs parties ou est constitué d'un matériau enroulable qui est conçu en forme de lamelles sur une face inférieure (146), sachant que les lamelles (148) présentent une hauteur déterminée en fonction de la forme négative (142) du profil de sol (144).

20. Utilisation d'un dispositif de mesure (10) et d'un procédé de mesure (100) selon la revendication 17 pour un procédé de réparation d'un emplacement de réglage de phare (200), sachant que l'emplacement de réglage de phare (200) est mesuré avec un dispositif de mesure (10) ou un procédé de mesure (100) selon l'une des revendications précitées, **caractérisé en ce que,** pour le nivelage d'un trajet de déplacement d'un dispositif de réglage des phares, au moins deux rails flexibles (150) sont collés sur l'emplacement de réglage de phare (200), sachant que les rails (150) présentent chacun un renfoncement (152) sur leur longueur, qui est ensuite coulé avec une masse durcissante (154), en particulier avec de la résine époxy (156), de sorte qu'une surface de déplacement plane (158) est mise à disposition pour le dispositif de réglage des phares, sachant que les rails (150) peuvent être à nouveau retirés essentiellement sans résidus, ou qu'un moule de bordure est appliqué sur l'emplacement de réglage de phare (200), est rempli d'une substance fusible et est ensuite fondu à plat pour former un trajet de déplacement nivelé du dispositif de réglage des phares.
